# EUROPEAN PATENT APPLICATION

(11) **EP 4 184 854 A1**
(43) Date of publication of application: **24.05.2023**
(21) Application number: 20946596.2
(22) Date of filing: 30.07.2020
(51) Int. Cl.: H04L 9/00

(54) **ASSOCIATION CONTROL METHOD AND RELATED APPARATUS**

(71) Applicant: Huawei Technologies Co., Ltd., Shenzhen, Guangdong 518129 (CN)
(72) Inventor: WANG, Yong, Shenzhen, Guangdong 518129 (CN); CHEN, Jing, Shenzhen, Guangdong 518129 (CN)
(74) Representative: Thun, Clemens
(86) International application number: PCT/CN2020/106006
(87) International publication number: WO 2022/021256

(57) **Abstract**

An association method and apparatus are provided, and are applied to short-range communication. The method includes: determining that an identity of a second node is trusted (S303); sending a first authentication request to the second node (S304), where the first authentication request includes first identity authentication information generated based on a shared key; receiving a first authentication response from the second node, where the first authentication response includes second identity authentication information; performing verification on the second identity authentication information based on the shared key (S307); and updating a first authentication failure counter if the verification fails (S308). This can prevent a node from establishing an association with an unauthorized attacker, and protect data security of the node.

## Description

### TECHNICAL FIELD

The present invention relates to the field of communications technologies, and in particular, to the field of short-range communications technologies, for example, cockpit domain communication. Specifically, an association control method for communication security management and a related apparatus are provided.

### BACKGROUND

With the rapid development of informatization, mobile terminals, regardless of mobile phones, tablets, or other portable intelligent terminals, are important personal intelligent tools that are indispensable. While enjoying the convenience brought by informatization, people also face threats of security vulnerabilities and privacy leakage. An intelligent vehicle is used as an example. As vehicle communication is widely applied, vehicle communication also brings a series of security risks for the vehicle. For example, in an existing short-range communications technology (such as wireless fidelity Wi-Fi and Bluetooth), a hacker may intrude an in-vehicle information system to obtain vehicle information or even remotely operate the vehicle. This poses a very big threat to user privacy and vehicle security. Millions of vehicles worldwide are affected. For another example, a denial of service (Denial of Service, DoS) is most common and easily received attack behavior in a vehicle communication process. An attacker of the denial of service deliberately attacks a defect in network protocol implementation or directly uses aggressive means to brutally exhaust resources of an attacked object (for example, a control center in the vehicle), so that the attacked object cannot provide a normal service, stops responding, or even breaks down. An authentication flood (Auth Flood) attack is a type of DoS attack. The attacker sends a large number of request frames to an associated node. When the node receives the large number of request frames, and a processing capability that the node can bear is exceeded, the node breaks down and cannot continue providing a normal service, which affects communication between another node and the node. Therefore, to ensure security of communication, association control of nodes is very important.

In the conventional technology, a node that requests association may be limited by using a whitelist or blacklist technology. Specifically, if an identifier of a node A is in a whitelist of a node B, the node B receives an association request from the node A, and then performs association. Correspondingly, if an identifier of a node C is in a blacklist of the node B, the node B may not receive an association request from the node C, or refuse to perform association. Specifically, for example, in a Bluetooth communication process, a Bluetooth device establishes a whitelist, so that the Bluetooth device can establish an association with a specific Bluetooth device (namely a Bluetooth device listed in a whitelist). However, a whitelist or a blacklist usually performs filtering by using an identifier (for example, a device address). An attacker may change an identifier of the attacker to a trusted identifier, so that the node cannot identify an unauthorized attacker. As a result, the node may establish an association with the attacker, threatening data security of the node.

Therefore, how to prevent a node from establishing an association with an unauthorized attacker is a hot problem being studied by a person skilled in the art.

### SUMMARY

Embodiments of this application disclose an association control method and a related apparatus, to prevent a node from establishing an association with an unauthorized attacker, and protect data security of the node.

According to a first aspect, an embodiment of this application provides an association control method. The method includes:
receiving a first association request from a second node;
determining that an identity of the second node is trusted, and sending a first authentication request to the second node, where the first authentication request includes first identity authentication information, the first identity authentication information is generated based on a shared key between a first node and the second node, and the shared key may be considered as a first secret value shared between the first node and the second node;
receiving a first authentication response from the second node, where the first authentication response includes second identity authentication information;
performing verification on the second identity authentication information based on the shared key; and
updating a first authentication failure counter if the verification on the second identity authentication information fails, where the first authentication failure counter indicates a quantity of verification failures for the second node.

In this embodiment of this application, after it is determined that the identity of the second node is trusted, the identity of the second node further needs to be verified based on the shared key between the first node and the second node. In this way, even if an attacker bypasses a step of "determining that an identity is trusted" by modifying an identifier, because it is difficult to forge identity authentication information, identity authentication performed by the first node on the attacker still cannot succeed. Therefore, the node is prevented from establishing an association with an unauthorized attacker, and data security of the node is improved.

Further, if the verification fails, the quantity of verification failures is updated. The quantity of verification failures may be used to subsequently determine whether the identity of the second node is trusted, so that a node that fails to be verified a plurality of times may no longer be determined as trusted. For the node that is not determined as trusted, an association request of the node may no longer be processed (for example, sending an authentication request), to prevent the node from breaking down due to processing of a large number of requests and ensure normal running of a service provided by the node.

In a possible implementation of the first aspect, the determining that an identity of the second node is trusted includes:
determining that an identifier of the second node is in a first whitelist; or
determining that an identifier of the second node is not in a first blacklist; or
obtaining first acknowledgment indication information, where the first acknowledgment indication information indicates that the identity of the second node is trusted; and an identifier of the second node is not in a first blacklist; or
obtaining first acknowledgment indication information, where the first acknowledgment indication information indicates that the identity of the second node is trusted; and an identifier of the second node is neither in a first blacklist nor in a first whitelist.

In the foregoing method, a node that requests association may be controlled based on a blacklist or a whitelist, so that identity authentication does not need to be performed on an untrusted second node. This can prevent breaking down due to processing of a large number of requests and ensure normal running of a service. In addition, because a node does not establish an association with a node that does not undergo identity authentication, the node is prevented from establishing an association with an unauthorized attacker, and data security of the node is improved.

In another possible implementation of the first aspect, the determining that an identity of the second node is trusted includes:
if a type of the shared key between the first node and the second node is a preconfigured type, determining that an identifier of the second node is in a first whitelist;
if a type of the shared key between the first node and the second node is a password generation type, determining that an identifier of the second node is in a first whitelist; or
obtaining first acknowledgment indication information if an identifier of the second node is not in a first blacklist, a type of the shared key between the first node and the second node is a password generation type, and the identifier of the second node is not in a first whitelist, where the first acknowledgment indication information indicates that the identity of the second node is trusted.

In still another possible implementation of the first aspect, the first authentication response further includes second integrity check data, and the second integrity check data is used to perform message integrity check on the first authentication response. The method further includes:
determining that the message integrity check on the first authentication response succeeds.

It can be learned that, after it is determined that the identity of the second node is trusted, in addition to identity authentication, integrity check needs to be performed on a message carrying identity authentication information, to prevent content in the first authentication response from being tampered with by the attacker. This avoids affecting verification on the identity authentication information of the second node, and ensures stable running of the service provided by the node.

In still another possible implementation of the first aspect, before the receiving a first association request from a second node, the method further includes:
determining that a first association quantity is less than or equal to a preset first association threshold, where the first association quantity indicates a quantity of currently associated nodes.

In the foregoing method, an association request from the second node can be received only when a quantity of associated nodes is less than or equal to the preset first association threshold. The first association threshold may limit a bearing capacity of the service that can be provided by a node. When the first association threshold is exceeded, the node may no longer receive or process the association request, to avoid affecting communication between the node and another node associated with the node, and ensure stable running of the service provided by the node.

In still another possible implementation of the first aspect, the method further includes:
sending a first association response to the second node if the verification on the second identity authentication information succeeds, where the first association response is used to indicate that the first node establishes an association with the second node.

It can be learned that after it is determined that the identity of the second node is trusted, if identity authentication succeeds, the first association response may be sent to the second node. The association response is used to indicate that the first node establishes an association with the second node. Further, the first response message may be used to notify the second node that the association succeeds and communication can be performed.

In still another possible implementation of the first aspect, the method further includes:
resetting the first authentication failure counter if the verification on the second identity authentication information succeeds.

It can be learned that, after it is determined that the identity of the second node is trusted, if identity authentication succeeds, the quantity of verification failures for the second node needs to be reset, to avoid affecting subsequent determining of the identity of the second node, and ensure stable running of the service provided by the node.

In still another possible implementation of the first aspect, after the updating a first authentication failure counter if the verification on the second identity authentication information based on the shared key fails, the method further includes:
determining that a value of the first authentication failure counter is greater than or equal to a first threshold, and adding the identifier of the second node to the first blacklist.

It can be learned that if the quantity of verification failures for the second node exceeds the preset first threshold, it indicates that the second node fails to be verified a plurality of times, and the second node may be an attacker who frequently sends association requests. Therefore, the identifier of the second node is added to the blacklist. After the identifier of the second node is added to the blacklist, the identity of the second node is not determined as trusted, to prevent the node from establishing an association with an unauthorized attacker, and improve data security of the node.

In still another possible implementation of the first aspect, a validity period of the first blacklist is predefined or preconfigured first duration.

It can be learned that the predefined or preconfigured first duration in the first blacklist may be considered as the validity period of the blacklist. For example, the first duration of the blacklist may be one week, and an identifier of a second node may be removed from the blacklist one week after being added to the blacklist.

In still another possible implementation of the first aspect, the method further includes:
removing the identifier of the second node from the first blacklist if duration in which the identifier of the second node is added to the first blacklist exceeds the first duration, where the first duration is related to at least one of a quantity of times that the identifier of the second node is added to the first blacklist or a type of the second node.

The foregoing implementation describes factors related to the validity period of the first blacklist. The validity period of the first blacklist may be related to the quantity of times that the second node is added to the first blacklist. A larger quantity of times that a second node is added to the first blacklist indicates longer duration of the second node in the first blacklist. Further optionally, after the quantity of times that the second node is added to the first blacklist exceeds a threshold, the second node may be permanently added to the first blacklist.

In addition, the validity period of the first blacklist may be related to a device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the first node may further predefine a blacklist validity period corresponding to the second node. Details are not described herein again. In still another possible implementation of the first aspect, if the identity of the second node is untrusted, the step of sending a first authentication request to the second node is not performed.

It can be learned that if the identity of the second node is untrusted, subsequent identity authentication is not performed, to avoid wasting resources of the node and affecting normal association with another node.

According to a second aspect, an embodiment of this application further provides an association method. The method includes:
determining that an identity of a first node is trusted, and sending a first association request to the first node;
receiving a first authentication request from the first node, where the first authentication request includes first identity authentication information;
performing verification on the first identity authentication information based on a shared key between a second node and the first node, where the shared key is a secret value shared between the first node and the second node; and
sending a first authentication response to the first node if the verification on the first identity authentication information succeeds, where the first authentication response includes second identity authentication information, and the second identity authentication information is generated based on the shared key.

In this embodiment of this application, after it is determined that the identity of the first node is trusted, the first association request is sent to the first node. Then, verification on identity authentication information of the first node is performed based on the first identity authentication information in the first authentication request by using the shared key. After the verification succeeds, the second identity authentication information is sent to the first node. The second identity authentication information may be used by the first node to verify an identity of the second node. It can be seen that, after it is determined that an identity is trusted, association can be performed only after identity authentication of both parties succeeds. Therefore, it is difficult for an attacker to bypass, by modifying an identity such as an identifier, identity authentication performed by the second node on the attacker, to prevent the second node from establishing an association with an unauthorized attacker, and improve data security of the node.

In a possible implementation of the second aspect, the determining that an identity of a first node is trusted includes:
determining that an identifier of the first node is in a second whitelist; or
determining that an identifier of the first node is not in a second blacklist; or
obtaining second acknowledgment indication information, where the second acknowledgment indication information indicates that the identity of the first node is trusted; and an identifier of the first node is not in a second blacklist; or
obtaining second acknowledgment indication information, where the second acknowledgment indication information indicates that the identity of the first node is trusted; and an identifier of the first node is neither in a second blacklist nor in a second whitelist.

In the foregoing method, an associated node may be controlled by using a blacklist or a whitelist, and the node may be controlled not to send an association request to the untrusted first node. This prevents the node from establishing an association with an unauthorized attacker, and improves data security of the node.

In another possible implementation of the second aspect, the determining that an identity of a first node is trusted includes:
if a type of the shared key between the first node and the second node is a preconfigured type, determining that an identifier of the first node is in a second whitelist;
if a type of the shared key between the first node and the second node is a password generation type, determining that an identifier of the first node is in a second whitelist; or
obtaining second acknowledgment indication information if an identifier of the first node is not in a second blacklist, a type of the shared key between the first node and the second node is a password generation type, and the identifier of the first node is not in a second whitelist, where the second acknowledgment indication information indicates that the identity of the second node is trusted.

In still another possible implementation of the second aspect, the first authentication request further includes first integrity check data, and the first integrity check data is used to perform message integrity check on the first authentication request.

The method further includes:
determining that the message integrity check on the first authentication request succeeds.

It can be learned that, after it is determined that the identity of the first node is trusted, in addition to identity authentication, integrity check needs to be performed on a message carrying identity authentication information, to prevent content in the first authentication response from being tampered with by the attacker. This avoids affecting verification on the identity authentication information of the first node, and ensures stable running of the service provided by the node.

In still another possible implementation of the second aspect, before the determining that an identity of a first node is trusted, and sending a first association request to the first node, the method further includes:
determining that a second association quantity is less than or equal to a preset second association threshold, where the second association quantity indicates a quantity of currently associated nodes.

In the foregoing method, an association request may be sent to the first node only when a quantity of associated nodes is less than or equal to the preset second association threshold. The second threshold may limit a quantity of nodes that can be associated with the node. When the second association threshold is exceeded, the node cannot be associated with another node, to avoid affecting communication between the node and another node associated with the node, and ensure stable running of the service provided by the node.

In still another possible implementation of the second aspect, the method further includes:
receiving a first association response from the first node, where the first association response is used to indicate that the first node establishes an association with the second node.

It can be learned that after it is determined that the identity of the first node is trusted, if identity authentication performed by the first node on the second node succeeds, the second node receives the first association response from the first node. The association response is used to indicate that the first node establishes an association with the second node. Further, the first response message may notify the second node that the association succeeds and subsequent communication can be performed.

In still another possible implementation of the second aspect, the method further includes:
resetting a second authentication failure counter, where the second authentication failure counter indicates a quantity of verification failures for the first node.

It can be learned that, after it is determined that the identity of the first node is trusted, if identity authentication succeeds, the quantity of verification failures for the first node needs to be reset, to avoid affecting subsequent determining of the identity of the first node, and ensure stable running of the service provided by the node.

In still another possible implementation of the second aspect, the method further includes:
updating a second authentication failure counter if the verification on the first identity authentication information fails, where the second authentication failure counter indicates a quantity of verification failures for the first node.

It can be learned that, if the verification on the identity authentication information of the first node fails, the quantity of identity verification failures for the first node is updated, and the quantity of verification failures may be used to subsequently determine whether an identity of a node is trusted. Therefore, it is difficult for an attacker to bypass, by modifying an identity such as an identifier, association control performed by the first node on the attacker, to prevent the node from establishing an association with an unauthorized attacker, and improve data security of the node.

In still another possible implementation of the second aspect, after the updating a second authentication failure counter if the verification on the first identity authentication information fails, the method further includes:
determining that a value of the second authentication failure counter is greater than or equal to a second threshold; and
adding the identifier of the first node to the second blacklist.

It can be learned that if the quantity of verification failures for the first node exceeds the preset second threshold, it indicates that the first node fails to be verified a plurality of times, and the first node may be an attacker who frequently sends authentication requests. Therefore, the identifier of the first node is added to the blacklist. After the identifier of the first node is added to the blacklist, the identity of the first node is not determined as trusted, to prevent the node from establishing an association with an unauthorized attacker, and improve data security of the node.

In still another possible implementation of the second aspect, a validity period of the second blacklist is predefined or preconfigured second duration.

It can be learned that the predefined or preconfigured second duration in the second blacklist may be considered as the validity period of the blacklist. For example, the second duration may be 10 days, and an identifier of a first node may be removed from the blacklist 10 days after being added to the blacklist.

In still another possible implementation of the second aspect, after the updating a second authentication failure counter if the verification on the first identity authentication information fails, the method further includes:
determining that a value of the second authentication failure counter is less than a second threshold; and
sending a second association request to the first node.

It may be understood that, in a process of verifying the identity authentication information, because some parameters are lost or incorrectly transmitted in a transmission process, verification on the identity authentication information may also fail. Therefore, if the quantity of verification failures for the first node does not exceed the preset second threshold, an association request may be re-sent to the first node to request to establish an association with the node. In this way, system robustness is improved, and stable running of the service provided by the node is ensured.

In still another possible implementation of the second aspect, after the updating a second authentication failure counter if the verification on the first identity authentication information fails, the method further includes:
determining that a value of the second authentication failure counter is less than a second threshold;
obtaining third acknowledgment indication information; and
sending a second association request to the first node.

It can be learned that before the second association request is re-sent, acknowledgment indication information needs to be obtained. The third acknowledgment indication information may be indication information obtained based on an acknowledgment operation entered by a user, and the acknowledgment operation may be acknowledgment of output prompt information. For example, the prompt information may be output to remind the user that the verification fails and the association request needs to be re-initiated. After a user acknowledgment operation is received and the third acknowledgment indication information is obtained, the second association request is sent to the first node. In this way, the user verifies an identity of a first node that needs to be re-associated with, so that association with an untrusted node can be avoided, and communication security is ensured.

In still another possible implementation of the second aspect, the method further includes:
removing the identifier of the first node from the second blacklist if duration in which the identifier of the first node is added to the second blacklist exceeds the second duration, where the second duration is related to at least one of a quantity of times that the identifier of the first node is added to the second blacklist or a type of the first node.

The foregoing implementation describes factors related to the validity period of the second blacklist. The validity period of the second blacklist may be related to the quantity of times that the first node is added to the blacklist. A larger quantity of times that a first node is added to the second blacklist indicates longer duration of the first node in the second blacklist. Further optionally, after the quantity of times that the first node is added to the second blacklist exceeds a threshold, the first node may be permanently added to the second blacklist.

In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the second node may further predefine a blacklist validity period corresponding to the first node. Details are not described herein again.

In still another possible implementation of the second aspect, if the identity of the first node is untrusted, the step of sending a first association request to the first node is not performed.

It can be learned that if the identity of the first node is untrusted, the identity authentication request is no longer sent to the first node, to avoid wasting resources of the node.

According to a third aspect, an embodiment of this application further provides an association control apparatus. The apparatus includes:
a communications unit, configured to receive a first association request from a second node; and
a processing unit, configured to determine that an identity of the second node is trusted, and send a first authentication request to the second node by using the communications unit, where the first authentication request includes first identity authentication information, and the first identity authentication information is generated based on a shared key between a first node and the second node.

The communications unit is further configured to receive a first authentication response from the second node. The first authentication response includes second identity authentication information.

The processing unit is further configured to perform verification on the second identity authentication information based on the shared key.

The processing unit is further configured to update a first authentication failure counter if the verification on the second identity authentication information fails. The first authentication failure counter indicates a quantity of verification failures for the second node.

In this embodiment of this application, after determining that the identity of the second node is trusted, the apparatus verifies the identity of the second node based on the shared key that is shared with the second node. In this way, even if an attacker bypasses a step of "determining that an identity is trusted" of the apparatus by modifying an identifier, because it is difficult to forge identity authentication information, identity authentication performed by the apparatus on the attacker still cannot succeed. Therefore, the apparatus is prevented from establishing an association with an unauthorized attacker, and data security of a node is improved.

Further, if the verification fails, the apparatus updates the quantity of verification failures. The quantity of verification failures may be used to subsequently determine whether the identity of the second node is trusted, so that a node that fails to be verified a plurality of times may no longer be determined as trusted. For the node that is not determined as trusted, the apparatus may no longer process an association request of the node (for example, sending an authentication request), to prevent the apparatus from breaking down due to processing of a large number of requests, and ensure normal running of a service.

In a possible implementation of the third aspect, the processing unit is specifically configured to:
determine that an identifier of the second node is in a first whitelist; or
determine that an identifier of the second node is not in a first blacklist; or
obtain first acknowledgment indication information, where the first acknowledgment indication information indicates that the identity of the second node is trusted; and an identifier of the second node is not in a first blacklist; or
obtain first acknowledgment indication information, where the first acknowledgment indication information indicates that the identity of the second node is trusted; and an identifier of the second node is neither in a first blacklist nor in a first whitelist.

The apparatus controls a node that requests association based on a blacklist or a whitelist, so that identity authentication does not need to be performed on an untrusted second node. This can prevent breaking down due to processing of a large number of requests and ensure normal running of the service. In addition, because the apparatus does not establish an association with a node that does not undergo identity authentication, the apparatus is prevented from establishing an association with an unauthorized attacker, and data security of the apparatus is improved.

In another possible implementation of the third aspect, the processing unit 702 is specifically configured to:
if a type of the shared key between the first node and the second node is a preconfigured type, determine that an identifier of the second node is in a first whitelist;
if a type of the shared key between the first node and the second node is a password generation type, determine that an identifier of the second node is in a first whitelist; or
obtain first acknowledgment indication information if an identifier of the second node is not in a first blacklist, a type of the shared key between the first node and the second node is a password generation type, and the identifier of the second node is not in a first whitelist, where the first acknowledgment indication information indicates that the identity of the second node is trusted.

In still another possible implementation of the third aspect, the first authentication response further includes second integrity check data, and the second integrity check data is used to perform message integrity check on the first authentication response.

The processing unit is specifically configured to:
determine that the message integrity check on the first authentication response succeeds.

It can be learned that, after it is determined that the identity of the second node is trusted, in addition to identity authentication, integrity check needs to be performed on a message carrying identity authentication information, to prevent content in the first authentication response from being tampered with by the attacker. This avoids affecting verification on the identity authentication information of the second node, and ensures stable running of the service provided by the apparatus.

In still another possible implementation of the third aspect, the processing unit is further configured to:
determine that a first association quantity is less than or equal to a preset first association threshold, where the first association quantity indicates a quantity of currently associated nodes.

It can be learned that the first association threshold is preset in the apparatus. An association request from the second node can be received only when a quantity of associated nodes is less than or equal to the preset first association threshold. The first threshold may limit a bearing capacity of the service that can be provided by the apparatus. When the first association threshold is exceeded, the apparatus may no longer receive or process the association request, to avoid affecting communication between the apparatus and another node associated with the apparatus, and ensure stable running of the service provided by the apparatus.

In still another possible implementation of the third aspect, the communications unit is further configured to:
send a first association response to the second node if the verification on the second identity authentication information succeeds, where the first association response is used to indicate that the first node establishes an association with the second node.

It can be learned that after it is determined that the identity of the second node is trusted, if identity authentication succeeds, the first association response may be sent to the second node. The association response is used to indicate the apparatus to establish an association with the second node. Further, the first response message may be used to notify the second node that the association succeeds and communication can be performed.

In still another possible implementation of the third aspect, the processing unit is further configured to:
reset the first authentication failure counter if the verification on the second identity authentication information succeeds.

It can be learned that, after it is determined that the identity of the second node is trusted, if identity authentication succeeds, the quantity of verification failures for the second node needs to be reset, to avoid affecting subsequent determining of the identity of the second node, and ensure stable running of the service provided by the apparatus.

In still another possible implementation of the third aspect, the processing unit is further configured to:
determine that a value of the first authentication failure counter is greater than or equal to a first threshold, and add the identifier of the second node to the first blacklist.

It can be learned that if the quantity of verification failures for the second node exceeds the preset first threshold, it indicates that the second node fails to be verified a plurality of times, and the second node may be an attacker who frequently sends association requests. Therefore, the identifier of the second node is added to the blacklist. After the identifier of the second node is added to the blacklist, the identity of the second node is not determined as trusted, to prevent the apparatus from establishing an association with an unauthorized attacker, and improve data security of the node.

In still another possible implementation of the third aspect, a validity period of the first blacklist is predefined or preconfigured first duration.

It can be learned that the predefined or preconfigured first duration in the first blacklist may be considered as the validity period of the blacklist. For example, the first duration of the blacklist may be one week, and an identifier of a second node may be removed from the blacklist one week after being added to the blacklist.

In still another possible implementation of the third aspect, the processing unit is further configured to:
remove the identifier of the second node from the first blacklist if duration in which the identifier of the second node is added to the first blacklist exceeds the first duration, where the first duration is related to at least one of a quantity of times that the identifier of the second node is added to the first blacklist or a type of the second node.

The foregoing implementation describes factors related to the validity period of the first blacklist. The validity period of the first blacklist may be related to the quantity of times that the second node is added to the first blacklist. A larger quantity of times that a second node is added to the first blacklist indicates longer duration of the second node in the first blacklist. Further optionally, after the quantity of times that the second node is added to the first blacklist exceeds a threshold, the second node may be permanently added to the first blacklist.

In addition, the validity period of the first blacklist may be related to a device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the first node may further predefine a blacklist validity period corresponding to the second node. Details are not described herein again. A quantity of device types is not specifically limited in this application, and may be designed based on a specific scenario.

In still another possible implementation of the third aspect, if the identity of the second node is untrusted, the step of sending a first authentication request to the second node is not performed.

It can be learned that if the identity of the second node is untrusted, a subsequent identity authentication step is not performed, to avoid wasting resources of the apparatus and affecting normal association with another node.

According to a fourth aspect, an embodiment of this application further provides an association apparatus. The apparatus includes:
a processing unit, configured to determine that an identity of a first node is trusted, and send a first association request to the first node by using a communications unit.

The communications unit is further configured to receive a first authentication request from the first node. The first authentication request includes first identity authentication information.

The processing unit is further configured to perform verification on the first identity authentication information based on a shared key between a second node and the first node.

The communications unit is further configured to send a first authentication response to the first node if the verification on the first identity authentication information succeeds. The first authentication response includes second identity authentication information, and the second identity authentication information is generated based on the shared key.

In this embodiment of this application, after determining that the identity of the first node is trusted, the apparatus sends the first association request to the first node. Then, verification on identity authentication information of the first node is performed based on the first identity authentication information in the first authentication request by using the shared key. After the verification succeeds, the second identity authentication information is sent to the first node. The second identity authentication information may be used by the first node to verify an identity of the apparatus. It can be seen that, after it is determined that an identity is trusted, association can be performed only after identity authentication of both parties succeeds. Therefore, it is difficult for an attacker to bypass, by modifying an identity such as an identifier, identity authentication performed by the second node on the attacker, to prevent the apparatus from establishing an association with an unauthorized attacker, and improve data security of the node.

In a possible implementation of the fourth aspect, the processing unit is specifically configured to:
determine that an identifier of the first node is in a second whitelist; or
determine that an identifier of the first node is not in a second blacklist; or
obtain second acknowledgment indication information, where the second acknowledgment indication information indicates that the identity of the first node is trusted; and an identifier of the first node is not in a second blacklist; or
obtain second acknowledgment indication information, where the second acknowledgment indication information indicates that the identity of the first node is trusted; and an identifier of the first node is neither in a second blacklist nor in a second whitelist.

In the foregoing method, an associated node may be controlled by using a blacklist or a whitelist, and the apparatus may be controlled not to send an association request to the untrusted first node. This prevents the apparatus from establishing an association with an unauthorized attacker, and improves data security of the apparatus.

In another possible implementation of the fourth aspect, the processing unit is specifically configured to:
if a type of the shared key between the first node and the second node is a preconfigured type, determine that an identifier of the first node is in a second whitelist;
if a type of the shared key between the first node and the second node is a password generation type, determine that an identifier of the first node is in a second whitelist; or
obtain second acknowledgment indication information if an identifier of the first node is not in a second blacklist, a type of the shared key between the first node and the second node is a password generation type, and the identifier of the first node is not in a second whitelist, where the second acknowledgment indication information indicates that the identity of the second node is trusted.

In still another possible implementation of the fourth aspect, the first authentication request further includes first integrity check data, and the first integrity check data is used to perform message integrity check on the first authentication request.

The processing unit is further configured to:
determine that the message integrity check on the first authentication request succeeds.

It can be learned that, after it is determined that the identity of the first node is trusted, in addition to identity authentication, integrity check needs to be performed on a message carrying identity authentication information, to prevent content in the first authentication response from being tampered with by the attacker. This avoids affecting verification on the identity authentication information of the first node, and ensures stable running of the service provided by the apparatus.

In still another possible implementation of the fourth aspect, the processing unit is further configured to:
determine that a second association quantity is less than or equal to a preset second association threshold, where the second association quantity indicates a quantity of currently associated nodes.

It can be learned that the second association threshold is preset in the apparatus. An association request may be sent to the first node only when a quantity of associated nodes is less than or equal to the preset second association threshold. The second threshold may limit a quantity of nodes that can be associated with the apparatus. When the second association threshold is exceeded, the apparatus cannot be associated with another node, to avoid affecting communication between the apparatus and another node associated with the apparatus, and ensure stable running of the service provided by the apparatus.

In still another possible implementation of the fourth aspect, the communications unit is further configured to:
receive a first association response from the first node, where the first association response is used to indicate that the first node establishes an association with the second node.

It can be learned that after it is determined that the identity of the first node is trusted, if identity authentication performed by the first node on the second node succeeds, the apparatus receives the first association response from the first node. The association response is used to indicate the apparatus to establish an association with the second node. Further, the first response message may notify the apparatus that the association succeeds and subsequent communication can be performed.

In still another possible implementation of the fourth aspect, the processing unit is further configured to:
reset a second authentication failure counter, where the second authentication failure counter indicates a quantity of verification failures for the first node.

It can be learned that, after it is determined that the identity of the first node is trusted, if identity authentication succeeds, the quantity of verification failures for the first node needs to be reset, to avoid affecting subsequent determining of the identity of the first node, and ensure stable running of the service provided by the apparatus.

In still another possible implementation of the fourth aspect, the processing unit is further configured to:
update a second authentication failure counter if the verification on the first identity authentication information fails, where the second authentication failure counter indicates a quantity of verification failures for the first node.

It can be learned that, if the verification on the identity authentication information of the first node fails, the apparatus updates the quantity of identity verification failures for the first node, and the quantity of verification failures may be used to subsequently determine whether an identity of a node is trusted. Therefore, it is difficult for an attacker to bypass, by modifying an identity such as an identifier, association control performed by the first node on the attacker, to prevent the apparatus from establishing an association with an unauthorized attacker, and improve data security of the apparatus.

In still another possible implementation of the fourth aspect, the processing unit is further configured to:
determine that a value of the second authentication failure counter is greater than or equal to a second threshold; and
add the identifier of the first node to the second blacklist.

It can be learned that if the quantity of verification failures for the first node exceeds the preset second threshold, it indicates that the first node fails to be verified a plurality of times, and the first node may be an attacker who frequently sends authentication requests. Therefore, the identifier of the first node is added to the blacklist. After the identifier of the first node is added to the blacklist, the identity of the first node is not determined as trusted, to prevent the apparatus from establishing an association with an unauthorized attacker, and improve data security of the node.

In still another possible implementation of the fourth aspect, a validity period of the second blacklist is predefined or preconfigured second duration.

It can be learned that the predefined or preconfigured second duration in the second blacklist may be considered as the validity period of the blacklist. For example, the second duration of the blacklist may be 10 days, and an identifier of a first node may be removed from the blacklist 10 days after being added to the blacklist.

In still another possible implementation of the fourth aspect, the processing unit is further configured to determine that a value of the second authentication failure counter is less than a second threshold.

The communications unit is further configured to send a second association request to the first node.

It can be learned that, if the verification on the identity authentication information of the first node fails, the apparatus updates the quantity of identity verification failures for the first node, and the quantity of verification failures may be used to subsequently determine whether an identity of a node is trusted. Therefore, it is difficult for an attacker to bypass, by modifying an identity such as an identifier, association control performed by the first node on the attacker, to prevent the apparatus from establishing an association with an unauthorized attacker, and improve data security of the node.

In still another possible implementation of the fourth aspect, the processor is further configured to:
determine that a value of the second authentication failure counter is less than a second threshold;
obtain third acknowledgment indication information; and
send a second association request to the first node.

It can be learned that before the second association request is re-sent, acknowledgment indication information needs to be obtained. The third acknowledgment indication information may be indication information obtained based on an acknowledgment operation entered by a user, and the acknowledgment operation may be acknowledgment of output prompt information. For example, the prompt information may be output to remind the user that the verification fails and the association request needs to be re-initiated. After a user acknowledgment operation is received and the third acknowledgment indication information is obtained, the second association request is sent to the first node. In this way, the user verifies an identity of a first node that needs to be re-associated with, so that association with an untrusted node can be avoided, and communication security is ensured.

In still another possible implementation of the fourth aspect, the processor is further configured to:
remove the identifier of the first node from the second blacklist if duration in which the identifier of the first node is added to the second blacklist exceeds the second duration, where the second duration is related to at least one of a quantity of times that the identifier of the first node is added to the second blacklist or a type of the first node.

The foregoing implementation describes factors related to the validity period of the second blacklist. The validity period of the second blacklist may be related to the quantity of times that the first node is added to the blacklist. A larger quantity of times that a first node is added to the second blacklist indicates longer duration of the first node in the second blacklist. Further optionally, after the quantity of times that the first node is added to the second blacklist exceeds a threshold, the first node may be permanently added to the second blacklist.

In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the second node may further predefine a blacklist validity period corresponding to the first node. Details are not described herein again.

In still another possible implementation of the fourth aspect, if the identity of the first node is untrusted, the step of sending a first association request to the first node is not performed.

It can be learned that if the identity of the first node is untrusted, the identity authentication request is no longer sent to the first node, to avoid wasting resources of the node.

According to a fifth aspect, an embodiment of this application further provides a communications apparatus. The apparatus includes at least one processor and a communications interface, and the at least one processor is configured to invoke a computer program stored in at least one memory, so that the apparatus implements the method according to any one of the first aspect or the possible implementations of the first aspect.

In a possible implementation of the fifth aspect, the at least one processor is configured to invoke the computer program stored in the at least one memory, to perform the following operations:
receiving a first association request from a second node through the communications interface;
determining that an identity of the second node is trusted, and sending a first authentication request to the second node through the communications interface, where the first authentication request includes first identity authentication information, the first identity authentication information is generated based on a shared key between a first node and the second node, and the shared key may be considered as a first secret value shared between the first node and the second node;
receiving a first authentication response from the second node through the communications interface, where the first authentication response includes second identity authentication information;
performing verification on the second identity authentication information based on the shared key; and
updating a first authentication failure counter if the verification on the second identity authentication information fails, where the first authentication failure counter indicates a quantity of verification failures for the second node.

In this embodiment of this application, after determining that the identity of the second node is trusted, the apparatus verifies the identity of the second node based on the shared key that is shared with the second node. In this way, even if an attacker bypasses a step of "determining that an identity is trusted" of the apparatus by modifying an identifier, because it is difficult to forge identity authentication information, identity authentication performed by the apparatus on the attacker still cannot succeed. Therefore, the apparatus is prevented from establishing an association with an unauthorized attacker, and data security of the apparatus is improved.

Further, if the verification fails, the apparatus updates the quantity of verification failures. The quantity of verification failures may be used to subsequently determine whether the identity of the second node is trusted, so that a node that fails to be verified a plurality of times may no longer be determined as trusted. For the node that is not determined as trusted, the apparatus may no longer process an association request of the node (for example, sending an authentication request), to prevent the apparatus from breaking down due to processing of a large number of requests, and ensure normal running of a service.

In another possible implementation of the fifth aspect, the processor is specifically configured to:
determine that an identifier of the second node is in a first whitelist; or
determine that an identifier of the second node is not in a first blacklist; or
obtain first acknowledgment indication information, where the first acknowledgment indication information indicates that the identity of the second node is trusted; and an identifier of the second node is not in a first blacklist; or
obtain first acknowledgment indication information, where the first acknowledgment indication information indicates that the identity of the second node is trusted; and an identifier of the second node is neither in a first blacklist nor in a first whitelist.

The apparatus controls a node that requests association based on a blacklist or a whitelist, so that identity authentication does not need to be performed on an untrusted second node. This can prevent breaking down due to processing of a large number of requests and ensure normal running of the service. In addition, because the apparatus does not establish an association with a node that does not undergo identity authentication, the apparatus is prevented from establishing an association with an unauthorized attacker, and data security of the apparatus is improved.

In still another possible implementation of the fifth aspect, the processor is specifically configured to:
if a type of the shared key between the first node and the second node is a preconfigured type, determine that an identifier of the second node is in a first whitelist;
if a type of the shared key between the first node and the second node is a password generation type, determine that an identifier of the second node is in a first whitelist; or
obtain first acknowledgment indication information if an identifier of the second node is not in a first blacklist, a type of the shared key between the first node and the second node is a password generation type, and the identifier of the second node is not in a first whitelist, where the first acknowledgment indication information indicates that the identity of the second node is trusted.

In still another possible implementation of the fifth aspect, the first authentication response further includes second integrity check data, and the second integrity check data is used to perform message integrity check on the first authentication response.

The processor is further configured to determine that the message integrity check on the first authentication response succeeds.

It can be learned that, after it is determined that the identity of the second node is trusted, in addition to identity authentication, integrity check needs to be performed on a message carrying identity authentication information, to prevent content in the first authentication response from being tampered with by the attacker. This avoids affecting verification on the identity authentication information of the second node, and ensures stable running of the service provided by the apparatus.

In still another possible implementation of the fifth aspect, the processor is further configured to:
determine that a first association quantity is less than or equal to a preset first association threshold, where the first association quantity indicates a quantity of currently associated nodes.

It can be learned that the first association threshold is preset in the apparatus. An association request from the second node can be received only when a quantity of associated nodes is less than or equal to the preset first association threshold. The first threshold may limit a bearing capacity of the service that can be provided by the node. When the first association threshold is exceeded, the apparatus may no longer receive or process the association request, to avoid affecting communication between the apparatus and another node associated with the apparatus, and ensure stable running of the service provided by the apparatus.

In still another possible implementation of the fifth aspect, the processor is further configured to:
send a first association response to the second node through the communications interface if the verification on the second identity authentication information succeeds, where the first association response is used to indicate that the first node establishes an association with the second node.

It can be learned that after it is determined that the identity of the second node is trusted, if identity authentication succeeds, the first association response may be sent to the second node. The association response is used to indicate the apparatus to establish an association with the second node. Further, the first response message may be used to notify the second node that the association succeeds and communication can be performed.

In still another possible implementation of the fifth aspect, the processor is further configured to:
reset the first authentication failure counter if the verification on the second identity authentication information succeeds.

It can be learned that, after it is determined that the identity of the second node is trusted, if identity authentication succeeds, the quantity of verification failures for the second node needs to be reset, to avoid affecting subsequent determining of the identity of the second node, and ensure stable running of the service provided by the apparatus.

In still another possible implementation of the fifth aspect, the processor is further configured to:
determine that a value of the first authentication failure counter is greater than or equal to a first threshold, and add the identifier of the second node to the first blacklist.

It can be learned that if the quantity of verification failures for the second node exceeds the preset first threshold, it indicates that the second node fails to be verified a plurality of times, and the second node may be an attacker who frequently sends association requests. Therefore, the identifier of the second node is added to the blacklist. After the identifier of the second node is added to the blacklist, the identity of the second node is not determined as trusted, to prevent the apparatus from establishing an association with an unauthorized attacker, and improve data security of the apparatus.

In still another possible implementation of the fifth aspect, a validity period of the first blacklist is predefined or preconfigured first duration.

It can be learned that the predefined or preconfigured first duration in the first blacklist may be considered as the validity period of the blacklist. For example, the first duration of the blacklist may be one week, and an identifier of a second node may be removed from the blacklist one week after being added to the blacklist.

In still another possible implementation of the fifth aspect, the processor is further configured to:
remove the identifier of the second node from the first blacklist if duration in which the identifier of the second node is added to the first blacklist exceeds the first duration, where the first duration is related to at least one of a quantity of times that the identifier of the second node is added to the first blacklist or a type of the second node.

The foregoing implementation describes factors related to a validity period of a blacklist. The validity period of the blacklist may be related to a quantity of times that the second node is added to the blacklist. A larger quantity of times that a second node is added to the blacklist indicates longer duration of the second node in the blacklist. Further optionally, after the quantity of times that the second node is added to the blacklist exceeds a threshold, the second node may be permanently added to the blacklist.

In addition, the validity period of the blacklist may be related to a device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the apparatus may further predefine a blacklist validity period corresponding to the second node. Details are not described herein again.

In still another possible implementation of the fifth aspect, if the identity of the second node is untrusted, the step of sending a first authentication request to the second node is not performed.

It can be learned that if the identity of the second node is untrusted, a subsequent identity authentication step is not performed, to avoid wasting resources of the apparatus and affecting normal association with another node.

According to a sixth aspect, an embodiment of this application further provides a communications apparatus. The apparatus includes at least one processor and a communications interface, and the at least one processor is configured to invoke a computer program stored in at least one memory, so that the apparatus implements the method according to any one of the first aspect or the possible implementations of the first aspect.

In a possible implementation of the sixth aspect, the at least one processor is configured to invoke the computer program stored in the at least one memory, to perform the following operations:
determining that an identity of a first node is trusted, and sending a first association request to the first node;
receiving a first authentication request from the first node, where the first authentication request includes first identity authentication information;
performing verification on the first identity authentication information based on a shared key between a second node and the first node, where the shared key is a secret value shared between the first node and the second node; and
sending a first authentication response to the first node if the verification on the first identity authentication information succeeds, where the first authentication response includes second identity authentication information, and the second identity authentication information is generated based on the shared key.

In this embodiment of this application, after determining that the identity of the first node is trusted, the apparatus sends the first association request to the first node. Then, verification on identity authentication information of the first node is performed based on the first identity authentication information in the first authentication request by using the shared key. After the verification succeeds, the second identity authentication information is sent to the first node. The second identity authentication information may be used by the first node to verify an identity of the apparatus. It can be seen that, after it is determined that an identity is trusted, association can be performed only after identity authentication of both parties succeeds. Therefore, it is difficult for an attacker to bypass, by modifying an identity such as an identifier, identity authentication performed by the apparatus on the attacker, to prevent the apparatus from establishing an association with an unauthorized attacker, and improve data security of the apparatus.

In another possible implementation of the sixth aspect, the processor is further configured to:
determine that an identifier of the first node is in a second whitelist; or
determine that an identifier of the first node is not in a second blacklist; or
obtain second acknowledgment indication information, where the second acknowledgment indication information indicates that the identity of the first node is trusted; and an identifier of the first node is not in a second blacklist; or
obtain second acknowledgment indication information, where the second acknowledgment indication information indicates that the identity of the first node is trusted; and an identifier of the first node is neither in a second blacklist nor in a second whitelist.

In the foregoing method, an associated node may be controlled by using a blacklist or a whitelist, and the apparatus may be controlled not to send an association request to the untrusted first node. This prevents the apparatus from establishing an association with an unauthorized attacker, and improves data security of the apparatus.

In still another possible implementation of the sixth aspect, the processor is further configured to:
if a type of the shared key between the first node and the second node is a preconfigured type, determine that an identifier of the first node is in a second whitelist;
if a type of the shared key between the first node and the second node is a password generation type, determine that an identifier of the first node is in a second whitelist; or
obtain second acknowledgment indication information if an identifier of the first node is not in a second blacklist, a type of the shared key between the first node and the second node is a password generation type, and the identifier of the first node is not in a second whitelist, where the second acknowledgment indication information indicates that the identity of the second node is trusted.

In still another possible implementation of the sixth aspect, the first authentication request further includes first integrity check data, and the first integrity check data is used to perform message integrity check on the first authentication request.

The processor is further configured to determine that the message integrity check on the first authentication request succeeds.

It can be learned that, after it is determined that the identity of the first node is trusted, in addition to identity authentication, integrity check needs to be performed on a message carrying identity authentication information, to prevent content in the first authentication response from being tampered with by the attacker. This avoids affecting verification on the identity authentication information of the first node, and ensures stable running of the service provided by the apparatus.

In still another possible implementation of the sixth aspect, the processor is further configured to:
determine that a second association quantity is less than or equal to a preset second association threshold, where the second association quantity indicates a quantity of currently associated nodes.

It can be learned that the second association threshold is preset in the apparatus. An association request may be sent to the first node only when a quantity of associated nodes is less than or equal to the preset second association threshold. The second threshold may limit a quantity of nodes that can be associated with the apparatus. When the second association threshold is exceeded, the apparatus cannot be associated with another node, to avoid affecting communication between the apparatus and another node associated with the apparatus, and ensure stable running of the service provided by the apparatus.

In still another possible implementation of the sixth aspect, the processor is further configured to:
receive a first association response from the first node, where the first association response is used to indicate that the first node establishes an association with the second node.

It can be learned that after it is determined that the identity of the first node is trusted, if identity authentication performed by the first node on the apparatus succeeds, the apparatus receives the first association response from the first node. The association response is used to indicate that the first node establishes an association with the second node. Further, the first response message may notify the apparatus that the association succeeds and subsequent communication can be performed.

In still another possible implementation of the sixth aspect, the processor is further configured to:
reset a second authentication failure counter, where the second authentication failure counter indicates a quantity of verification failures for the first node.

It can be learned that, after it is determined that the identity of the first node is trusted, if identity authentication succeeds, the quantity of verification failures for the first node needs to be reset, to avoid affecting subsequent determining of the identity of the first node, and ensure stable running of the service provided by the apparatus.

In still another possible implementation of the sixth aspect, the processor is further configured to:
update a second authentication failure counter if the verification on the first identity authentication information fails, where the second authentication failure counter indicates a quantity of verification failures for the first node.

It can be learned that, if the verification on the identity authentication information of the first node fails, the apparatus updates the quantity of identity verification failures for the first node, and the quantity of verification failures may be used to subsequently determine whether an identity of a node is trusted. Therefore, it is difficult for an attacker to bypass, by modifying an identity such as an identifier, association control performed by the apparatus on the attacker, to prevent the apparatus from establishing an association with an unauthorized attacker, and improve data security of the apparatus.

In still another possible implementation of the sixth aspect, the processor is further configured to:
determine that a value of the second authentication failure counter is greater than or equal to a second threshold; and
add the identifier of the first node to the second blacklist.

It can be learned that if the quantity of verification failures for the first node exceeds the preset second threshold, it indicates that the first node fails to be verified a plurality of times, and the first node may be an attacker who frequently sends authentication requests. Therefore, the identifier of the first node is added to the blacklist. After the identifier of the first node is added to the blacklist, the identity of the first node is not determined as trusted, to prevent the apparatus from establishing an association with an unauthorized attacker, and improve data security of the apparatus.

In still another possible implementation of the sixth aspect, a validity period of the second blacklist is predefined or preconfigured second duration.

It can be learned that the predefined or preconfigured second duration in the second blacklist may be considered as the validity period of the blacklist. For example, the second duration of the blacklist may be 10 days, and an identifier of a first node may be removed from the blacklist 10 days after being added to the blacklist.

In still another possible implementation of the sixth aspect, the processor is further configured to:
determine that a value of the second authentication failure counter is less than a second threshold; and
send a second association request to the first node.

It may be understood that, in a process of verifying the identity authentication information, because some parameters are lost or incorrectly transmitted in a transmission process, verification on the identity authentication information may also fail. Therefore, if the quantity of verification failures for the first node does not exceed the preset second threshold, an association request may be re-sent to the first node to request to establish an association with the first node. In this way, system robustness is improved, and stable running of the service provided by the apparatus is ensured.

In still another possible implementation of the sixth aspect, the processor is further configured to:
determine that a value of the second authentication failure counter is less than a second threshold;
obtain third acknowledgment indication information; and
send a second association request to the first node.

It can be learned that before the second association request is re-sent, acknowledgment indication information needs to be obtained. The third acknowledgment indication information may be indication information obtained based on an acknowledgment operation entered by a user, and the acknowledgment operation may be acknowledgment of output prompt information. For example, the prompt information may be output to remind the user that the verification fails and the association request needs to be re-initiated. After a user acknowledgment operation is received and the third acknowledgment indication information is obtained, the second association request is sent to the first node. In this way, the user verifies an identity of a first node that needs to be re-associated with, so that association with an untrusted node can be avoided, and communication security is ensured.

In still another possible implementation of the sixth aspect, the processor is further configured to:
remove the identifier of the first node from the second blacklist if duration in which the identifier of the first node is added to the second blacklist exceeds the second duration, where the second duration is related to at least one of a quantity of times that the identifier of the first node is added to the second blacklist or a type of the first node.

The foregoing implementation describes factors related to the validity period of the second blacklist. The validity period of the second blacklist may be related to the quantity of times that the first node is added to the blacklist. A larger quantity of times that a first node is added to the second blacklist indicates longer duration of the first node in the second blacklist. Further optionally, after the quantity of times that the first node is added to the second blacklist exceeds a threshold, the first node may be permanently added to the second blacklist.

In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the apparatus may further predefine a blacklist validity period corresponding to the first node. Details are not described herein again.

In still another possible implementation of the sixth aspect, if the identity of the first node is untrusted, the step of sending a first association request to the first node is not performed.

It can be learned that if the identity of the first node is untrusted, the identity authentication request is no longer sent to the first node, to avoid wasting resources of the node.

According to a seventh aspect, an embodiment of this application further provides an association control method. The method includes:
receiving a first association request from a second node;
determining that an identity of the second node is trusted, and sending a first authentication request to the second node, where the first authentication request includes first integrity check data;
receiving a first authentication response from the second node, where the first authentication response includes second integrity check data;
performing message integrity check on the first authentication response based on the second integrity check data; and
updating a first authentication failure counter if the message integrity check on the first authentication response fails, where the first authentication failure counter indicates a quantity of verification failures for the second node.

In this embodiment of this application, after it is determined that the identity of the second node is trusted, message integrity check further needs to be performed on an authentication response message from the second node before association is performed. If the message integrity check fails, a quantity of verification failures is updated. The quantity of verification failures may be used to subsequently determine whether the identity of the second node is trusted, so that an attacker can be prevented from tampering with data (for example, identity authentication information) in an authentication process. This prevents the node from establishing an association with an unauthorized attacker, and improves data security of the node.

In a possible implementation of the seventh aspect, the determining that an identity of the second node is trusted includes:
determining that an identifier of the second node is in a first whitelist; or
determining that an identifier of the second node is not in a first blacklist; or
obtaining first acknowledgment indication information, where the first acknowledgment indication information indicates that the identity of the second node is trusted; and an identifier of the second node is not in a first blacklist; or
obtaining first acknowledgment indication information, where the first acknowledgment indication information indicates that the identity of the second node is trusted; and an identifier of the second node is neither in a first blacklist nor in a first whitelist.

In the foregoing method, a node that requests association may be controlled by using a blacklist or a whitelist, so that identity authentication does not need to be performed on an untrusted second node. This prevents the node from establishing an association with an unauthorized attacker, and improves data security of the node.

In a possible implementation of the seventh aspect, the determining that an identity of the second node is trusted includes:
if a type of a shared key between a first node and the second node is a preconfigured type, determining that an identifier of the second node is in a first whitelist;
if a type of a shared key between a first node and the second node is a password generation type, determining that an identifier of the second node is in a first whitelist; or
obtaining first acknowledgment indication information if an identifier of the second node is not in a first blacklist, a type of a shared key between a first node and the second node is a password generation type, and the identifier of the second node is not in a first whitelist, where the first acknowledgment indication information indicates that the identity of the second node is trusted.

In another possible implementation of the seventh aspect, before the receiving a first association request from a second node, the method further includes:
determining that a first association quantity is less than or equal to a preset first association threshold, where the first association quantity indicates a quantity of currently associated nodes.

It can be learned that the first association threshold is preset in the node. An association request from the second node can be received only when a quantity of associated nodes is less than or equal to the preset first association threshold. The first threshold may limit a bearing capacity of the service that can be provided by the node. When the first association threshold is exceeded, the node may no longer receive or process the association request, to avoid affecting communication between the node and another node associated with the node, and ensure stable running of the service provided by the node.

In still another possible implementation of the seventh aspect, the first authentication response further includes second identity authentication information. The method further includes:
if the integrity check on the first authentication response succeeds, performing verification on the second identity authentication information based on the shared key that is shared with the second node; and
updating the first authentication failure counter if the verification on the second identity authentication information fails, where the first authentication failure counter indicates the quantity of verification failures for the second node.

It can be seen that, after it is determined that the identity of the second node is trusted, if the integrity check succeeds, the verification on the identity of the second node is performed based on the shared key that is shared with the second node. If the verification fails, the quantity of verification failures is updated. The quantity of verification failures may be used to subsequently determine whether the identity of the second node is trusted, so that a node that fails to be verified a plurality of times may no longer be determined as trusted. For the node that is not determined as trusted, an association request of the node may no longer be processed (for example, sending an authentication request), to prevent the node from breaking down due to processing of a large number of requests and ensure normal running of a service.

In still another possible implementation of the seventh aspect, the method further includes:
sending a first association response to the second node if the verification on the second identity authentication information succeeds, where the first association response is used to indicate that the first node establishes an association with the second node.

It can be learned that after it is determined that the identity of the second node is trusted, if identity authentication succeeds, the first association response may be sent to the second node. The association response is used to indicate that the first node establishes an association with the second node. Further, the first response message may be used to notify the second node that the association succeeds and communication can be performed.

In still another possible implementation of the seventh aspect, the method further includes:
resetting the first authentication failure counter if the verification on the second identity authentication information succeeds.

It can be learned that, after it is determined that the identity of the second node is trusted, if identity authentication succeeds, the quantity of verification failures for the second node needs to be reset, to avoid affecting subsequent determining of the identity of the second node, and ensure stable running of the service provided by the node.

In still another possible implementation of the seventh aspect, the method further includes:
determining that a value of the first authentication failure counter is greater than or equal to a first threshold, and adding the identifier of the second node to the first blacklist.

It can be learned that if the quantity of verification failures for the second node exceeds the preset first threshold, it indicates that the second node fails to be verified a plurality of times, and the second node may be an attacker who frequently sends association requests. Therefore, the identifier of the second node is added to the blacklist. After the identifier of the second node is added to the blacklist, the identity of the second node is not determined as trusted, to prevent the node from establishing an association with an unauthorized attacker, and improve data security of the node.

In still another possible implementation of the seventh aspect, a validity period of the first blacklist is predefined or preconfigured first duration.

It can be learned that the predefined or preconfigured first duration in the first blacklist may be considered as the validity period of the blacklist. For example, the first duration of the blacklist may be one week, and an identifier of a second node may be removed from the blacklist one week after being added to the blacklist.

In still another possible implementation of the seventh aspect, the method further includes:
removing the identifier of the second node from the first blacklist if duration in which the identifier of the second node is added to the first blacklist exceeds the first duration, where the first duration is related to at least one of a quantity of times that the identifier of the second node is added to the first blacklist or a type of the second node.

The foregoing implementation describes factors related to the validity period of the first blacklist. The validity period of the first blacklist may be related to the quantity of times that the second node is added to the first blacklist. A larger quantity of times that a second node is added to the first blacklist indicates longer duration of the second node in the first blacklist. Further optionally, after the quantity of times that the second node is added to the blacklist exceeds a threshold, the second node may be permanently added to the blacklist.

In addition, the validity period of the first blacklist may be related to a device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the first node may further predefine a blacklist validity period corresponding to the second node. Details are not described herein again. In still another possible implementation of the seventh aspect, if the identity of the second node is untrusted, the step of sending a first authentication request to the second node is not performed.

It can be learned that if the identity of the second node is untrusted, a subsequent identity authentication step is not performed, to avoid wasting resources of the node and affecting normal association with another node.

According to an eighth aspect, an embodiment of this application further provides an association method. The method includes:
determining that an identity of a first node is trusted, and sending a first association request to the first node;
receiving a first authentication request from the first node, where the first authentication request includes first integrity check data;
performing message integrity check on the first authentication request based on the first integrity check data; and
sending a first authentication response to the first node if the message integrity check on the first authentication request succeeds, where the first authentication response includes second integrity check data.

In this embodiment of this application, after it is determined that the identity of a second node is trusted, authentication (for example, verification by using identity authentication information) further needs to be performed on the first node before communication is performed. To prevent an attacker from tampering with data in an authentication process, message integrity check needs to be first performed on the first authentication request. Association with the first node is allowed only when the message integrity check succeeds, so that the attacker can be prevented from tampering with message content. This prevents the node from establishing an association with an unauthorized attacker, and improves data security of the node.

In a possible implementation of the eighth aspect, the determining that an identity of a first node is trusted includes:
determining that an identifier of the first node is in a second whitelist; or
determining that an identifier of the first node is not in a second blacklist; or
obtaining second acknowledgment indication information, where the second acknowledgment indication information indicates that the identity of the first node is trusted; and an identifier of the first node is not in a second blacklist; or
obtaining second acknowledgment indication information, where the second acknowledgment indication information indicates that the identity of the first node is trusted; and an identifier of the first node is neither in a second blacklist nor in a second whitelist.

In the foregoing method, an associated node may be controlled by using a blacklist or a whitelist, and the node may be controlled not to send an association request to the untrusted first node. This prevents the node from establishing an association with an unauthorized attacker, and improves data security of the node.

In a possible implementation of the eighth aspect, the determining that an identity of a first node is trusted includes:
if a type of a shared key between the first node and a second node is a preconfigured type, determining that an identifier of the first node is in a second whitelist;
if a type of a shared key between the first node and a second node is a password generation type, determining that an identifier of the first node is in a second whitelist; or
obtaining second acknowledgment indication information if an identifier of the first node is not in a second blacklist, a type of a shared key between the first node and a second node is a password generation type, and the identifier of the first node is not in a second whitelist, where the second acknowledgment indication information indicates that the identity of the second node is trusted.

In another possible implementation of the eighth aspect, before the determining that an identity of a first node is trusted, and sending a first association request to the first node, the method further includes:
determining that a second association quantity is less than or equal to a preset second association threshold, where the second association quantity indicates a quantity of currently associated nodes.

It can be learned that the second association threshold is preset in the node. An association request may be sent to the first node only when a quantity of associated nodes is less than or equal to the preset second association threshold. The second threshold may limit a quantity of nodes that can be associated with the node. When the second association threshold is exceeded, the node cannot be associated with another node, to avoid affecting communication between the node and another node associated with the node, and ensure stable running of the service provided by the node.

In still another possible implementation of the eighth aspect, the method further includes:
receiving a first association response from the first node, where the first association response is used to indicate that the first node establishes an association with the second node.

It can be learned that after it is determined that the identity of the first node is trusted, if identity authentication performed by the first node on the second node succeeds, the second node receives the first association response from the first node. The association response is used to indicate that the first node establishes an association with the second node. Further, the first response message may notify the second node that the association succeeds and subsequent communication can be performed.

In still another possible implementation of the eighth aspect, the method further includes:
resetting a second authentication failure counter, where the second authentication failure counter indicates a quantity of verification failures for the first node.

It can be learned that, after it is determined that the identity of the first node is trusted, if identity authentication succeeds, the quantity of verification failures for the first node needs to be reset, to avoid affecting subsequent determining of the identity of the first node, and ensure stable running of the service provided by the node.

In still another possible implementation of the eighth aspect, the method further includes:
updating a second authentication failure counter if the message integrity check on the first authentication response fails, where the second authentication failure counter indicates a quantity of verification failures for the first node.

Usually, if the message integrity check on the first authentication response fails, it indicates that the first authentication response message is no longer complete or has been modified by the attacker. Therefore, the quantity of identity verification failures for the first node is updated, and the quantity of verification failures may be used to subsequently determine whether the identity of the first node is trusted.

In still another possible implementation of the eighth aspect, the first authentication request message further includes first identity authentication information. The sending a first authentication response to the first node if the message integrity check on the first authentication response succeeds includes:
if the message integrity check on the first authentication response succeeds, performing verification on the first identity authentication information based on the shared key that is shared with the first node; and
sending the first authentication response to the first node if the verification on the first identity authentication information succeeds.

It can be seen that, after it is determined that the identity of the first node is trusted, if the integrity check succeeds, the verification on the identity of the first node is performed based on the shared key that is shared with the first node. Therefore, it is difficult for an attacker to bypass, by modifying an identity such as an identifier, association control on the attacker, to prevent the node from establishing an association with an unauthorized attacker, and improve data security of the node.

In still another possible implementation of the eighth aspect, the method further includes:
updating a second authentication failure counter if the verification on the first identity authentication information fails, where the second authentication failure counter indicates a quantity of verification failures for the first node.

It can be learned that, if the verification on the identity authentication information of the first node fails, the quantity of identity verification failures for the first node is updated, and the quantity of verification failures may be used to subsequently determine whether an identity of a node is trusted, so that a node that fails to be verified a plurality of times may no longer be determined as trusted. For the node that is not determined as trusted, an association request may no longer be sent to the node, to ensure normal running of a service provided by the node.

In still another possible implementation of the eighth aspect, the method further includes:
determining that a value of the second authentication failure counter is greater than or equal to a second threshold; and
adding the identifier of the first node to the second blacklist.

It can be learned that if the quantity of verification failures for the first node exceeds the preset second threshold, it indicates that the first node fails to be verified a plurality of times, and the first node may be an attacker who frequently sends authentication requests. Therefore, the identifier of the first node is added to the blacklist. After the identifier of the first node is added to the blacklist, the identity of the first node is not determined as trusted, to prevent the node from establishing an association with an unauthorized attacker, and improve data security of the node.

In still another possible implementation of the eighth aspect, a validity period of the second blacklist is predefined or preconfigured second duration.

It can be learned that the predefined or preconfigured second duration in the second blacklist may be considered as the validity period of the blacklist. For example, the second duration of the blacklist may be 10 days, and an identifier of a first node may be removed from the blacklist 10 days after being added to the blacklist.

In still another possible implementation of the eighth aspect, after the updating a second authentication failure counter if the verification on the first identity authentication information fails, the method further includes:
determining that a value of the second authentication failure counter is less than a second threshold; and
sending a second association request to the first node.

It may be understood that, in a process of verifying the identity authentication information, because some parameters are lost or incorrectly transmitted in a transmission process, verification on the identity authentication information may also fail. Therefore, if the quantity of verification failures for the first node does not exceed the preset second threshold, an association request may be re-sent to the first node to request to establish an association with the node. In this way, system robustness is improved, and stable running of the service provided by the node is ensured.

In still another possible implementation of the eighth aspect, after the updating a second authentication failure counter if the verification on the first identity authentication information fails, the method further includes:
determining that a value of the second authentication failure counter is less than a second threshold;
obtaining third acknowledgment indication information; and
sending a second association request to the first node.

It can be learned that before the second association request is re-sent, acknowledgment indication information needs to be obtained. The third acknowledgment indication information may be indication information obtained based on an acknowledgment operation entered by a user, and the acknowledgment operation may be acknowledgment of output prompt information. For example, the prompt information may be output to remind the user that the verification fails and the association request needs to be re-initiated. After a user acknowledgment operation is received and the third acknowledgment indication information is obtained, the second association request is sent to the first node. In this way, the user verifies an identity of a first node that needs to be re-associated with, so that association with an untrusted node can be avoided, and communication security is ensured.

In still another possible implementation of the eighth aspect, the method further includes:
removing the identifier of the first node from the second blacklist if duration in which the identifier of the first node is added to the second blacklist exceeds the second duration, where the second duration is related to at least one of a quantity of times that the identifier of the first node is added to the second blacklist or a type of the first node.

The foregoing implementation describes factors related to the validity period of the second blacklist. The validity period of the second blacklist may be related to the quantity of times that the first node is added to the blacklist. A larger quantity of times that a first node is added to the second blacklist indicates longer duration of the first node in the second blacklist. Further optionally, after the quantity of times that the first node is added to the second blacklist exceeds a threshold, the first node may be permanently added to the second blacklist.

In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the second node may further predefine a blacklist validity period corresponding to the first node. Details are not described herein again. In still another possible implementation of the eighth aspect, if the identity of the first node is untrusted, the step of sending a first association request to the first node is not performed.

It can be learned that if the identity of the first node is untrusted, the identity authentication request is no longer sent to the first node, to avoid wasting resources of the node.

According to a ninth aspect, an embodiment of this application further provides an association control apparatus. The apparatus includes:
a communications unit, configured to receive a first association request from a second node; and
a processing unit, configured to determine that an identity of the second node is trusted, and send a first authentication request to the second node by using the communications unit, where the first authentication request includes first integrity check data.

The communications unit is further configured to receive a first authentication response from the second node, and the first authentication response includes second integrity check data.

The processing unit is further configured to perform message integrity check on the first authentication response based on the second integrity check data.

The processing unit is further configured to update a first authentication failure counter if the message integrity check on the first authentication response fails. The first authentication failure counter indicates a quantity of verification failures for the second node.

In this embodiment of this application, after determining that the identity of the second node is trusted, the apparatus further needs to perform message integrity check on an authentication response message from the second node before association is performed. If the message integrity check fails, a quantity of verification failures is updated. The quantity of verification failures may be used to subsequently determine whether the identity of the second node is trusted, so that an attacker can be prevented from tampering with data (for example, identity authentication information) in an authentication process. This prevents the apparatus from establishing an association with an unauthorized attacker, and improves data security of the apparatus.

In a possible implementation of the ninth aspect, the processing unit is specifically configured to:
determine that an identifier of the second node is in a first whitelist; or
determine that an identifier of the second node is not in a first blacklist; or
obtain first acknowledgment indication information, where the first acknowledgment indication information indicates that the identity of the second node is trusted; and an identifier of the second node is not in a first blacklist; or
obtain first acknowledgment indication information, where the first acknowledgment indication information indicates that the identity of the second node is trusted; and an identifier of the second node is neither in a first blacklist nor in a first whitelist.

The apparatus may control a node that requests association by using a blacklist or a whitelist, so that identity authentication does not need to be performed on an untrusted second node. This prevents the node from establishing an association with an unauthorized attacker, and improves data security of the node.

In a possible implementation of the ninth aspect, the processing unit is specifically configured to:
if a type of a shared key between a first node and the second node is a preconfigured type, determine that an identifier of the second node is in a first whitelist;
if a type of a shared key between a first node and the second node is a password generation type, determine that an identifier of the second node is in a first whitelist; or
obtain first acknowledgment indication information if an identifier of the second node is not in a first blacklist, a type of a shared key between a first node and the second node is a password generation type, and the identifier of the second node is not in a first whitelist, where the first acknowledgment indication information indicates that the identity of the second node is trusted.

In another possible implementation of the ninth aspect, the processing unit is further configured to:
determine that a first association quantity is less than or equal to a preset first association threshold, where the first association quantity indicates a quantity of currently associated nodes.

It can be learned that the first association threshold is preset in the apparatus. An association request from the second node can be received only when a quantity of associated nodes is less than or equal to the preset first association threshold. The first threshold may limit a bearing capacity of the service that can be provided by the apparatus. When the first association threshold is exceeded, the apparatus may no longer receive or process the association request, to avoid affecting communication between the apparatus and another node associated with the apparatus, and ensure stable running of the service provided by the apparatus.

In still another possible implementation of the ninth aspect, the processing unit is further configured to:
if the integrity check on the first authentication response succeeds, perform verification on second identity authentication information based on the shared key that is shared with the second node; and
update the first authentication failure counter if the verification on the second identity authentication information fails, where the first authentication failure counter indicates the quantity of verification failures for the second node.

It can be seen that, after determining that the identity of the second node is trusted, if the integrity check succeeds, the apparatus performs the verification on the identity of the second node based on the shared key that is shared with the second node. If the verification fails, the quantity of verification failures is updated. The quantity of verification failures may be used to subsequently determine whether the identity of the second node is trusted, so that a node that fails to be verified a plurality of times may no longer be determined as trusted. For the node that is not determined as trusted, an association request of the node may no longer be processed (for example, sending an authentication request), to prevent the node from breaking down due to processing of a large number of requests and ensure normal running of a service.

In still another possible implementation of the ninth aspect, the communications unit is further configured to:
send a first association response to the second node if the verification on the second identity authentication information succeeds, where the first association response is used to indicate that the first node establishes an association with the second node.

It can be learned that after it is determined that the identity of the second node is trusted, if identity authentication succeeds, the first association response may be sent to the second node. The association response is used to indicate the apparatus to establish an association with the second node. Further, the first response message may be used to notify the second node that the association succeeds and communication can be performed.

In still another possible implementation of the ninth aspect, the processing unit is further configured to:
reset the first authentication failure counter if the verification on the second identity authentication information succeeds.

It can be learned that, after it is determined that the identity of the second node is trusted, if identity authentication succeeds, the quantity of verification failures for the second node needs to be reset, to avoid affecting subsequent determining of the identity of the second node, and ensure stable running of the service provided by the apparatus.

In still another possible implementation of the ninth aspect, the processing unit is further configured to:
determine that a value of the first authentication failure counter is greater than or equal to a first threshold, and add the identifier of the second node to the first blacklist.

It can be learned that if the quantity of verification failures for the second node exceeds the preset first threshold, it indicates that the second node fails to be verified a plurality of times, and the second node may be an attacker who frequently sends association requests. Therefore, the identifier of the second node is added to the blacklist. After the identifier of the second node is added to the blacklist, the identity of the second node is not determined as trusted, to prevent the apparatus from establishing an association with an unauthorized attacker, and improve data security of the node.

In still another possible implementation of the ninth aspect, a validity period of the first blacklist is predefined or preconfigured first duration.

It can be learned that the predefined or preconfigured first duration in the first blacklist may be considered as the validity period of the blacklist. For example, the first duration of the blacklist may be one week, and an identifier of a second node may be removed from the blacklist one week after being added to the blacklist.

In still another possible implementation of the ninth aspect, the processing unit is further configured to:
remove the identifier of the second node from the first blacklist if duration in which the identifier of the second node is added to the first blacklist exceeds the first duration, where the first duration is related to at least one of a quantity of times that the identifier of the second node is added to the first blacklist or a type of the second node.

The foregoing implementation describes factors related to the validity period of the first blacklist. The validity period of the first blacklist may be related to the quantity of times that the second node is added to the first blacklist. A larger quantity of times that a second node is added to the first blacklist indicates longer duration of the second node in the first blacklist. Further optionally, after the quantity of times that the second node is added to the first blacklist exceeds a threshold, the second node may be permanently added to the first blacklist.

In addition, the validity period of the first blacklist may be related to a device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the first node may further predefine a blacklist validity period corresponding to the second node. Details are not described herein again.

In still another possible implementation of the ninth aspect, if the identity of the second node is untrusted, the step of sending a first authentication request to the second node is not performed.

It can be learned that if the identity of the second node is untrusted, a subsequent identity authentication step is not performed, to avoid wasting resources of the apparatus and affecting normal association with another node.

According to a tenth aspect, an embodiment of this application further provides an association apparatus. The apparatus includes:
a processing unit, configured to determine that an identity of a first node is trusted, and send a first association request to the first node by using a communications unit.

The communications unit is further configured to receive a first authentication request from the first node. The first authentication request includes first identity authentication information and first integrity check data.

The processing unit is further configured to perform message integrity check on the first authentication request based on the first integrity check data.

The communications unit is further configured to send a first authentication response to the first node if the message integrity check on the first authentication request succeeds, where the first authentication response includes second integrity check data.

In this embodiment of this application, after determining that the identity of a second node is trusted, the apparatus further needs to perform authentication (for example, verification by using identity authentication information) on the first node before communication is performed. To prevent an attacker from tampering with data in an authentication process, message integrity check needs to be first performed on the first authentication request. Association with the first node is allowed only when the message integrity check succeeds, so that the attacker can be prevented from tampering with message content. This prevents the node from establishing an association with an unauthorized attacker, and improves data security of the node.

In a possible implementation of the tenth aspect, the processing unit is specifically configured to:
determine that an identifier of the first node is in a second whitelist; or
determine that an identifier of the first node is not in a second blacklist; or
obtain second acknowledgment indication information, where the second acknowledgment indication information indicates that the identity of the first node is trusted; and an identifier of the first node is not in a second blacklist; or
obtain second acknowledgment indication information, where the second acknowledgment indication information indicates that the identity of the first node is trusted; and an identifier of the first node is neither in a second blacklist nor in a second whitelist.

In the foregoing method, an associated node may be controlled by using a blacklist or a whitelist, and the apparatus may be controlled not to send an association request to the untrusted first node. This prevents the apparatus from establishing an association with an unauthorized attacker, and improves data security of the apparatus.

In a possible implementation of the tenth aspect, the processing unit is specifically configured to:
if a type of a shared key between the first node and a second node is a preconfigured type, determine that an identifier of the first node is in a second whitelist;
if a type of a shared key between the first node and a second node is a password generation type, determine that an identifier of the first node is in a second whitelist; or
obtain second acknowledgment indication information if an identifier of the first node is not in a second blacklist, a type of a shared key between the first node and a second node is a password generation type, and the identifier of the first node is not in a second whitelist, where the second acknowledgment indication information indicates that the identity of the second node is trusted.

In still another possible implementation of the tenth aspect, the processing unit is further configured to:
determine that a second association quantity is less than or equal to a preset second association threshold, where the second association quantity indicates a quantity of currently associated nodes.

It can be learned that the second association threshold is preset in the apparatus. An association request may be sent to the first node only when a quantity of associated nodes is less than or equal to the preset second association threshold. The second threshold may limit a quantity of nodes that can be associated with the apparatus. When the second association threshold is exceeded, the apparatus cannot be associated with another node, to avoid affecting communication between the apparatus and another node associated with the apparatus, and ensure stable running of the service provided by the apparatus.

In still another possible implementation of the tenth aspect, the communications unit is further configured to:
receive a first association response from the first node, where the first association response is used to indicate that the first node establishes an association with the second node.

It can be learned that after it is determined that the identity of the first node is trusted, if identity authentication performed by the first node on the second node succeeds, the apparatus receives the first association response from the first node. The association response is used to indicate the apparatus to establish an association with the second node. Further, the first response message may notify the apparatus that the association succeeds and subsequent communication can be performed.

In still another possible implementation of the tenth aspect, the processing unit is further configured to:
reset a second authentication failure counter, where the second authentication failure counter indicates a quantity of verification failures for the first node.

It can be learned that, after it is determined that the identity of the first node is trusted, if identity authentication succeeds, the quantity of verification failures for the first node needs to be reset, to avoid affecting subsequent determining of the identity of the first node, and ensure stable running of the service provided by the apparatus.

In still another possible implementation of the tenth aspect, the processing unit is further configured to:
update a second authentication failure counter if the message integrity check on the first authentication response fails, where the second authentication failure counter indicates a quantity of verification failures for the first node.

Usually, if the message integrity check on the first authentication response fails, it indicates that the first authentication response message is no longer complete or has been modified by the attacker. Therefore, the quantity of verification failures for the first node is updated, and the quantity of verification failures may be used to subsequently determine whether the identity of the first node is trusted.

In still another possible implementation of the tenth aspect, the first authentication request message further includes first identity authentication information. The processing unit is further configured to: if the message integrity check on the first authentication response succeeds, perform verification on the first identity authentication information based on the shared key that is shared with the first node.

The communications unit is further configured to send the first authentication response to the first node if the verification on the first identity authentication information succeeds.

It can be seen that, after it is determined that the identity of the first node is trusted, if the integrity check succeeds, the verification on the identity of the first node is performed based on the shared key that is shared with the first node. Therefore, it is difficult for an attacker to bypass, by modifying an identity such as an identifier, association control performed by the apparatus on the attacker, to prevent the node from establishing an association with an unauthorized attacker, and improve data security of the node.

In still another possible implementation of the tenth aspect, the processing unit is further configured to:
update a second authentication failure counter if the verification on the first identity authentication information fails, where the second authentication failure counter indicates a quantity of verification failures for the first node.

It can be learned that, if the verification on the identity authentication information of the first node fails, the apparatus updates the quantity of identity verification failures for the first node, and the quantity of verification failures may be used to subsequently determine whether an identity of a node is trusted, so that a node that fails to be verified a plurality of times may no longer be determined as trusted. For the node that is not determined as trusted, an association request may no longer be sent to the node, to ensure normal running of a service provided by the node. In still another possible implementation of the tenth aspect, the processing unit is further configured to:
determine that a value of the second authentication failure counter is greater than or equal to a second threshold; and
add the identifier of the first node to the second blacklist.

It can be learned that if the quantity of verification failures for the first node exceeds the preset second threshold, it indicates that the first node fails to be verified a plurality of times, and the first node may be an attacker who frequently sends authentication requests. Therefore, the identifier of the first node is added to the blacklist. After the identifier of the first node is added to the blacklist, the identity of the first node is not determined as trusted, to prevent the apparatus from establishing an association with an unauthorized attacker, and improve data security of the node.

In still another possible implementation of the tenth aspect, a validity period of the second blacklist is predefined or preconfigured second duration.

It can be learned that the predefined or preconfigured second duration in the second blacklist may be considered as the validity period of the blacklist. For example, the second duration of the blacklist may be 10 days, and an identifier of a first node may be removed from the blacklist 10 days after being added to the blacklist.

In still another possible implementation of the tenth aspect, the processing unit is further configured to determine that a value of the second authentication failure counter is less than a second threshold.

The communications unit is further configured to send a second association request to the first node.

It can be learned that, if the verification on the identity authentication information of the first node fails, the apparatus updates the quantity of identity verification failures for the first node, and the quantity of verification failures may be used to subsequently determine whether an identity of a node is trusted. Therefore, it is difficult for an attacker to bypass, by modifying an identity such as an identifier, association control performed by the first node on the attacker, to prevent the apparatus from establishing an association with an unauthorized attacker, and improve data security of the node.

In still another possible implementation of the tenth aspect, the processing unit is further configured to:
determine that a value of the second authentication failure counter is less than a second threshold;
obtain third acknowledgment indication information; and
send a second association request to the first node.

It can be learned that before the second association request is re-sent, acknowledgment indication information needs to be obtained. The third acknowledgment indication information may be indication information obtained based on an acknowledgment operation entered by a user, and the acknowledgment operation may be acknowledgment of output prompt information. For example, the prompt information may be output to remind the user that the verification fails and the association request needs to be re-initiated. After a user acknowledgment operation is received and the third acknowledgment indication information is obtained, the second association request is sent to the first node. In this way, the user verifies an identity of a first node that needs to be re-associated with, so that association with an untrusted node can be avoided, and communication security is ensured.

In still another possible implementation of the tenth aspect, the processing unit is further configured to:
remove the identifier of the first node from the second blacklist if duration in which the identifier of the first node is added to the second blacklist exceeds the second duration, where the second duration is related to a quantity of times that the identifier of the first node is added to the second blacklist or a type of the first node.

The foregoing implementation describes factors related to the validity period of the second blacklist. The validity period of the second blacklist may be related to the quantity of times that the first node is added to the blacklist. A larger quantity of times that a first node is added to the second blacklist indicates longer duration of the first node in the second blacklist. Further optionally, after the quantity of times that the first node is added to the second blacklist exceeds a threshold, the first node may be permanently added to the second blacklist.

In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the second node may further predefine a blacklist validity period corresponding to the first node. Details are not described herein again. In still another possible implementation of the tenth aspect, if the identity of the first node is untrusted, the step of sending a first association request to the first node is not performed.

It can be learned that if the identity of the first node is untrusted, the identity authentication request is no longer sent to the first node, to avoid wasting resources of the node.

According to an eleventh aspect, an embodiment of this application further provides a communications apparatus. The communications apparatus includes at least one processor and a communications interface, and the at least one processor is configured to invoke a computer program stored in at least one memory, so that the apparatus implements the method according to any one of the seventh aspect or the possible implementations of the seventh aspect.

According to a twelfth aspect, an embodiment of this application further provides a communications apparatus. The apparatus includes at least one processor and a communications interface, and the at least one processor is configured to invoke a computer program stored in at least one memory, so that the apparatus implements the method according to any one of the eighth aspect or the possible implementations of the eighth aspect.

According to a thirteenth aspect, an embodiment of this application further provides a communications system. The communications system includes a first node and a second node. The first node is the apparatus described in any one of the third aspect or the possible implementations of the third aspect or any one of the fifth aspect or the possible implementations of the fifth aspect. The second node is the apparatus described in any one of the fourth aspect or the possible implementations of the fourth aspect or any one of the sixth aspect or the possible implementations of the sixth aspect.

According to a fourteenth aspect, an embodiment of this application further provides a communications system. The communications system includes a first node and a second node. The first node is the apparatus described in any one of the ninth aspect or the possible implementations of the ninth aspect, or the eleventh aspect. The second node is the apparatus described in any one of the tenth aspect or the possible implementations of the tenth aspect, or the twelfth aspect.

According to a fifteenth aspect, an embodiment of this application discloses a computer-readable storage medium. The computer-readable storage medium stores a computer program. When the computer program is run on one or more processors, the method according to any one of the first aspect or the possible implementations of the first aspect, the method according to any one of the second aspect or the possible implementations of the second aspect, the method according to any one of the seventh aspect or the possible implementations of the seventh aspect, or the method according to any one of the eighth aspect or the possible implementations of the eighth aspect is performed.

According to a sixteenth aspect, an embodiment of this application discloses a chip system. The chip system includes at least one processor, a memory, and an interface circuit. The interface circuit is configured to provide information input/output for the at least one processor, the memory stores a computer program, and when the computer program is run one or more processors, the method according to any one of the first aspect or the possible implementations of the first aspect, the method according to any one of the second aspect or the possible implementations of the second aspect, the method according to any one of the seventh aspect or the possible implementations of the seventh aspect, or the method according to any one of the eighth aspect or the possible implementations of the eighth aspect is performed

According to a seventeenth aspect, an embodiment of this application discloses a vehicle. The vehicle includes a first node (for example, a vehicle cockpit domain controller CDC). The first node is the apparatus described in any one of the third aspect or the possible implementations of the third aspect or any one of the fifth aspect or the possible implementations of the fifth aspect. Further, the vehicle includes a second node (for example, at least one of modules such as a camera, a screen, a microphone, a speaker, a radar, an electronic key, and a passive entry passive start system controller). The second node is the apparatus described in any one of the fourth aspect or the possible implementations of the fourth aspect or any one of the sixth aspect or the possible implementations of the sixth aspect.

According to an eighteenth aspect, an embodiment of this application discloses a vehicle. The vehicle includes a first node (for example, a vehicle cockpit domain controller CDC). The first node is the apparatus described in any one of the ninth aspect or the possible implementations of the ninth aspect, or the eleventh aspect. Further, the vehicle includes a second node (for example, at least one of modules such as a camera, a screen, a microphone, a speaker, a radar, an electronic key, and a passive entry passive start system controller). The second node is the apparatus described in any one of the tenth aspect or the possible implementations of the tenth aspect, or the twelfth aspect.

### BRIEF DESCRIPTION OF DRAWINGS

The following describes accompanying drawings used in embodiments of this application.
FIG. 1 is a schematic diagram of an architecture of a communications system according to an embodiment of this application;
FIG. 2 is a schematic diagram of an application scenario of an association control method according to an embodiment of this application;
FIG. 3 is a schematic flowchart of an association control method according to an embodiment of this application;
FIG. 4 is a schematic diagram of a blacklist and a whitelist according to an embodiment of this application;
FIG. 5A, FIG. 5B, and FIG. 5C are a schematic flowchart of another association control method according to an embodiment of this application;
FIG. 6A, FIG. 6B, and FIG. 6C are a schematic flowchart of still another association control method according to an embodiment of this application;
FIG. 7 is a schematic diagram of a structure of still another association control apparatus according to an embodiment of this application;
FIG. 8 is a schematic diagram of a structure of still another association apparatus according to an embodiment of this application;
FIG. 9 is a schematic diagram of a structure of a communications apparatus according to an embodiment of this application;
FIG. 10 is a schematic diagram of a structure of another communications apparatus according to an embodiment of this application;
FIG. 11 is a schematic diagram of a structure of another association control apparatus according to an embodiment of this application;
FIG. 12 is a schematic diagram of a structure of another association apparatus according to an embodiment of this application;
FIG. 13 is a schematic diagram of a structure of still another communications apparatus according to an embodiment of this application; and
FIG. 14 is a schematic diagram of a structure of yet another communications apparatus according to an embodiment of this application.

### DESCRIPTION OF EMBODIMENTS

The following describes embodiments of this application with reference to the accompanying drawings in embodiments of this application. It should be noted that in this application, the word such as "example" or "for example" is used to represent giving an example, an illustration, or a description. Any embodiment or design solution described by using "example" or "for example" in this application shall not be construed as being more preferred or more advantageous than another embodiment or design solution. Use of the word such as "example" or "for example" is intended to present a related concept in a specific manner.

The following first briefly describes related technologies and technical terms in this application for ease of understanding.

### 1. Node (node)

The node is an electronic device with a data receiving and sending capability. For example, the node may be a vehicle cockpit domain (Cockpit Domain) device, or a module (one or more of modules such as a cockpit domain controller (cockpit domain controller, CDC), a camera, a screen, a microphone, a sounder, an electronic key, and a passive entry passive start system controller) in the vehicle cockpit domain device. In a specific implementation process, the node may be a data transit device, such as a router, a repeater, a bridge, or a switch; or may be a terminal device, such as various types of user equipment (user equipment, UE), a mobile phone (mobile phone), a tablet computer (pad), a desktop computer, a headset, or a speaker; or may include a machine intelligent device, such as a self-driving (self-driving) device, a transportation safety (transportation safety) device, a virtual reality (virtual reality, VR) terminal device, an augmented reality (augmented reality, AR) terminal device, a machine type communication (machine type communication, MTC) device, an industrial control (industrial control) device, a telemedicine (remote medical) device, a smart grid (smart grid) device, or a smart city (smart city) device; or may include a wearable device (such as a smartwatch, a smart band, or a pedometer) or the like. In some technical scenarios, a name of a device having a similar data receiving and sending capability may not be "node". However, for ease of description, electronic devices having data receiving and sending capabilities are collectively referred to as nodes in embodiments of this application.

### 2. Shared key (shared key, SK)

In a communication process, data is transmitted between communication nodes. If data needs to be kept confidential, the data needs to be encrypted by using a key. The shared key is a same secret value stored in nodes of both communication parties. The shared key may be predefined or preconfigured in the nodes of both the communication parties, or may be generated by both the communication parties by using a same key obtaining method, or may be sent by a trusted device (such as a KDC) to a first node and a second node.

For example, a cockpit domain controller (cockpit domain controller, CDC) of a vehicle and a vehicle-mounted radar device are two nodes that can communicate with each other. When deploying the CDC and the vehicle-mounted radar, a worker of an automobile factory has preconfigured a shared key between the CDC and the vehicle-mounted radar. By using the shared key, security of communication between the CDC of the vehicle and the vehicle-mounted radar can be ensured.

For another example, a cockpit domain controller (cockpit domain controller, CDC) of a vehicle and a mobile phone of a vehicle owner are two nodes that can communicate with each other. When the vehicle owner needs to be associated with the CDC of the vehicle by using the mobile phone, the vehicle owner may obtain a shared key by using a key obtaining method, for example, a key is generated by exchanging key agreement algorithm parameters between the mobile phone and the CDC of the vehicle by using a key agreement algorithm. When the mobile phone subsequently requests again to be associated with the CDC of the vehicle, the shared key may be used to verify identities of the two nodes.

### 3. Key derivation

Key derivation is a process of deriving one or more secret values from one secret value. An algorithm used to derive a key is referred to as a key derivation function (key derivation function, KDF), and is also referred to as a key derivation algorithm. For example, a new secret value DK derived from a secret value Key may be represented as follows: DK = KDF(Key).

Common key derivation algorithms include a password-based key derivation function (password-based key derivation function, PBKDF), a scrypt (scrypt) algorithm, and the like. PBKDF algorithms further include a first-generation PBKDF1 and a second-generation PBKDF2. Optionally, for some KDF algorithms, in a key derivation process, a hash algorithm is used to perform hash change on an entered secret value. Therefore, in a KDF function, an algorithm identifier may be further received as an input, to indicate a specific hash algorithm to be used.

In addition, it should be noted that "authentication", "check", and "verification" mentioned in embodiments of this application may mean whether the check is correct or reasonable. In embodiments of this application, "association" indicates a process in which a first node establishes a connection to a second node. In some specific technical scenarios, "association" may alternatively be described as "access".

The following describes a system architecture and a service scenario in the embodiments of this application. It should be noted that the system architecture and the service scenario described in this application are intended to describe the technical solutions in this application more clearly, and do not constitute a limitation on the technical solutions provided in this application. A person of ordinary skill in the art may know that with evolution of the system architecture and emergence of new service scenarios, the technical solutions provided in this application are also applicable to similar technical problems.

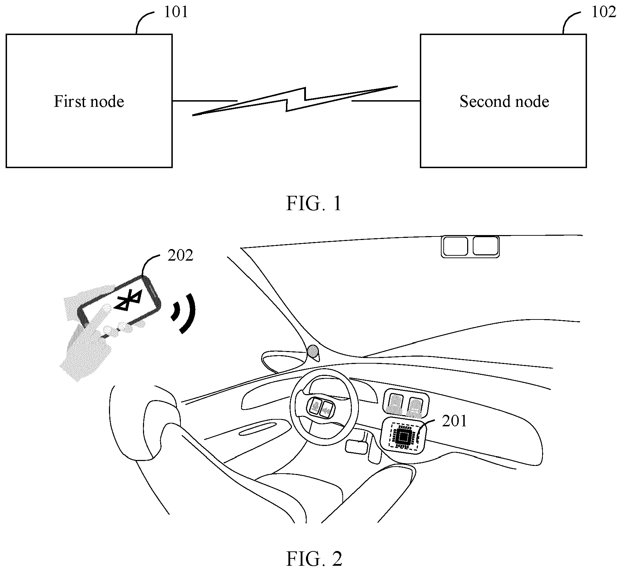

FIG. 1 is a schematic diagram of an architecture of a communications system according to an embodiment of this application. The communications system includes a first node 101 and a second node 102. The second node 202 may request to be associated with the first node 101. After the association succeeds, the first node 101 may communicate with the second node 102 via a data link. Optionally, the data link used for communication between the first node 101 and the second node 102 may include various types of connection media, for example, a wireless link, which may be specifically a wireless fidelity (wireless fidelity, Wi-Fi) technology, Bluetooth, Zigbee (zigbee), another wireless link (such as a universal wireless short-range transmission technology), or the like. For another example, the data link is a wired link, such as a fiber link.

Optionally, the first node 101 may be a communication initiator, and may be referred to as a primary node or an access point (access point, AP). Correspondingly, the second node 102 is a communication receiver, and may be referred to as a secondary node.

The first node 101 and the second node 102 may be devices of a same type, or may be devices of different types. FIG. 2 is a schematic diagram of an application scenario of an association control method according to an embodiment of this application. A cockpit domain controller (cockpit domain controller, CDC) 201 is a control center in a smart cockpit device, and may be considered as the first node 101. A smartphone 202 is a device with a data receiving and sending capability, and may be considered as the second node 102. The CDC 201 may be associated with another Bluetooth device through Bluetooth. The smartphone 202 supports a Bluetooth function, and therefore, may request to be associated with the CDC 201.

In an existing communication process, a node is vulnerable to an attack from an attacker. For example, the attacker may forge an identity of the second node, and request to be associated with the first node. If the attacker successfully associates with the first node, data security of the first node is threatened. Especially in a vehicle communication process, if the CDC 201 receives an association of the attacker, vehicle data is easily leaked, or even attacked by the attacker, endangering driving safety. For another example, the attacker sends a large number of request frames to the node. When the node receives the large number of request frames, and a processing capability that the node can bear is exceeded, the node breaks down and cannot continue providing a normal service, which affects communication between another node and the node. To resolve this problem, embodiments of this application provide the following association control methods.

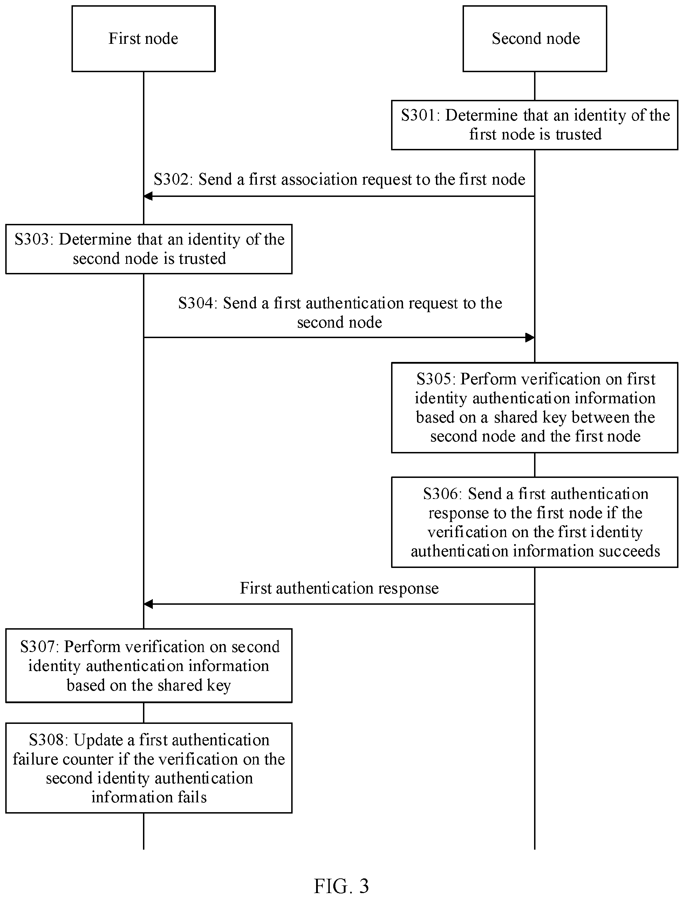

FIG. 3 is a schematic flowchart of an association control method according to an embodiment of this application. The association control method may be implemented based on the communications system shown in FIG. 1. The method includes at least the following steps.

Step S301: A second node determines that an identity of a first node is trusted.

Specifically, the second node may determine that the identity of the first node is trusted by using at least the following three methods.

Method 1: Determine, by using a blacklist and/or a whitelist, that the identity of the first node is trusted.

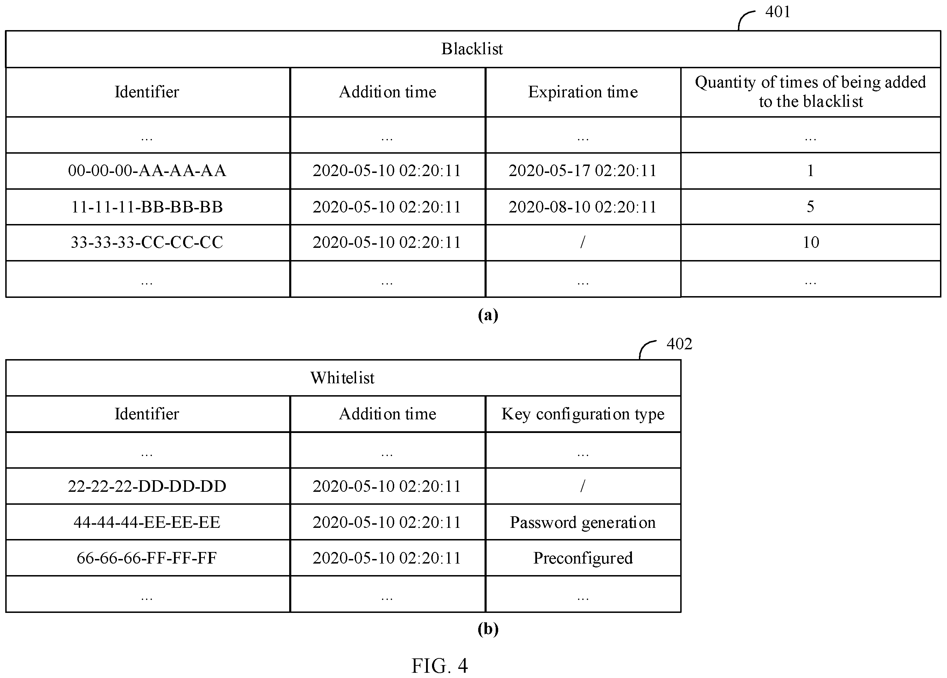

FIG. 4 is a schematic diagram of a blacklist and a whitelist according to an embodiment of this application. A blacklist 401 and a whitelist 402 store identifiers of a plurality of nodes. The identifier of the node may be an identification (identification, ID), a media access control (media access control, MAC) address, a domain name, a domain address, or another user-defined identifier of the node. For example, an identifier "00-00-00-AA-AA-AA" in the blacklist 401 is an identifier of a node. Optionally, the blacklist may further include one or more of an addition time, an expiration time, a quantity of times of being added to the blacklist, and the like of the identifier of the node. Correspondingly, the whitelist may also include one or more of an addition time, an expiration time, a key configuration type, and the like of the identifier of the node. For ease of description, in embodiments of this application, the blacklist in the second node is referred to as a second blacklist, and the whitelist in the second node is referred to as a second whitelist. It may be understood that an identifier of a node cannot be in both the second whitelist and the second blacklist.

The second node may determine, by determining whether an identifier of the first node is in the second whitelist or the second blacklist, whether the identity of the first node is trusted. Specifically, there may be the following three implementations.

Implementation 1: If the second node determines that the identifier of the first node is in the second whitelist, it may indicate that the identity of the first node is trusted.

Implementation 2: If the second node determines that the identifier of the first node is not in the second blacklist, it may indicate that the identity of the first node is trusted.

Optionally, the second node may obtain the identifier of the first node by obtaining input information, or obtain the identifier of the first node by receiving a message broadcast by the first node. For example, the first node may broadcast a message, and the broadcast message may include the identifier of the first node. After receiving the broadcast message, the second node may determine, based on the identifier of the first node, the second blacklist, or the second whitelist, whether the identity of the first node is trusted. Optionally, the second node stores a correspondence between an identifier of one or more other nodes and a key configuration type, and the key configuration type may be a preconfigured type and a password generation type. The preconfigured type indicates that a shared key between the first node and the second node is preconfigured or predefined. For example, when assembling a vehicle, a worker of a host factory preconfigures a shared key between a CDC and a microphone. The password generation type may also be referred to as a "password access type", indicating that the shared key between the first node and the second node is a shared key generated based on a password when an association is established in a password access manner. Further, nodes of different key configuration types may have different manners of determining that an identity is trusted. Specifically, the following two implementations are further included.

Implementation 3: For the first node whose key configuration type is pre-configured, if it is determined that the identifier of the first node is in the second whitelist, it indicates that the identity of the node is trusted. Optionally, if the identifier of the first node is in the second blacklist, it indicates that the identity of the first node is untrusted. For example, Table 1 shows a possible correspondence between a node identifier and a key configuration type according to an embodiment of this application. If a node A1 whose identifier is "66-66-66-FF-FF-FF" requests association, because a key configuration type of the node A1 is a preconfigured type, and it can be learned by referring to the whitelist 402 that the identifier of the node A1 is in the whitelist 402, it can be determined that the identity of the node A1 is trusted.

**Table 1 Correspondence between a node identifier and a key configuration type**

| Identifier | Key configuration type | Shared key |
|---|---|---|
| 66-66-66-FF-FF-FF | Preconfigured | PSK1 |
| 00-00-00-AA-AA-AA | Password generation | PSK2 |
| 44-44-44-EE-EE-EE | Password generation | PSK3 |
| 77-77-77-GG-GG-GG | Password generation | PSK4 |

Implementation 4: For the first node whose key configuration type is password generation, if it is confirmed that the identifier of the first node is not in the second blacklist, it indicates that the identity of the first node is trusted. For example, refer to Table 1. If a node A2 whose identifier is "77-77-77-GG-GG-GG" requests association, because a key configuration type of the node A2 is a password generation type, and it can be learned by referring to FIG. 4 that the identifier of the node A2 is not in the blacklist 401, it can be determined that the identity of the node A2 is trusted.

Method 2: Determine, by obtaining second acknowledgment indication information, that the identity of the first node is trusted.

The second node obtains the second acknowledgment indication information. The second acknowledgment indication information indicates that the identity of the first node is trusted. The second acknowledgment indication information is indication information obtained based on an acknowledgement operation entered by a user, and the acknowledgement operation may be an acknowledgement for output prompt information. For example, there is an implementation as follows.

Implementation 5: The second node outputs second prompt information to remind the user that the second node needs to request to be associated with the first node. After receiving an acknowledgement operation of the user and obtaining the second acknowledgment indication information, the second node may determine that the identity of the first node is trusted. Further optionally, if the second node receives a rejection operation of the user after outputting the second prompt information, the second node may determine that the identity of the first node is untrusted.

Method 3: Determine, by using the blacklist and/or the whitelist and acknowledgement indication information, that the identity of the first node is trusted.

When whether the identity of the first node is trusted cannot be determined by using the blacklist and the whitelist, the second node may determine, by using the acknowledgement indication information, that the identity of the first node is trusted. Specifically, when the identifier of the first node is not in the second blacklist, or when the identifier of the first node is neither in the second blacklist nor in the second whitelist, the second acknowledgment indication information is obtained. The second acknowledgment indication information indicates that the identity of the first node is trusted. Optionally, in a specific implementation process, different key configuration types may further correspond to different processing, for example, there is an implementation as follows.

Implementation 6: For the first node whose key configuration type is password generation, if the identifier of the first node is not in the second blacklist or the second whitelist, the second acknowledgment indication information is obtained. The acknowledgment indication information indicates that the identity of the first node is trusted. Optionally, if no second acknowledgment indication information is obtained, it may be determined that the identity of the second node is untrusted.

Optionally, the second node may predefine or configure a second association threshold. The second association threshold is used to indicate a quantity of currently associated nodes. The second node may determine, before or after determining that the identity of the first node is trusted, or may periodically or aperiodically determine the association quantity of the second node. That is, the method includes the following steps: determining whether a quantity of nodes currently associated with the second node is less than or equal to (or less than) the second association threshold, or determining whether a quantity of nodes currently associated with the second node is greater than (or greater than or equal to) the second association threshold. If the quantity of currently associated nodes is greater than (or greater than or equal to) the second association threshold, the second node may not send an association request to the first node or may subsequently cancel an association with the first node, to avoid affecting communication between the second node and another node, and ensure stable running of a service provided by the second node.

Step S302: The second node sends a first association request to the first node.

Specifically, the second node may send the first association request message to the first node through a wireless link (for example, one of Wi-Fi, Bluetooth, Zigbee, or another short-range wireless link) or a wired link (for example, an optical fiber).

Correspondingly, the first node receives the first association request from the second node. Optionally, the first node may predefine or configure a first association threshold. The first association threshold is used to indicate a quantity of currently associated nodes. The first node may determine, before or after receiving the first association request message from the second node, or may periodically or aperiodically determine the quantity of nodes currently associated with the first node. That is, the method may include the following steps: determining whether the quantity of nodes currently associated with the first node is less than or equal to (or less than) the first association threshold, or determining whether the quantity of nodes currently associated with the first node is greater than (or greater than or equal to) the first association threshold. The first association threshold may limit a bearing capacity of the service that can be provided by the first node. When the quantity of nodes associated with the first node is greater than (or greater than or equal to) the first association threshold, the first node may no longer receive or process an association request, and therefore, does not receive or process the first association request, to avoid affecting communication between the first node and another associated node, and ensure stable running of the service provided by the first node.

Optionally, the first association request message may include at least one of an identity of the second node, a fresh parameter obtained (or generated) by the second node, or the like. The fresh parameter may include at least one of a nonce (number once, NONCE), a counter (counter), a sequence number (number), and the like. For ease of description, the fresh parameter in the first association request message is referred to as a first fresh parameter.

Step S303: The first node determines that an identity of the second node is trusted.

Specifically, the first node may determine that the identity of the second node is trusted in at least the following three manners.

Method 1: Determine, by using a blacklist and/or a whitelist, that the identity of the second node is trusted.

For ease of description, in embodiments of this application, the blacklist in the first node is referred to as a first blacklist, and the whitelist in the first node is referred to as a first whitelist. It may be understood that, in the first node, an identifier of a node cannot be in both the first whitelist and the first blacklist.

The first node may determine, by determining whether an identifier of the second node is in the first whitelist or the first blacklist, whether the identity of the second node is trusted. Specifically, there may be the following two cases.

Case 1: If the first node determines that the identifier of the second node is in the first whitelist, it may indicate that the identity of the second node is trusted.

Case 2: If the first node determines that the identifier of the second node is not in the first blacklist, it may indicate that the identity of the second node is trusted. Optionally, if the identifier of the second node is in the first blacklist, it indicates that the identity of the second node is untrusted, and the first node may discard the first association request, or ignore the request and skip subsequent steps.

Optionally, the first association request message includes the identifier of the second node, and the first node may obtain the identifier of the second node by receiving the first association request message.

Optionally, the first node stores a correspondence between an identifier of one or more other nodes and a key configuration type, and the key configuration type may be a preconfigured type and a password generation type. The preconfigured type indicates that a shared key between the first node and the second node is preconfigured or predefined. For example, when assembling a vehicle, a worker of a host factory preconfigures a shared key between a CDC and a microphone. The password generation type indicates that the shared key between the first node and the second node is a shared key generated based on a password after an association is established in a password access manner. Further, nodes of different key configuration types may have different manners of determining that an identity is trusted. During specific implementation, there may be the following two cases.

Case 3: For the second node whose key configuration type is pre-configured, if it is determined that the identifier of the second node is in the first whitelist, it indicates that the identity of the second node is trusted.

Case 4: For the second node whose key configuration type is password generation, if it is determined that the identifier of the second node is not in the first blacklist, it indicates that the identity of the node is trusted. Optionally, if the identifier of the node is in the first blacklist, the identity of the second node is untrusted, and the first node may discard the first association request, or ignore the request and skip subsequent steps.

Manner 2: Determine, by obtaining first acknowledgment indication information, that the identity of the second node is trusted.

The first node obtains the first acknowledgment indication information. The first acknowledgment indication information indicates that the identity of the second node is trusted. Specifically, the first acknowledgment indication information is indication information obtained based on an acknowledgement operation entered by a user, and the acknowledgement operation may be an acknowledgement for output prompt information. For example, there is a case as follows.

Case 5: The first node outputs first prompt information to remind the user that the second node needs to be associated with. After receiving an acknowledgement operation of the user and obtaining the first acknowledgment indication information, the first node may determine that the identity of the second node is trusted. Further optionally, if the first node receives a rejection operation of the user after outputting the first prompt information, the first node may determine that the identity of the second node is untrusted, and the first node may discard the first association request, or ignore the request and skip subsequent steps.

Manner 3: Determine, by using the blacklist and/or the whitelist and acknowledgment indication information, that the identity of the second node is trusted.

When whether the identity of the second node is trusted cannot be determined by using the blacklist and the whitelist, the first node may determine, by using the acknowledgement indication information, that the identity of the second node is trusted. Specifically, when the identifier of the second node is not in the first blacklist, or when the identifier of the second node is neither in the first blacklist nor in the first whitelist, the first acknowledgment indication information is obtained. The first acknowledgment indication information indicates that the identity of the second node is trusted. Optionally, in a specific implementation process, different key configuration types may further correspond to different processing, for example, there is a case as follows.

Case 6: For the second node whose key configuration type is password generation, if the identifier of the second node is not in the first blacklist or the first whitelist, the first acknowledgment indication information is obtained. The acknowledgment indication information indicates that the identity of the second node is trusted. Optionally, if the first acknowledgment indication information is not obtained, it may be determined that the identity of the second node is untrusted, and the first node may discard the first association request, or ignore the request and skip subsequent steps.

Step S304: The first node sends a first authentication request to the second node.

Specifically, the first authentication request may include first identity authentication information. The first identity authentication information is generated by the first node based on a shared key between the first node and the second node. The shared key may be a pre-shared key PSK between the first node and the second node.

For example, the first node may generate the first identity authentication information AUTHa based on the pre-shared key PSK by using a KDF, for example, AUTHa = KDF(PSK).

Optionally, when the first association request includes the first fresh parameter, the first identity authentication information may be generated by the first node based on the shared key and the first fresh parameter. For example, the first node generates the first identity authentication information AUTHa based on the pre-shared key PSK and the first fresh parameter NONCEe by using a KDF, for example, AUTHa = KDF(PSK, NONCEe).

Optionally, during actual processing, parameters used by the first node to generate the first identity authentication information may further include other information. For example, the generated first identity authentication information AUTHa may satisfy: AUTHa = KDF(PSK, first association request).

Optionally, the first authentication request further includes a second fresh parameter. The second fresh parameter may be at least one of a random number, a nonce (number once, NONCE), a counter (counter), a sequence number (number), or the like that is obtained (or generated) by the second node. Further optionally, when the first authentication request includes the second fresh parameter, the first identity authentication information AUTHa generated by the first node may further satisfy: AUTHa = KDF(PSK, NONCEa, first association request), where NONCEa is the second fresh parameter in the first authentication request.

Optionally, the first authentication request may further include first integrity check data and the like. The first integrity check data is check data generated according to a symmetric key and an integrity protection algorithm, and is used by the second node to perform message integrity check on the first authentication request. During specific implementation, the check data may also be referred to as a message authentication code (message authentication code, MAC).

Step S305: The second node performs verification on the first identity authentication information based on the shared key between the second node and the first node.

Specifically, the first identity authentication information is generated by the first node based on the shared key between the first node and the second node. Therefore, the second node also has the shared key and may verify, based on the shared key, whether the first identity authentication information is correct.

In an optional solution, according to a protocol specification, if the first node uses a specific parameter to generate the first identity authentication information, the second node should also use the same parameter to generate check information. If the check information is the same as the first identity authentication information, it is considered that the verification succeeds. For example, the first identity authentication information is generated by using a KDF. Therefore, the second node may use the KDF to generate the check information, which is also referred to as a check value check1. The second node verifies, by using the check information, whether the first identity authentication information is correct. The following uses an example for description.

For example, if the first identity authentication information AUTHa is KDF(PSK, NONCEe), the second node obtains, based on the PSK and the first fresh parameter NONCEe by using the KDF, that the check value check1 = KDF(PSK, NONCEe). If the check value check1 is the same as AUTHa, the verification succeeds.

Optionally, before or after verifying the first identity authentication information based on the shared key between the second node and the first node, the second node performs message integrity check on the first authentication request to prevent content in the first authentication request from being tampered with by an attacker. For example, the first authentication request includes the first integrity check data, so that the second node may perform message integrity check on the first authentication request based on the first integrity check data.

Optionally, if the message integrity check performed on the first authentication request fails, the second node may update a quantity of integrity check failures for the first node. The quantity of integrity check failures may be used to subsequently determine whether the identity of the first node is trusted. Further optionally, there may be the following two cases in which the second node updates the quantity of integrity check failures for the first node:

Case 1: The second node uses a second authentication failure counter to indicate the quantity of verification failures for the first node. Verification on the first node may include message integrity check and identity authentication. Therefore, if the message integrity check on the first authentication request fails or the identity authentication on the second node fails, the second node may increase the second authentication failure counter by 1. The second authentication failure counter may be used to subsequently determine whether the identity of the first node is trusted.

Case 2: The second node uses a second integrity check counter to indicate the quantity of integrity check failures for the first node. If the message integrity check on the first authentication request fails, the second node may increase the second integrity check counter by 1. The second integrity check counter may be used to subsequently determine whether the identity of the first node is trusted.

Step S306: The second node sends a first authentication response to the first node if the verification performed by the second node on the first identity authentication information succeeds.

Specifically, the first authentication response may include second identity authentication information. The second identity authentication information is generated by the second node based on the shared key between the second node and the second node. The shared key may be a pre-shared key PSK between the first node and the second node.

For example, the second node may generate the second identity authentication information AUTHe based on the pre-shared key PSK by using the KDF, for example, AUTHe = KDF(PSK).

Optionally, when the first authentication request includes the second fresh parameter, the second identity authentication information may be generated by the second node based on the shared key and the second fresh parameter. For example, the second node generates the second identity authentication information AUTHe based on the pre-shared key PSK and the second fresh parameter NONCEa by using the KDF, for example, AUTHe = KDF(PSK, NONCEa).

Optionally, during actual processing, parameters used by the second node to generate the second identity authentication information may further include other information. For example, the generated second identity authentication information AUTHe may satisfy: AUTHe = KDF(PSK, first authentication request).

Optionally, when the first association request may further include the first fresh parameter, the second identity authentication information AUTHe generated by the second node may further satisfy: AUTHe = KDF(PSK, NONCEe, first authentication request), where NONCEe is the first fresh parameter in the first association request.

Optionally, the first association request may further include second integrity check data and the like. The second integrity check data is check data generated according to a symmetric key and an integrity protection algorithm, and is used by the first node to perform message integrity check on the first association request. During specific implementation, the check data may also be referred to as a message authentication code (message authentication code, MAC).

Step S307: The first node performs verification on the second identity authentication information based on the shared key.

Specifically, the second identity authentication information is generated based on the shared key between the first node and the second node. Therefore, the first node also has the shared key and may verify, based on the shared key, whether the second identity authentication information is correct.

In an optional solution, according to a protocol specification, if the second node uses a specific parameter to generate the second identity authentication information, the first node should also use the same parameter to generate check information. If the check information is the same as the first identity authentication information, it is considered that the verification succeeds. For example, the second identity authentication information is generated by using the KDF. Therefore, the first node may use the KDF to generate the check information, which is also referred to as a check value check2. Then, the first node verifies, by using the check information, whether the second identity authentication information is correct. The following uses an example for description.

For example, if the second identity authentication information AUTHe is KDF(PSK, NONCEa), the first node obtains, based on the PSK and the second fresh parameter NONCEa by using the KDF, that the check value check2 = KDF(PSK, NONCEa). If the check value check2 is the same as AUTHe, the verification succeeds. If the check value check2 is different from AUTHe, the verification fails.

Optionally, before or after verifying the second identity authentication information based on the shared key, the first node performs message integrity check on the first authentication response to prevent content in the first authentication response from being tampered with by an attacker. Specifically, the first authentication response includes the second integrity check data, so that the first node may perform message integrity check on the first authentication response based on the second integrity check data.

Optionally, if the message integrity check performed on the first authentication response fails, the first node may update a quantity of integrity check failures for the second node. The quantity of integrity check failures may be used to subsequently determine whether the identity of the second node is trusted. Further optionally, there may be the following two cases in which the first node updates the quantity of integrity check failures for the second node:
Case 1: The first node uses a first authentication failure counter to indicate the quantity of verification failures for the second node. Verification on the second node includes message integrity check and identity authentication. Therefore, if the message integrity check on the first authentication response fails or the identity authentication on the second node fails, the first node may increase the first authentication failure counter by 1. The first authentication failure counter may be used to subsequently determine whether the identity of the second node is trusted.
Case 2: The first node uses a first integrity check counter to indicate the quantity of integrity check failures for the second node. If the message integrity check on the first authentication response fails, the first node may increase the first integrity check counter by 1. The first integrity check counter may be used to subsequently determine whether the identity of the second node is trusted.

Step S308: The first node updates the first authentication failure counter if the verification performed by the first node on the second identity authentication information fails.

Specifically, the first authentication failure counter indicates the quantity of verification failures for the second node. For example, if the verification on the second identity authentication information fails, the first authentication failure counter may be increased by 1, and the quantity of verification failures may be used to subsequently determine whether the identity of the second node is trusted.

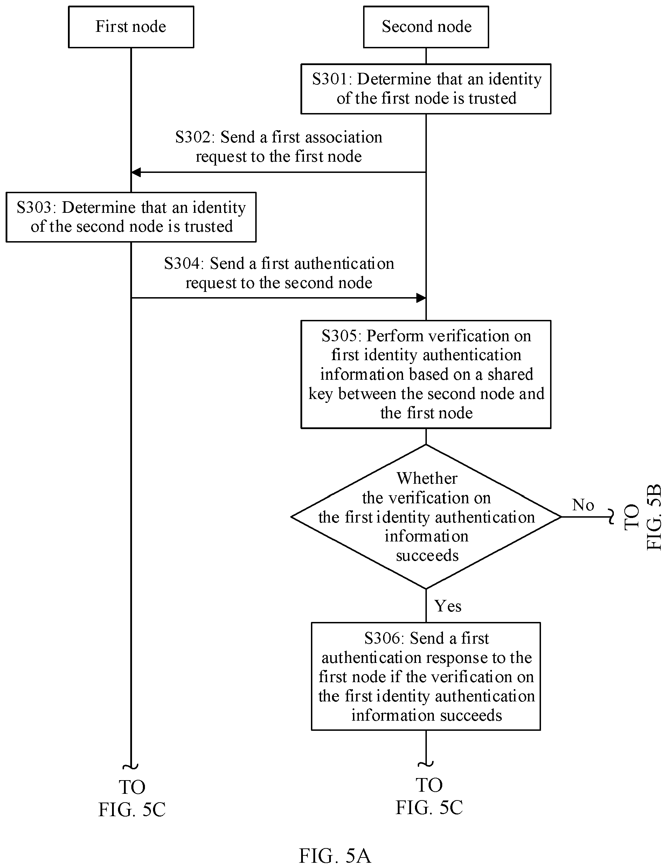

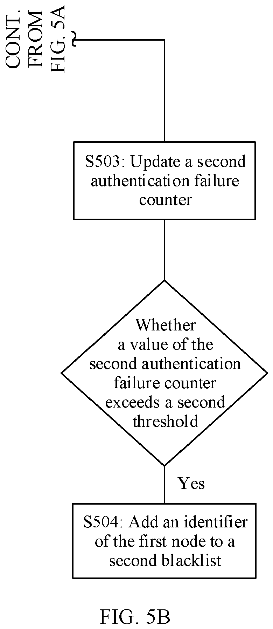

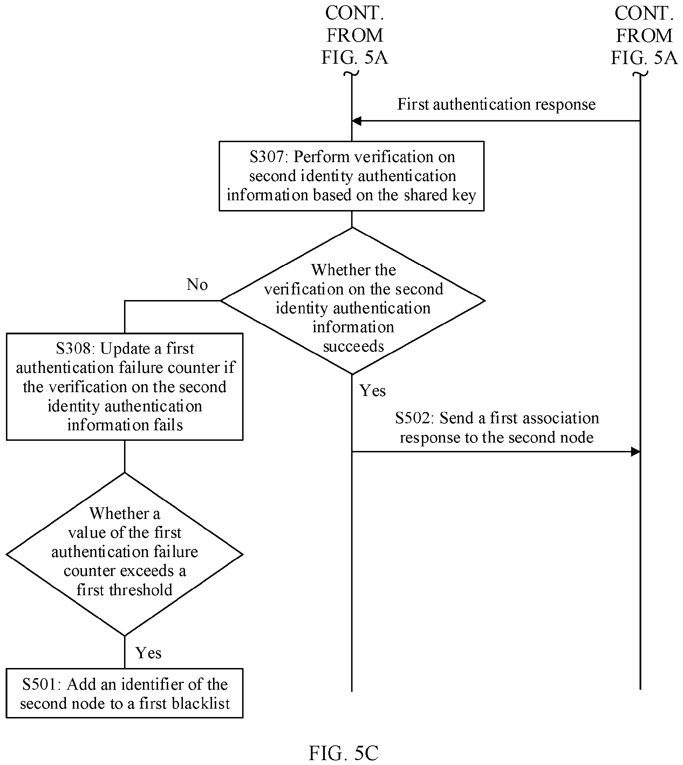

Optionally, the association control method in this embodiment of this application may further include step S501 shown in FIG. 5A, FIG. 5B, and FIG. 5C. Step S501 is specifically as follows.

Step S501: The first node adds the identifier of the second node to the first blacklist if a value of the first authentication failure counter exceeds a first threshold.

Specifically, the first authentication failure counter is used to indicate the quantity of verification failures for the second node, and the value that exceeds the first threshold may be greater than or equal to the first threshold. If the value of the first authentication failure counter exceeds the first threshold, it indicates that the second node fails to be verified a plurality of times. Therefore, the second node may be an attacker who frequently sends association requests, and the identifier of the second node is added to the first blacklist. After the identifier of the second node is added to the first blacklist, the identity of the second node is not determined as trusted, to prevent the node from establishing an association with an unauthorized attacker, and improve data security of the node. It may be understood that an identifier of a node cannot be in both the first blacklist and the first whitelist. Therefore, when the identifier of the second node is added to the first blacklist, if the identifier of the second node is in the first whitelist, the identifier of the first node needs to be removed from the first whitelist.

Optionally, a validity period of the first blacklist is predefined or preconfigured first duration. For example, the first duration of the first blacklist may be 20 days, and the identifier of the second node may be removed from the blacklist 20 days after being added to the first blacklist.

Optionally, if duration in which the identifier of the second node is added to the first blacklist exceeds the first duration, the identifier of the second node is removed from the first blacklist. The first duration is related to a quantity of times that the identifier of the second node is added to the first blacklist and a device type of the second node. Specifically, the validity period of the first blacklist may be related to the quantity of times that the second node is added to the first blacklist. A larger quantity of times that a second node is added to the first blacklist indicates longer duration of the second node in the first blacklist. Further optionally, after the quantity of times that the second node is added to the first blacklist exceeds a specified value (for example, exceeds 10 times), the second node may be permanently added to the first blacklist and cannot be removed. In addition, the validity period of the first blacklist may be related to the device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the first node may further predefine a blacklist validity period corresponding to the second node. Details are not described herein again.

It should be noted that a quantity of specific device types is not limited in this application. Based on actual requirements, a plurality of types of devices may be defined, and corresponding blacklists and validity periods of the blacklists may be set. Specifically, the first blacklist may alternatively include a plurality of groups of blacklists, which are respectively used to perform more specific and refined device management.

Optionally, the association control method in this embodiment of this application may further include step S502 shown in FIG. 5A, FIG. 5B, and FIG. 5C. Step S502 is specifically as follows.

Step S502: The first node sends a first association response to the second node if the verification on the second identity authentication information succeeds.

Specifically, after it is determined that the identity of the second node is trusted, if identity authentication succeeds, the first node may send the first association response to the second node. The first association response is used to indicate that the first node establishes an association with the second node. Further, the first response message may be used to notify the second node that the association succeeds and communication can be performed.

Optionally, the association control method in this embodiment of this application may further include step S503 or step 503 and step 504 shown in FIG. 5A, FIG. 5B, and FIG. 5C. Step 503 and step 504 are specifically as follows.

Step S503: The second node updates the second authentication failure counter if the verification on the first identity authentication information fails.

Specifically, the second authentication failure counter indicates the quantity of verification failures for the first node. If the verification on the identity authentication information of the first node fails, the second authentication failure counter may be increased by 1. The second authentication failure counter may be used to subsequently determine whether the identity of the first node is trusted.

Step S504: The second node adds the identifier of the first node to the second blacklist if a value of the second authentication failure counter exceeds a second threshold.

Specifically, if the quantity of verification failures for the first node exceeds the preset second threshold, it indicates that the first node fails to be verified a plurality of times. Therefore, the first node may be an attacker who frequently sends authentication requests, and the identifier of the first node is added to the second blacklist. After the identifier of the first node is added to the second blacklist, the identity of the first node is not determined as trusted, to prevent the second node from establishing an association with an unauthorized attacker, and improve data security of the second node. It may be understood that the identifier of the first node cannot be in both the second blacklist and the second whitelist. Therefore, when the identifier of the first node is added to the second blacklist, if the identifier of the first node is in the second whitelist, the identifier of the first node needs to be removed from the first whitelist.

Optionally, a validity period of the second blacklist is predefined or preconfigured second duration. The second duration may be considered as a validity period of a blacklist. For example, the second duration of the second blacklist may be 10 days, and an identifier of a first node may be removed from the second blacklist 10 days after being added to the second blacklist.

Optionally, the second duration is related to at least one of a quantity of times that the identifier of the first node is added to the second blacklist or a type of the first node. The validity period of the second blacklist may be related to the quantity of times that the first node is added to the blacklist. A larger quantity of times that a node is added to the second blacklist indicates longer duration of the node in the second blacklist. Further optionally, after the quantity of times that the identifier of the first node is added to the second blacklist exceeds a specified value (for example, exceeds 15 times), the first node may be permanently added to the second blacklist and cannot be removed. In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the second node may further predefine a blacklist validity period corresponding to the first node. Details are not described herein again.

Optionally, if determining that the value of the second authentication failure counter is less than the second threshold, the second node may send a second association request to the first node. Specifically, in a process of verifying the identity authentication information, because some parameters are lost or incorrectly transmitted in a transmission process, verification of the identity authentication information may also fail. Therefore, if the quantity of verification failures for the first node does not exceed the preset second threshold, an association request may be re-sent to the first node to request to establish an association with the first node. In this way, system robustness is improved, and stable running of the service provided by the node is ensured.

Optionally, before sending the second association request, the second node may obtain third acknowledgment indication information. The third acknowledgment indication information may be indication information obtained based on an acknowledgment operation entered by a user, and the acknowledgment operation may be acknowledgment of output prompt information. For example, the second node may output the prompt information to remind the user that the verification fails and the association request needs to be re-initiated. After receiving a user acknowledgment operation and obtaining the third acknowledgment indication information, the second node sends the second association request to the first node. In this way, the user verifies an identity of a first node that needs to be re-associated with, so that association with an untrusted node can be avoided, and communication security is ensured.

In the embodiment shown in FIG. 3 or FIG. 5A, FIG. 5B, and FIG. 5C, after it is determined that the identity of the second node is trusted, the identity of the second node is verified based on the shared key that is shared with the second node. In this way, even if an attacker bypasses a step of "determining that an identity is trusted" by modifying an identifier, because it is difficult to forge identity authentication information, identity authentication performed by the first node on the attacker still cannot succeed. Therefore, the node is prevented from establishing an association with an unauthorized attacker, and data security of the node is improved.

Further, if the verification fails, the quantity of verification failures is updated. The quantity of verification failures may be used to subsequently determine whether the identity of the second node is trusted, so that a node that fails to be verified a plurality of times may no longer be determined as trusted. For the node that is not determined as trusted, an association request of the node may no longer be processed (for example, sending an authentication request), to prevent the node from breaking down due to processing of a large number of requests and ensure normal running of a service.

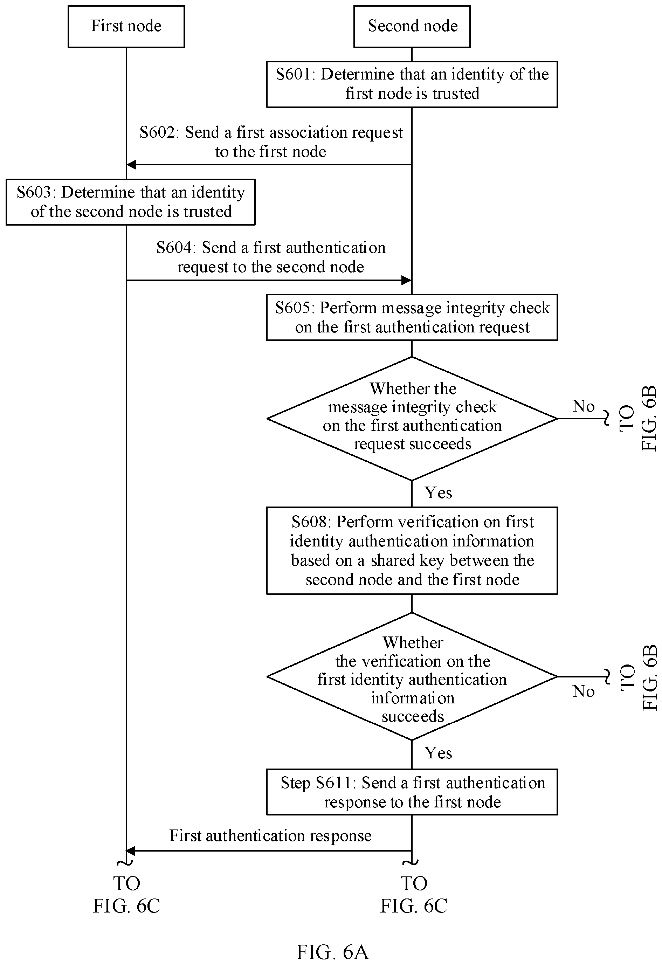

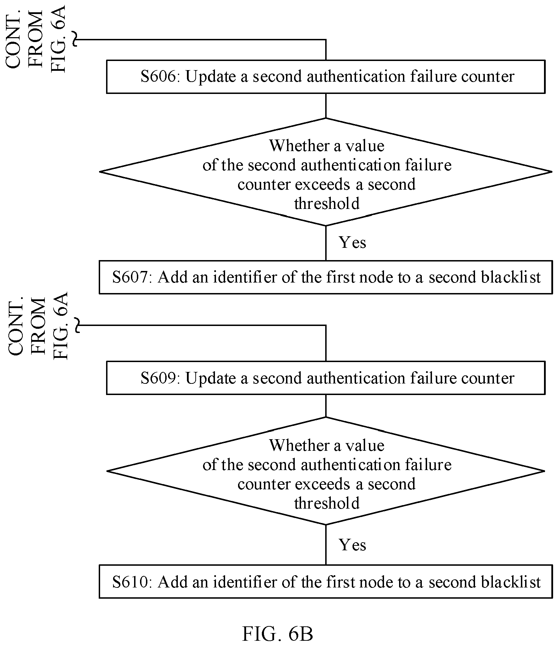

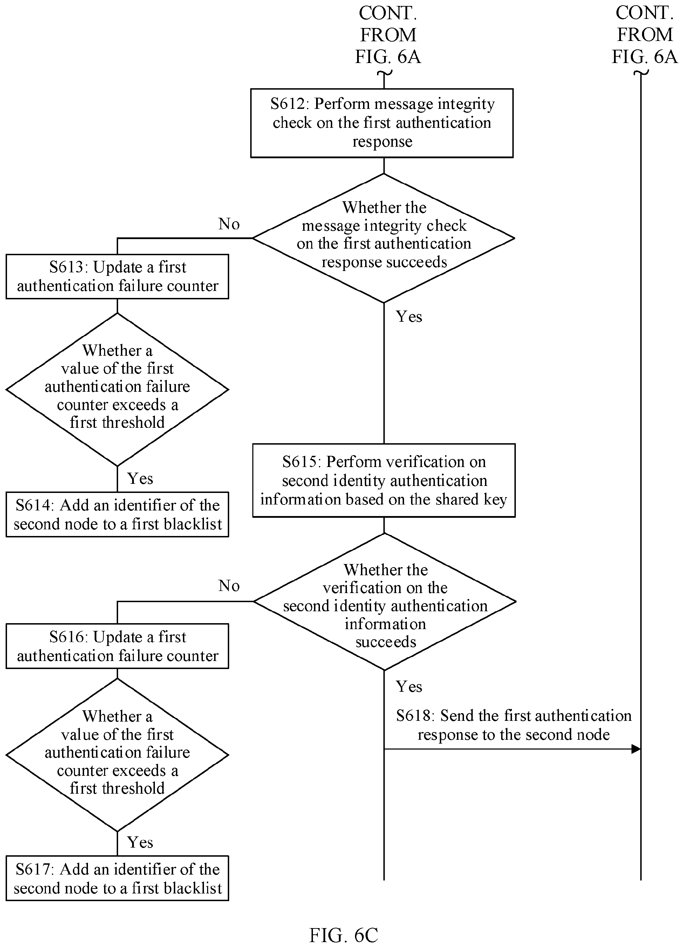

FIG. 6A, FIG. 6B, and FIG. 6C are a schematic flowchart of an association control method according to an embodiment of this application. The association control method may be implemented based on the architecture shown in FIG. 1. The method includes but is not limited to the following steps.

Step S601: A second node determines that an identity of a first node is trusted.

For details, refer to the related descriptions in step S301.

Step S602: The second node sends a first association request to the first node.

For details, refer to the related descriptions in step S302.

Step S603: The first node determines that an identity of the second node is trusted.

For details, refer to the related descriptions in step S303.

Step S604: The first node sends a first authentication request to the second node.

Specifically, the first authentication request includes first integrity check data and the like. The first integrity check data is check data generated according to a key and an integrity protection algorithm, and is used by the second node to perform message integrity check on the first authentication request. During specific implementation, the check data may also be referred to as a message authentication code (message authentication code, MAC).

For example, the first integrity check data MAC1 may be obtained according to a cipher-based message authentication code (Cipher-based Message Authentication Code, CMAC) algorithm by using a shared key K1 and a part or all of data data1 other than the MAC1 in the first authentication request, for example, MAC1 = CMAC(K1, datal).

Optionally, the first authentication request may include first identity authentication information. The first identity authentication information is generated by the first node based on a shared key between the first node and the second node. The shared key may be a pre-shared key between the first node and the second node. For example, the first node may generate the first identity authentication information AUTHa based on the pre-shared key PSK by using a KDF, that is, AUTHa = KDF(PSK).

Optionally, when the first association request includes a first fresh parameter, the first identity authentication information may be generated by the first node based on the shared key and the first fresh parameter. For example, the first node generates the first identity authentication information AUTHa based on the pre-shared key PSK and the first fresh parameter NONCEe by using a KDF, for example, AUTHa = KDF(PSK, NONCEe). Further optionally, during actual processing, parameters used by the first node to generate the first identity authentication information may further include other information. For example, the generated first identity authentication information AUTHa may satisfy: AUTHa = KDF(PSK, first association request). Further optionally, when the first authentication request includes a second fresh parameter, the first identity authentication information AUTHa generated by the first node may further satisfy: AUTHa = KDF(PSK, NONCEa, first association request), where NONCEa is the second fresh parameter in the first authentication request.

Step S605: The second node performs message integrity check on the first authentication request.

Specifically, the first authentication request includes the first integrity check data, and the second node may perform message integrity check on the first authentication request based on the first integrity check data, to prevent content in the first authentication request from being tampered with by an attacker.

In a possible solution, the first node generates the first integrity check data in a specific manner, and therefore the second node also generates a check value in a same manner. If the generated check value is the same as the first integrity check data, the message integrity check succeeds. For example, if the first integrity check data MAC 1 is obtained by the first node according to the CMAC algorithm by using the shared key K 1 and a part or all of data data1 other than the MAC1 in the first authentication request, the second node generates a check value check3 in a same manner, that is, check3 = CMAC(K1, datal). If the check3 is the same as the MAC1, it indicates that the data1 in the first authentication request is not tampered with, and integrity check on the first authentication request succeeds.

Optionally, the association control method shown in FIG. 6A, FIG. 6B, and FIG. 6C further includes step S606, which is specifically as follows.

Step S606: The second node updates a second authentication failure counter if the message integrity check on the first authentication request fails.

Specifically, the second node may use the second authentication failure counter to indicate a quantity of verification failures for the first node. Therefore, if the message integrity check on the first authentication request fails, the second node may increase a value of the second authentication failure counter by 1. The second authentication failure counter may be used to subsequently determine whether the identity of the first node is trusted.

Optionally, the association control method shown in FIG. 6A, FIG. 6B, and FIG. 6C further includes step S607, which is specifically as follows.

Step S607: The second node adds an identifier of the first node to a second blacklist if the value of the second authentication failure counter exceeds a second threshold.

Specifically, the second authentication failure counter indicates the quantity of verification failures for the first node, and the value that exceeds the second threshold may be greater than or equal to the second threshold. If the quantity of message integrity check failures on the first authentication request exceeds the second threshold, it may indicate that the message from the first node may be tampered with by the attacker a plurality of times or may be originally incorrect data. Therefore, the identifier of the first node is added to the second blacklist, to prevent the second node from establishing an association with an unauthorized attacker, and improve data security of the second node.

Optionally, if determining that the value of the second authentication failure counter is less than or equal to the second threshold, the second node may send the second association request to the first node. Further optionally, before sending the second association request, the second node may obtain third acknowledgment indication information. The third acknowledgment indication information may be indication information obtained based on an acknowledgment operation entered by a user, and the acknowledgment operation may be acknowledgment of output prompt information. For example, the second node may output the prompt information to remind the user that the verification fails and the association request needs to be re-initiated. After receiving a user acknowledgment operation and obtaining the third acknowledgment indication information, the second node sends the second association request to the first node. In this way, the user verifies an identity of a first node that needs to be re-associated with, so that association with an untrusted node can be avoided, and communication security is ensured.

Optionally, the association control method shown in FIG. 6A, FIG. 6B, and FIG. 6C further includes step S608, which is specifically as follows.

Step S608: The second node performs verification on the first identity authentication information based on the shared key between the second node and the first node.

For details, refer to the related descriptions in step S305.

Optionally, the association control method shown in FIG. 6A, FIG. 6B, and FIG. 6C further includes step S609, which is specifically as follows.

Step S609: The second node updates the second authentication failure counter if the verification on the first identity authentication information fails.

Specifically, the second authentication failure counter indicates the quantity of verification failures for the first node. If the verification on the identity authentication information of the first node fails, the value of the second authentication failure counter may be increased by 1. The second authentication failure counter may be used to subsequently determine whether the identity of the first node is trusted.

Optionally, the association control method shown in FIG. 6A, FIG. 6B, and FIG. 6C further includes step S610, which is specifically as follows.

Step S610: The second node adds the identifier of the first node to the second blacklist if the value of the second authentication failure counter exceeds the second threshold.

Specifically, the second authentication failure counter indicates the quantity of verification failures for the first node, and the value that exceeds the second threshold may be greater than or equal to the second threshold. If the value of the second authentication failure counter exceeds the second threshold, it indicates that the first node fails to be verified a plurality of times. Therefore, the first node may be an attacker who frequently sends authentication requests, and the identifier of the first node is added to the second blacklist. After the identifier of the first node is added to the second blacklist, the identity of the first node is not determined as trusted, to prevent the second node from establishing an association with an unauthorized attacker, and improve data security of the node.

Optionally, if determining that the value of the second authentication failure counter is less than the second threshold, the second node may send a second association request to the first node. Further optionally, before sending the second association request, the second node may obtain third acknowledgment indication information. The third acknowledgment indication information may be indication information obtained based on an acknowledgment operation entered by a user, and the acknowledgment operation may be acknowledgment of output prompt information. For example, the second node may output third prompt information to remind the user that identity authentication on the first node fails and an association request needs to be re-initiated. After receiving a user acknowledgment operation and obtaining the third acknowledgment indication information, the second node sends the second association request to the first node. In this way, the user verifies an identity of a first node that needs to be re-associated with, so that association with an untrusted node can be avoided, and communication security is ensured.

Optionally, in a specific implementation process, the second node may first perform the operation of S608 or the operations of S608 to S610 and then perform the operation of S605 or the operations of S605 to S607. In other words, the second node may first perform verification on the first identity authentication information based on the shared key, and then perform message integrity check on the first authentication request.

Step S611: The second node sends a first authentication response to the first node.

Specifically, the first authentication response may further include second integrity check data and the like. The second integrity check data is check data generated according to a symmetric key and an integrity protection algorithm, and is used by the first node to perform message integrity check on the first association request. During specific implementation, the check data may also be referred to as a message authentication code (message authentication code, MAC). For example, the second integrity check data MAC2 may be obtained according to a CMAC algorithm by using a shared key K1 and a part or all of data data2 other than the MAC2 in the first authentication response, for example, MAC2 = CMAC(K 1, data2).

Optionally, if the message integrity check on the first authentication request succeeds, the second node sends the first authentication response to the first node. Further optionally, if the message integrity check on the first authentication request succeeds and the verification performed by the second node on the first identity authentication information succeeds, the first authentication response is sent to the first node.

Optionally, the first authentication response may further include second identity authentication information. The second identity authentication information is generated by the second node based on a shared key between the second node and the first node. The shared key may be a pre-shared key PSK between the first node and the second node. For example, the second node may generate the second identity authentication information AUTHe based on the pre-shared key PSK by using the KDF, for example, AUTHe = KDF(PSK).

Optionally, when the first authentication request includes the second fresh parameter, the second identity authentication information may be generated by the second node based on the shared key and the second fresh parameter. For example, the second node generates the second identity authentication information AUTHe based on the pre-shared key PSK and the second fresh parameter NONCEa by using the KDF, for example, AUTHe = KDF(P SK, NONCEa). Further optionally, during actual processing, parameters used by the second node to generate the second identity authentication information may further include other information. For example, the generated second identity authentication information AUTHe may satisfy: AUTHe = KDF(PSK, first authentication request). Further optionally, when the first association request may further include the first fresh parameter, the second identity authentication information AUTHe generated by the second node may further satisfy: AUTHe = KDF(PSK, NONCEe, first authentication request), where NONCEe is the first fresh parameter in the first association request.

Step S612: The first node performs message integrity check on the first authentication response.

Specifically, the first authentication response includes the second integrity check data, and the first node may perform message integrity check on the first authentication response based on the second integrity check data, to prevent content in the first authentication response from being tampered with by an attacker.

In a possible solution, the second node generates the second integrity check data in a specific manner, and therefore the first node also generates a check value in a same manner. If the generated check value is the same as the second integrity check data, the message integrity check succeeds. For example, if the second integrity check data MAC2 is obtained by the second node according to the CMAC algorithm by using the shared key K 1 and a part or all of data data2 other than the MAC2 in the first authentication response, the second node generates a check value check4 in a same manner, that is, check4 = CMAC(K1, data2). If the check4 is the same as the MAC2, it indicates that the data2 in the first authentication response is not tampered with, and integrity check on the first authentication response succeeds.

S613: The first node updates a first authentication failure counter if the message integrity check on the first authentication response fails.

Specifically, the first node may use the first authentication failure counter to indicate a quantity of verification failures for the second node. Therefore, if the message integrity check on the first authentication response fails, the first node may increase a value of the first authentication failure counter by 1. The first authentication failure counter may be used to subsequently determine whether the identity of the second node is trusted.

Optionally, the association control method shown in FIG. 6A, FIG. 6B, and FIG. 6C further includes step S614, which is specifically as follows.

Step S614: The first node adds an identifier of the second node to a first blacklist if the value of the first authentication failure counter exceeds a first threshold.

Specifically, the first authentication failure counter indicates the quantity of verification failures for the second node, and the value that exceeds the first threshold may be greater than or equal to the first threshold. If the value of the first authentication failure counter exceeds the first threshold, it may indicate that the message from the second node may be tampered with by the attacker a plurality of times or may be originally incorrect data. Therefore, the identifier of the second node is added to the first blacklist, to prevent the first node from establishing an association with an unauthorized attacker, and improve data security of the node.

Optionally, the association control method shown in FIG. 6A, FIG. 6B, and FIG. 6C further includes step S615, which is specifically as follows.

Step S615: The first node performs verification on the second identity authentication information based on the shared key.

For details, refer to the related descriptions in step S307.

Optionally, the association control method shown in FIG. 6A, FIG. 6B, and FIG. 6C further includes step S616 or step S616 and step S617. Step S616 and step S617 are specifically as follows.

Step S616: The first node updates the first authentication failure counter if the message integrity check on the first authentication response fails.

For details, refer to the related descriptions in step S308.

Step S617: The first node adds the identifier of the second node to the first blacklist if the value of the first authentication failure counter exceeds the first threshold.

For details, refer to the related descriptions in step S501.

Optionally, in a specific implementation process, the first node may first perform the operation of S615 or the operations of S615 to S617 and then perform the operation of S612 or the operations of S612 and S613. In other words, the first node may first perform verification on the second identity authentication information based on the shared key, and then perform message integrity check on the first authentication response.

Optionally, the association control method shown in FIG. 6A, FIG. 6B, and FIG. 6C further includes step S618, which is specifically as follows.

Step S618: The first node sends a first association response to the second node.

Specifically, the first association response is used to indicate that the first node establishes an association with the second node. Further, the first response message may be used to notify the second node that the association succeeds and communication can be performed.

Optionally, if the message integrity check on the first authentication response succeeds, the first node sends the first association response to the second node. Further optionally, if the message integrity check on the first authentication response succeeds and the verification performed by the first node on the second identity authentication information succeeds, the first node sends the first association response to the second node.

In the embodiment shown in FIG. 6A, FIG. 6B, and FIG. 6C, after it is determined that the identity of the second node is trusted, message integrity check further needs to be performed on an authentication response message from the second node before association is performed. If the message integrity check fails, a quantity of verification failures is updated. The quantity of verification failures may be used to subsequently determine whether the identity of the second node is trusted, so that an attacker can be prevented from tampering with data in an authentication process. This prevents the node from establishing an association with an unauthorized attacker, and improves data security of the node.

The foregoing describes in detail the methods in embodiments of this application. The following provides apparatuses in embodiments of this application.

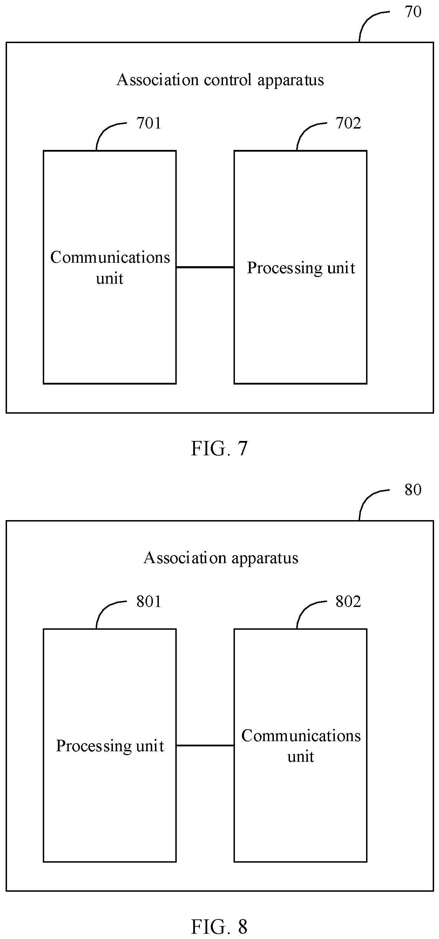

FIG. 7 is a schematic diagram of a structure of an association control apparatus 70 according to an embodiment of this application. The apparatus 70 may be a node, or may be a component such as a chip or an integrated circuit in a node. The apparatus 70 may include a communications unit 701 and a processing unit 702. Descriptions of the units are as follows.

The communications unit 701 is configured to receive a first association request from a second node.

The processing unit 702 is configured to determine that an identity of the second node is trusted, and send a first authentication request to the second node by using the communications unit 701. The first authentication request includes first identity authentication information, and the first identity authentication information is generated based on a shared key between a first node and the second node.

The communications unit 701 is further configured to receive a first authentication response from the second node. The first authentication response includes second identity authentication information.

The processing unit 702 is further configured to perform verification on the second identity authentication information based on the shared key.

The processing unit 702 is further configured to update a first authentication failure counter if the verification on the second identity authentication information fails. The first authentication failure counter indicates a quantity of verification failures for the second node.

In this embodiment of this application, after determining that the identity of the second node is trusted, the apparatus 70 verifies the identity of the second node based on the shared key that is shared with the second node. In this way, even if an attacker bypasses a step of determining that an identity is trusted of the apparatus 70 by modifying an identifier, because it is difficult to forge identity authentication information, identity authentication performed by the apparatus on the attacker still cannot succeed. Therefore, the apparatus is prevented from establishing an association with an unauthorized attacker, and data security of a node is improved.

Further, if the verification fails, the apparatus 70 updates the quantity of verification failures. The quantity of verification failures may be used to subsequently determine whether the identity of the second node is trusted, so that a node that fails to be verified a plurality of times may no longer be determined as trusted. For the node that is not determined as trusted, the apparatus 70 may no longer process an association request of the node (for example, sending an authentication request), to prevent the apparatus 70 from breaking down due to processing of a large number of requests, and ensure normal running of a service.

It should be noted herein that division of the foregoing plurality of units is merely logical division based on functions, and is not used as a limitation on a specific structure of the apparatus 70. In specific implementation, some functional modules may be subdivided into more small functional modules, or some functional modules may be combined into one functional module. However, regardless of whether these functional modules are subdivided or combined, procedures performed by the apparatus 70 in an association control process are roughly the same. For example, the communications unit 701 may alternatively be converted into a receiving unit and a sending unit. The receiving unit is configured to implement a message receiving function of the communications unit 701, and the sending unit is configured to implement a message sending function of the communications unit 701. Usually, each unit corresponds to program code (or program instructions) of the unit. When program code corresponding to the units is run on a processor, the units are enabled to perform corresponding procedures to implement corresponding functions.

In a possible implementation, the processing unit 702 is specifically configured to:
determine that an identifier of the second node is in a first whitelist; or
determine that an identifier of the second node is not in a first blacklist; or
obtain first acknowledgment indication information, where the first acknowledgment indication information indicates that the identity of the second node is trusted; and an identifier of the second node is not in a first blacklist; or
obtain first acknowledgment indication information, where the first acknowledgment indication information indicates that the identity of the second node is trusted; and an identifier of the second node is neither in a first blacklist nor in a first whitelist.

The apparatus 70 controls a node that requests association based on a blacklist or a whitelist, so that identity authentication does not need to be performed on an untrusted second node. This can prevent breaking down due to processing of a large number of requests and ensure normal running of the service. In addition, because the apparatus does not establish an association with a node that does not undergo identity authentication, the apparatus 70 is prevented from establishing an association with an unauthorized attacker, and data security of the apparatus 70 is improved.

In another possible implementation, the processing unit is specifically configured to:
if a type of the shared key between the first node and the second node is a preconfigured type, determine that an identifier of the second node is in a first whitelist;
if a type of the shared key between the first node and the second node is a password generation type, determine that an identifier of the second node is in a first whitelist; or
obtain first acknowledgment indication information if an identifier of the second node is not in a first blacklist, a type of the shared key between the first node and the second node is a password generation type, and the identifier of the second node is not in a first whitelist, where the first acknowledgment indication information indicates that the identity of the second node is trusted.

In still another possible implementation, the first authentication response further includes second integrity check data, and the second integrity check data is used to perform message integrity check on the first authentication response.

The processing unit 702 is specifically configured to:
determine that the message integrity check on the first authentication response succeeds.

It can be learned that, after it is determined that the identity of the second node is trusted, in addition to identity authentication, integrity check needs to be performed on a message carrying identity authentication information, to prevent content in the first authentication response from being tampered with by the attacker. This avoids affecting verification on the identity authentication information of the second node, and ensures stable running of the service provided by the apparatus.

In still another possible implementation, the processing unit 702 is further configured to:
determine that a first association quantity is less than or equal to a preset first association threshold, where the first association quantity indicates a quantity of currently associated nodes.

It can be learned that the first association threshold is preset in the apparatus. An association request from the second node can be received only when a quantity of associated nodes is less than or equal to the preset first association threshold. The first threshold may limit a bearing capacity of the service that can be provided by the apparatus. When the first association threshold is exceeded, the apparatus may no longer receive or process the association request, to avoid affecting communication between the apparatus and another node associated with the apparatus, and ensure stable running of the service provided by the apparatus.

In still another possible implementation, the communications unit 701 is further configured to:
send a first association response to the second node if the verification on the second identity authentication information succeeds, where the first association response is used to indicate that the first node establishes an association with the second node.

It can be learned that after it is determined that the identity of the second node is trusted, if identity authentication succeeds, the first association response may be sent to the second node. The association response is used to indicate the apparatus to establish an association with the second node. Further, the first response message may be used to notify the second node that the association succeeds and communication can be performed.

In still another possible implementation, the processing unit 702 is further configured to:
reset the first authentication failure counter if the verification on the second identity authentication information succeeds.

It can be learned that, after it is determined that the identity of the second node is trusted, if identity authentication succeeds, the quantity of verification failures for the second node needs to be reset, to avoid affecting subsequent determining of the identity of the second node, and ensure stable running of the service provided by the apparatus.

In still another possible implementation, the processing unit 702 is further configured to:
determine that a value of the first authentication failure counter is greater than or equal to a first threshold, and add the identifier of the second node to the first blacklist.

It can be learned that if the quantity of verification failures for the second node exceeds the preset first threshold, it indicates that the second node fails to be verified a plurality of times, and the second node may be an attacker who frequently sends association requests. Therefore, the identifier of the second node is added to the blacklist. After the identifier of the second node is added to the blacklist, the identity of the second node is not determined as trusted, to prevent the apparatus from establishing an association with an unauthorized attacker, and improve data security of the node.

In still another possible implementation, a validity period of the first blacklist is predefined or preconfigured first duration.

It can be learned that the predefined or preconfigured first duration in the first blacklist may be considered as the validity period of the blacklist. For example, the first duration of the blacklist may be one week, and an identifier of a second node may be removed from the blacklist one week after being added to the blacklist.

In still another possible implementation, the processing unit 702 is further configured to:
remove the identifier of the second node from the first blacklist if duration in which the identifier of the second node is added to the first blacklist exceeds the first duration, where the first duration is related to at least one of a quantity of times that the identifier of the second node is added to the first blacklist or a type of the second node.

The foregoing implementation describes factors related to the validity period of the first blacklist. The validity period of the first blacklist may be related to the quantity of times that the second node is added to the first blacklist. A larger quantity of times that a second node is added to the first blacklist indicates longer duration of the second node in the first blacklist. Further optionally, after the quantity of times that the second node is added to the first blacklist exceeds a threshold, the second node may be permanently added to the first blacklist.

In addition, the validity period of the first blacklist may be related to a device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the first node may further predefine a blacklist validity period corresponding to the second node. Details are not described herein again. A quantity of device types is not specifically limited in this application, and may be designed based on a specific scenario.

In still another possible implementation, if the identity of the second node is untrusted, the step of sending a first authentication request to the second node is not performed.

It can be learned that if the identity of the second node is untrusted, a subsequent identity authentication step is not performed, to avoid wasting resources of the apparatus and affecting normal association with another node.

It should be noted that for implementation of each unit, refer to corresponding descriptions in the embodiment shown in FIG. 3 or FIG. 5A, FIG. 5B, and FIG. 5C. The apparatus 70 may be the first node in the embodiment shown in FIG. 3 or FIG. 5A, FIG. 5B, and FIG. 5C.

FIG. 8 is a schematic diagram of a structure of an association apparatus 80 according to an embodiment of this application. The apparatus 80 may be a node, or may be a component such as a chip or an integrated circuit in a node. The apparatus 80 may include a processing unit 801 and a communications unit 802. Descriptions of the units are as follows.

The processing unit 801 is configured to determine that an identity of a first node is trusted, and send a first association request to the first node by using a communications unit 802.

The communications unit 802 is further configured to receive a first authentication request from the first node. The first authentication request includes first identity authentication information.

The processing unit 801 is further configured to perform verification on the first identity authentication information based on a shared key between a second node and the first node.

The communications unit 802 is further configured to send a first authentication response to the first node if the verification on the first identity authentication information succeeds. The first authentication response includes second identity authentication information, and the second identity authentication information is generated based on the shared key.

In this embodiment of this application, after determining that the identity of the first node is trusted, the apparatus sends the first association request to the first node. Then, verification on identity authentication information of the first node is performed based on the first identity authentication information in the first authentication request by using the shared key. After the verification succeeds, the second identity authentication information is sent to the first node. The second identity authentication information may be used by the first node to verify an identity of the apparatus. It can be seen that, after it is determined that an identity is trusted, association can be performed only after identity authentication of both parties succeeds. Therefore, it is difficult for an attacker to bypass, by modifying an identity such as an identifier, identity authentication performed by the second node on the attacker, to prevent the apparatus from establishing an association with an unauthorized attacker, and improve data security of the node.

It should be noted herein that division of the foregoing plurality of units is merely logical division based on functions, and is not used as a limitation on a specific structure of the apparatus 80. In specific implementation, some functional modules may be subdivided into more small functional modules, or some functional modules may be combined into one functional module. However, regardless of whether these functional modules are subdivided or combined, procedures performed by the apparatus 80 in an association control process are roughly the same. For example, the communications unit 802 may alternatively be converted into a receiving unit and a sending unit. The receiving unit is configured to implement a message receiving function of the communications unit 802, and the sending unit is configured to implement a message sending function of the communications unit 802. Usually, each unit corresponds to program code (or program instructions) of the unit. When program code corresponding to the units is run on a processor, the units are enabled to perform corresponding procedures to implement corresponding functions.

In a possible implementation, the processing unit 801 is specifically configured to:
determine that an identifier of the first node is in a second whitelist; or
determine that an identifier of the first node is not in a second blacklist; or
obtain second acknowledgment indication information, where the second acknowledgment indication information indicates that the identity of the first node is trusted; and an identifier of the first node is not in a second blacklist; or
obtain second acknowledgment indication information, where the second acknowledgment indication information indicates that the identity of the first node is trusted; and an identifier of the first node is neither in a second blacklist nor in a second whitelist.

In the foregoing method, an associated node may be controlled by using a blacklist or a whitelist, and the apparatus may be controlled not to send an association request to the untrusted first node. This prevents the apparatus from establishing an association with an unauthorized attacker, and improves data security of the apparatus.

In another possible implementation, the processing unit 801 is specifically configured to:
if a type of the shared key between the first node and the second node is a preconfigured type, determine that an identifier of the first node is in a second whitelist;
if a type of the shared key between the first node and the second node is a password generation type, determine that an identifier of the first node is in a second whitelist; or
obtain second acknowledgment indication information if an identifier of the first node is not in a second blacklist, a type of the shared key between the first node and the second node is a password generation type, and the identifier of the first node is not in a second whitelist, where the second acknowledgment indication information indicates that the identity of the second node is trusted.

In still another possible implementation, the first authentication request further includes first integrity check data, and the first integrity check data is used to perform message integrity check on the first authentication request.

The processing unit 801 is further configured to:
determine that the message integrity check on the first authentication request succeeds.

It can be learned that, after it is determined that the identity of the first node is trusted, in addition to identity authentication, integrity check needs to be performed on a message carrying identity authentication information, to prevent content in the first authentication response from being tampered with by the attacker. This avoids affecting verification on the identity authentication information of the first node, and ensures stable running of the service provided by the apparatus.

In still another possible implementation, the processing unit 801 is further configured to:
determine that a second association quantity is less than or equal to a preset second association threshold, where the second association quantity indicates a quantity of currently associated nodes.

It can be learned that the second association threshold is preset in the apparatus. An association request may be sent to the first node only when a quantity of associated nodes is less than or equal to the preset second association threshold. The second threshold may limit a quantity of nodes that can be associated with the apparatus. When the second association threshold is exceeded, the apparatus cannot be associated with another node, to avoid affecting communication between the apparatus and another node associated with the apparatus, and ensure stable running of the service provided by the apparatus.

In still another possible implementation, the communications unit 802 is further configured to:
receive a first association response from the first node, where the first association response is used to indicate that the first node establishes an association with the second node.

It can be learned that after it is determined that the identity of the first node is trusted, if identity authentication performed by the first node on the second node succeeds, the apparatus receives the first association response from the first node. The association response is used to indicate the apparatus to establish an association with the second node. Further, the first response message may notify the apparatus that the association succeeds and subsequent communication can be performed.

In still another possible implementation, the processing unit 801 is further configured to:
reset a second authentication failure counter, where the second authentication failure counter indicates a quantity of verification failures for the first node.

It can be learned that, after it is determined that the identity of the first node is trusted, if identity authentication succeeds, the quantity of verification failures for the first node needs to be reset, to avoid affecting subsequent determining of the identity of the first node, and ensure stable running of the service provided by the apparatus.

In still another possible implementation, the processing unit 801 is further configured to:
update a second authentication failure counter if the verification on the first identity authentication information fails, where the second authentication failure counter indicates a quantity of verification failures for the first node.

It can be learned that, if the verification on the identity authentication information of the first node fails, the apparatus updates the quantity of identity verification failures for the first node, and the quantity of verification failures may be used to subsequently determine whether an identity of a node is trusted. Therefore, it is difficult for an attacker to bypass, by modifying an identity such as an identifier, association control performed by the first node on the attacker, to prevent the apparatus from establishing an association with an unauthorized attacker, and improve data security of the apparatus.

In still another possible implementation, the processing unit 801 is further configured to:
determine that a value of the second authentication failure counter is greater than or equal to a second threshold; and
add the identifier of the first node to the second blacklist.

It can be learned that if the quantity of verification failures for the first node exceeds the preset second threshold, it indicates that the first node fails to be verified a plurality of times, and the first node may be an attacker who frequently sends authentication requests. Therefore, the identifier of the first node is added to the blacklist. After the identifier of the first node is added to the blacklist, the identity of the first node is not determined as trusted, to prevent the apparatus from establishing an association with an unauthorized attacker, and improve data security of the node.

In still another possible implementation, a validity period of the second blacklist is predefined or preconfigured second duration.

It can be learned that the predefined or preconfigured second duration in the second blacklist may be considered as the validity period of the blacklist. For example, the second duration of the blacklist may be 10 days, and an identifier of a first node may be removed from the blacklist 10 days after being added to the blacklist.

In still another possible implementation, the processing unit 801 is further configured to determine that a value of the second authentication failure counter is less than a second threshold.

The communications unit 802 is further configured to send a second association request to the first node.

It can be learned that, if the verification on the identity authentication information of the first node fails, the apparatus updates the quantity of identity verification failures for the first node, and the quantity of verification failures may be used to subsequently determine whether an identity of a node is trusted. Therefore, it is difficult for an attacker to bypass, by modifying an identity such as an identifier, association control performed by the first node on the attacker, to prevent the apparatus from establishing an association with an unauthorized attacker, and improve data security of the node.

In still another possible implementation, the processor is further configured to:
determine that a value of the second authentication failure counter is less than a second threshold;
obtain third acknowledgment indication information; and
send a second association request to the first node.

It can be learned that before the second association request is re-sent, acknowledgment indication information needs to be obtained. The third acknowledgment indication information may be indication information obtained based on an acknowledgment operation entered by a user, and the acknowledgment operation may be acknowledgment of output prompt information. For example, the prompt information may be output to remind the user that the verification fails and the association request needs to be re-initiated. After a user acknowledgment operation is received and the third acknowledgment indication information is obtained, the second association request is sent to the first node. In this way, the user verifies an identity of a first node that needs to be re-associated with, so that association with an untrusted node can be avoided, and communication security is ensured.

In still another possible implementation, the processor is further configured to:
remove the identifier of the first node from the second blacklist if duration in which the identifier of the first node is added to the second blacklist exceeds the second duration, where the second duration is related to at least one of a quantity of times that the identifier of the first node is added to the second blacklist or a type of the first node.

The foregoing implementation describes factors related to the validity period of the second blacklist. The validity period of the second blacklist may be related to the quantity of times that the first node is added to the blacklist. A larger quantity of times that a first node is added to the second blacklist indicates longer duration of the first node in the second blacklist. Further optionally, after the quantity of times that the first node is added to the second blacklist exceeds a threshold, the first node may be permanently added to the second blacklist.

In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the second node may further predefine a blacklist validity period corresponding to the first node. Details are not described herein again. In still another possible implementation, if the identity of the first node is untrusted, the step of sending the first association request to the first node is not performed.

It can be learned that if the identity of the first node is untrusted, the identity authentication request is no longer sent to the first node, to avoid wasting resources of the node.

It should be noted that for implementation of each unit, refer to corresponding descriptions in the embodiment shown in FIG. 3 or FIG. 5A, FIG. 5B, and FIG. 5C. The apparatus 80 may be the second node in the embodiment shown in FIG. 3 or FIG. 5A, FIG. 5B, and FIG. 5C.

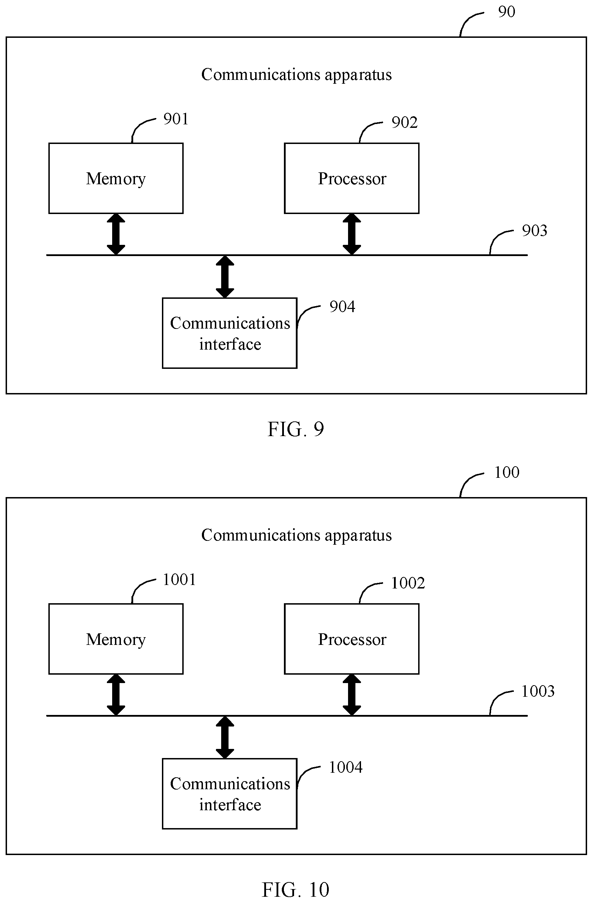

FIG. 9 is a schematic diagram of a structure of a communications apparatus 90 according to an embodiment of this application. The communications apparatus 90 may be a node, or may be a component such as a chip or an integrated circuit in a node. The apparatus 90 may include at least one memory 901 and at least one processor 902. Optionally, the apparatus may further include a bus 903. Optionally, the apparatus may further include a communications interface 904. The memory 901, the processor 902, and the communications interface 904 are connected through the bus 903.

The memory 901 is configured to provide storage space, and the storage space may store data such as an operating system and a computer program. The memory 901 may be one or a combination of a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 902 is a module that performs an arithmetic operation and/or a logic operation, and may be specifically one or a combination of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), and a complex programmable logic device (Complex programmable logic device, CPLD).

The communications interface 904 is configured to receive data sent from the outside and/or send data to the outside, and may be an interface of a wired link such as an Ethernet cable, or may be a wireless link (Wi-Fi, Bluetooth, universal wireless transmission, or the like) interface. Optionally, the communications interface 1104 may further include a transmitter (for example, a radio frequency transmitter or an antenna), a receiver, or the like coupled to the interface.

The processor 902 in the apparatus 90 is configured to read the computer program stored in the memory 901, to perform the foregoing association control method, for example, the association control method described in FIG. 3 or FIG. 5A, FIG. 5B, and FIG. 5C.

For example, the processor 902 in the apparatus 90 is configured to read the computer program stored in the memory 901, to perform the following operations:
receiving a first association request from a second node through the communications interface 904;
determining that an identity of the second node is trusted, and sending a first authentication request to the second node through the communications interface 904, where the first authentication request includes first identity authentication information, the first identity authentication information is generated based on a shared key between a first node and the second node, and the shared key may be considered as a first secret value shared between the first node and the second node;
receiving a first authentication response from the second node through the communications interface 904, where the first authentication response includes second identity authentication information;
performing verification on the second identity authentication information based on the shared key; and
updating a first authentication failure counter if the verification on the second identity authentication information fails, where the first authentication failure counter indicates a quantity of verification failures for the second node.

In this embodiment of this application, after determining that the identity of the second node is trusted, the apparatus 90 verifies the identity of the second node based on the shared key that is shared with the second node. In this way, even if an attacker bypasses a step of determining that an identity is trusted of the apparatus 90 by modifying an identifier, because it is difficult to forge identity authentication information, identity authentication performed by the apparatus 90 on the attacker still cannot succeed. Therefore, the apparatus 90 is prevented from establishing an association with an unauthorized attacker, and data security of the apparatus 90 is improved.

Further, if the verification fails, the apparatus 90 updates the quantity of verification failures. The quantity of verification failures may be used to subsequently determine whether the identity of the second node is trusted, so that a node that fails to be verified a plurality of times may no longer be determined as trusted. For the node that is not determined as trusted, the apparatus 90 may no longer process an association request of the node (for example, sending an authentication request), to prevent the apparatus 90 from breaking down due to processing of a large number of requests, and ensure normal running of a service.

In a possible implementation, the processor 902 is specifically configured to:
determine that an identifier of the second node is in a first whitelist; or
determine that an identifier of the second node is not in a first blacklist; or
obtain first acknowledgment indication information, where the first acknowledgment indication information indicates that the identity of the second node is trusted; and an identifier of the second node is not in a first blacklist; or
obtain first acknowledgment indication information, where the first acknowledgment indication information indicates that the identity of the second node is trusted; and an identifier of the second node is neither in a first blacklist nor in a first whitelist.

The apparatus 90 controls a node that requests association based on a blacklist or a whitelist, so that identity authentication does not need to be performed on an untrusted second node. This can prevent breaking down due to processing of a large number of requests and ensure normal running of the service. In addition, because the apparatus does not establish an association with a node that does not undergo identity authentication, the apparatus 90 is prevented from establishing an association with an unauthorized attacker, and data security of the apparatus 90 is improved.

In another possible implementation, the processor 902 is specifically configured to:
if a type of the shared key between the first node and the second node is a preconfigured type, determine that an identifier of the second node is in a first whitelist;
if a type of the shared key between the first node and the second node is a password generation type, determine that an identifier of the second node is in a first whitelist; or
obtain first acknowledgment indication information if an identifier of the second node is not in a first blacklist, a type of the shared key between the first node and the second node is a password generation type, and the identifier of the second node is not in a first whitelist, where the first acknowledgment indication information indicates that the identity of the second node is trusted.

In still another possible implementation, the first authentication response further includes second integrity check data, and the second integrity check data is used to perform message integrity check on the first authentication response.

The processor 902 is further configured to determine that the message integrity check on the first authentication response succeeds.

It can be learned that, after it is determined that the identity of the second node is trusted, in addition to identity authentication, integrity check needs to be performed on a message carrying identity authentication information, to prevent content in the first authentication response from being tampered with by the attacker. This avoids affecting verification on the identity authentication information of the second node, and ensures stable running of the service provided by the apparatus 90.

In still another possible implementation, the processor 902 is further configured to:
determine that a first association quantity is less than or equal to a preset first association threshold, where the first association quantity indicates a quantity of currently associated nodes.

It can be learned that the first association threshold is preset in the apparatus 90. An association request from the second node can be received only when a quantity of associated nodes is less than or equal to the preset first association threshold. The first threshold may limit a bearing capacity of the service that can be provided by the node. When the first association threshold is exceeded, the apparatus 90 may no longer receive or process the association request, to avoid affecting communication between the apparatus 90 and another node associated with the apparatus, and ensure stable running of the service provided by the apparatus 90.

In still another possible implementation, the processor 902 is further configured to:
send a first association response to the second node through the communications interface 904 if the verification on the second identity authentication information succeeds, where the first association response is used to indicate that the first node establishes an association with the second node.

It can be learned that after it is determined that the identity of the second node is trusted, if identity authentication succeeds, the first association response may be sent to the second node. The association response is used to indicate the apparatus 90 to establish an association with the second node. Further, the first response message may be used to notify the second node that the association succeeds and communication can be performed.

In still another possible implementation, the processor 902 is further configured to:
reset the first authentication failure counter if the verification on the second identity authentication information succeeds.

It can be learned that, after it is determined that the identity of the second node is trusted, if identity authentication succeeds, the quantity of verification failures for the second node needs to be reset, to avoid affecting subsequent determining of the identity of the second node, and ensure stable running of the service provided by the apparatus 90.

In still another possible implementation, the processor 902 is further configured to:
determine that a value of the first authentication failure counter is greater than or equal to a first threshold, and add the identifier of the second node to the first blacklist.

It can be learned that if the quantity of verification failures for the second node exceeds the preset first threshold, it indicates that the second node fails to be verified a plurality of times, and the second node may be an attacker who frequently sends association requests. Therefore, the identifier of the second node is added to the blacklist. After the identifier of the second node is added to the blacklist, the identity of the second node is not determined as trusted, to prevent the apparatus 90 from establishing an association with an unauthorized attacker, and improve data security of the apparatus 90.

In still another possible implementation, a validity period of the first blacklist is predefined or preconfigured first duration.

It can be learned that the predefined or preconfigured first duration in the first blacklist may be considered as the validity period of the blacklist. For example, the first duration of the blacklist may be one week, and an identifier of a second node may be removed from the blacklist one week after being added to the blacklist.

In still another possible implementation, the processor 902 is further configured to:
remove the identifier of the second node from the first blacklist if duration in which the identifier of the second node is added to the first blacklist exceeds the first duration, where the first duration is related to at least one of a quantity of times that the identifier of the second node is added to the first blacklist or a type of the second node.

The foregoing implementation describes factors related to a validity period of a blacklist. The validity period of the blacklist may be related to a quantity of times that the second node is added to the blacklist. A larger quantity of times that a second node is added to the blacklist indicates longer duration of the second node in the blacklist. Further optionally, after the quantity of times that the second node is added to the blacklist exceeds a threshold, the second node may be permanently added to the blacklist.

In addition, the validity period of the blacklist may be related to a device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the apparatus 90 may further predefine a blacklist validity period corresponding to the second node. Details are not described herein again.

In still another possible implementation, if the identity of the second node is untrusted, the step of sending a first authentication request to the second node is not performed.

It can be learned that if the identity of the second node is untrusted, a subsequent identity authentication step is not performed, to avoid wasting resources of the apparatus 90 and affecting normal association with another node.

It should be noted that for specific implementation of each unit, refer to corresponding descriptions in the embodiment shown in FIG. 3 or FIG. 5A, FIG. 5B, and FIG. 5C. The communications apparatus 90 may be the first node in the embodiment shown in FIG. 3 or FIG. 5A, FIG. 5B, and FIG. 5C.

FIG. 10 is a schematic diagram of a structure of a communications apparatus 100 according to an embodiment of this application. The communications apparatus 100 may be a node, or may be a component such as a chip or an integrated circuit in a node. The apparatus 100 may include at least one memory 1001 and at least one processor 1002. Optionally, the apparatus may further include a bus 1003. Optionally, the apparatus may further include a communications interface 1004. The memory 1001, the processor 1002, and the communications interface 1004 are connected through the bus 1003.

The memory 1001 is configured to provide storage space, and the storage space may store data such as an operating system and a computer program. The memory 1001 may be one or a combination of a RAM, a ROM, an EPROM, a CD-ROM, and the like.

The processor 1002 is a module that performs an arithmetic operation and/or a logic operation, and may be specifically one or a combination of processing modules such as a CPU, a GPU, an MPU, an ASIC, an FPGA, and a CPLD.

The communications interface 1004 is configured to receive data sent from the outside and/or send data to the outside, and may be an interface of a wired link such as an Ethernet cable, or may be a wireless link (Wi-Fi, Bluetooth, or the like) interface. Optionally, the communications interface 1104 may further include a transmitter (for example, a radio frequency transmitter or an antenna), a receiver, or the like coupled to the interface.

The processor 1002 in the apparatus 100 is configured to read the computer program stored in the memory 1001, to perform the foregoing association control method, for example, the association control method described in FIG. 3 or FIG. 5A, FIG. 5B, and FIG. 5C.

For example, the processor 1002 in the apparatus 100 is configured to read the computer program stored in the memory 1001, to perform the following operations:
determining that an identity of a first node is trusted, and sending a first association request to the first node;
receiving a first authentication request from the first node, where the first authentication request includes first identity authentication information;
performing verification on the first identity authentication information based on a shared key between a second node and the first node, where the shared key is a secret value shared between the first node and the second node; and
sending a first authentication response to the first node if the verification on the first identity authentication information succeeds, where the first authentication response includes second identity authentication information, and the second identity authentication information is generated based on the shared key.

In this embodiment of this application, after determining that the identity of the first node is trusted, the apparatus 100 sends the first association request to the first node. Then, verification on identity authentication information of the first node is performed based on the first identity authentication information in the first authentication request by using the shared key. After the verification succeeds, the second identity authentication information is sent to the first node. The second identity authentication information may be used by the first node to verify an identity of the apparatus 100. It can be seen that, after it is determined that an identity is trusted, association can be performed only after identity authentication of both parties succeeds. Therefore, it is difficult for an attacker to bypass, by modifying an identity such as an identifier, identity authentication performed by the apparatus 100 on the attacker, to prevent the apparatus 100 from establishing an association with an unauthorized attacker, and improve data security of the apparatus 100.

In a possible implementation, the processor 1002 is further configured to:
determine that an identifier of the first node is in a second whitelist; or
determine that an identifier of the first node is not in a second blacklist; or
obtain second acknowledgment indication information, where the second acknowledgment indication information indicates that the identity of the first node is trusted; and an identifier of the first node is not in a second blacklist; or
obtain second acknowledgment indication information, where the second acknowledgment indication information indicates that the identity of the first node is trusted; and an identifier of the first node is neither in a second blacklist nor in a second whitelist.

In the foregoing method, an associated node may be controlled by using a blacklist or a whitelist, and the apparatus 100 may be controlled not to send an association request to the untrusted first node. This prevents the apparatus 100 from establishing an association with an unauthorized attacker, and improves data security of the apparatus 100.

In another possible implementation, the processor 1002 is further configured to:
if a type of the shared key between the first node and the second node is a preconfigured type, determine that an identifier of the first node is in a second whitelist;
if a type of the shared key between the first node and the second node is a password generation type, determine that an identifier of the first node is in a second whitelist; or
obtain second acknowledgment indication information if an identifier of the first node is not in a second blacklist, a type of the shared key between the first node and the second node is a password generation type, and the identifier of the first node is not in a second whitelist, where the second acknowledgment indication information indicates that the identity of the second node is trusted.

In still another possible implementation, the first authentication request further includes first integrity check data, and the first integrity check data is used to perform message integrity check on the first authentication request.

The processor is further configured to determine that the message integrity check on the first authentication request succeeds.

It can be learned that, after it is determined that the identity of the first node is trusted, in addition to identity authentication, integrity check needs to be performed on a message carrying identity authentication information, to prevent content in the first authentication response from being tampered with by the attacker. This avoids affecting verification on the identity authentication information of the first node, and ensures stable running of the service provided by the apparatus 100.

In still another possible implementation, the processor 1002 is further configured to:
determine that a second association quantity is less than or equal to a preset second association threshold, where the second association quantity indicates a quantity of currently associated nodes.

It can be learned that the second association threshold is preset in the apparatus 100. An association request may be sent to the first node only when a quantity of associated nodes is less than or equal to the preset second association threshold. The second threshold may limit a quantity of nodes that can be associated with the apparatus 100. When the second association threshold is exceeded, the apparatus 100 cannot be associated with another node, to avoid affecting communication between the apparatus 100 and another node associated with the apparatus, and ensure stable running of the service provided by the apparatus 100.

In still another possible implementation, the processor 1002 is further configured to:
receive a first association response from the first node, where the first association response is used to indicate that the first node establishes an association with the second node.

It can be learned that after it is determined that the identity of the first node is trusted, if identity authentication performed by the first node on the apparatus 100 succeeds, the apparatus 100 receives the first association response from the first node. The association response is used to indicate that the first node establishes an association with the second node. Further, the first response message may notify the apparatus 100 that the association succeeds and subsequent communication can be performed.

In still another possible implementation, the processor 1002 is further configured to:
reset a second authentication failure counter, where the second authentication failure counter indicates a quantity of verification failures for the first node.

It can be learned that, after it is determined that the identity of the first node is trusted, if identity authentication succeeds, the quantity of verification failures for the first node needs to be reset, to avoid affecting subsequent determining of the identity of the first node, and ensure stable running of the service provided by the apparatus 100.

In still another possible implementation, the processor 1002 is further configured to:
update a second authentication failure counter if the verification on the first identity authentication information fails, where the second authentication failure counter indicates a quantity of verification failures for the first node.

It can be learned that, if the verification on the identity authentication information of the first node fails, the apparatus 100 updates the quantity of identity verification failures for the first node, and the quantity of verification failures may be used to subsequently determine whether an identity of a node is trusted. Therefore, it is difficult for an attacker to bypass, by modifying an identity such as an identifier, association control performed by the apparatus 100 on the attacker, to prevent the apparatus 100 from establishing an association with an unauthorized attacker, and improve data security of the apparatus 100.

In still another possible implementation, the processor 1002 is further configured to:
determine that a value of the second authentication failure counter is greater than or equal to a second threshold; and
add the identifier of the first node to the second blacklist.

It can be learned that if the quantity of verification failures for the first node exceeds the preset second threshold, it indicates that the first node fails to be verified a plurality of times, and the first node may be an attacker who frequently sends authentication requests. Therefore, the identifier of the first node is added to the blacklist. After the identifier of the first node is added to the blacklist, the identity of the first node is not determined as trusted, to prevent the apparatus 100 from establishing an association with an unauthorized attacker, and improve data security of the apparatus 100.

In still another possible implementation, a validity period of the second blacklist is predefined or preconfigured second duration.

It can be learned that the predefined or preconfigured second duration in the second blacklist may be considered as the validity period of the blacklist. For example, the second duration of the blacklist may be 10 days, and an identifier of a first node may be removed from the blacklist 10 days after being added to the blacklist.

In still another possible implementation, the processor 1002 is further configured to:
determine that a value of the second authentication failure counter is less than a second threshold; and
send a second association request to the first node.

It may be understood that, in a process of verifying the identity authentication information, because some parameters are lost or incorrectly transmitted in a transmission process, verification on the identity authentication information may also fail. Therefore, if the quantity of verification failures for the first node does not exceed the preset second threshold, an association request may be re-sent to the first node to request to establish an association with the first node. In this way, system robustness is improved, and stable running of the service provided by the apparatus 100 is ensured. In still another possible implementation, the processor 1002 is further configured to:
determine that a value of the second authentication failure counter is less than a second threshold;
obtain third acknowledgment indication information; and
send a second association request to the first node.

It can be learned that before the second association request is re-sent, acknowledgment indication information needs to be obtained. The third acknowledgment indication information may be indication information obtained based on an acknowledgment operation entered by a user, and the acknowledgment operation may be acknowledgment of output prompt information. For example, the prompt information may be output to remind the user that the verification fails and the association request needs to be re-initiated. After a user acknowledgment operation is received and the third acknowledgment indication information is obtained, the second association request is sent to the first node. In this way, the user verifies an identity of a first node that needs to be re-associated with, so that association with an untrusted node can be avoided, and communication security is ensured.

In still another possible implementation, the processor 1002 is further configured to:
remove the identifier of the first node from the second blacklist if duration in which the identifier of the first node is added to the second blacklist exceeds the second duration, where the second duration is related to at least one of a quantity of times that the identifier of the first node is added to the second blacklist or a type of the first node.

The foregoing implementation describes factors related to the validity period of the second blacklist. The validity period of the second blacklist may be related to the quantity of times that the first node is added to the blacklist. A larger quantity of times that a first node is added to the second blacklist indicates longer duration of the first node in the second blacklist. Further optionally, after the quantity of times that the first node is added to the second blacklist exceeds a threshold, the first node may be permanently added to the second blacklist.

In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the apparatus 100 may further predefine a blacklist validity period corresponding to the first node. Details are not described herein again.

In still another possible implementation, if the identity of the first node is untrusted, the step of sending the first association request to the first node is not performed.

It can be learned that if the identity of the first node is untrusted, the identity authentication request is no longer sent to the first node, to avoid wasting resources of the node.

It should be noted that for specific implementation of each module, refer to corresponding descriptions in the embodiment shown in FIG. 3 or FIG. 5A, FIG. 5B, and FIG. 5C. The communications apparatus 100 may be the second node in the embodiment shown in FIG. 3 or FIG. 5A, FIG. 5B, and FIG. 5C.

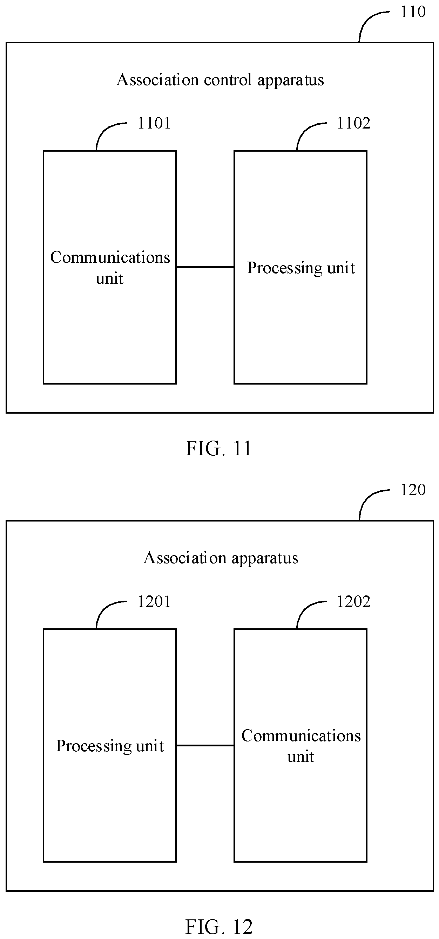

FIG. 11 is a schematic diagram of a structure of an association control apparatus 110 according to an embodiment of this application. The apparatus 110 may be a node, or may be a component such as a chip or an integrated circuit in a node. The apparatus 110 may include a communications unit 1101 and a processing unit 1102. Descriptions of the units are as follows.

The communications unit 1101 is configured to receive a first association request from a second node.

The processing unit 1102 is configured to determine that an identity of the second node is trusted, and send a first authentication request to the second node by using the communications unit 1101, where the first authentication request includes first integrity check data.

The communications unit 1101 is further configured to receive a first authentication response from the second node, and the first authentication response includes second integrity check data.

The processing unit 1102 is further configured to perform message integrity check on the first authentication response based on the second integrity check data.

The processing unit 1102 is further configured to update a first authentication failure counter if the message integrity check on the first authentication response fails. The first authentication failure counter indicates a quantity of verification failures for the second node.

In this embodiment of this application, after determining that the identity of the second node is trusted, the apparatus further needs to perform message integrity check on an authentication response message from the second node before association is performed. If the message integrity check fails, a quantity of verification failures is updated. The quantity of verification failures may be used to subsequently determine whether the identity of the second node is trusted, so that an attacker can be prevented from tampering with data (for example, identity authentication information) in an authentication process. This prevents the apparatus from establishing an association with an unauthorized attacker, and improves data security of the apparatus.

In a possible implementation, the processing unit 1102 is specifically configured to:
determine that an identifier of the second node is in a first whitelist; or
determine that an identifier of the second node is not in a first blacklist; or
obtain first acknowledgment indication information, where the first acknowledgment indication information indicates that the identity of the second node is trusted; and an identifier of the second node is not in a first blacklist; or
obtain first acknowledgment indication information, where the first acknowledgment indication information indicates that the identity of the second node is trusted; and an identifier of the second node is neither in a first blacklist nor in a first whitelist.

The apparatus may control a node that requests association by using a blacklist or a whitelist, so that identity authentication does not need to be performed on an untrusted second node. This prevents the node from establishing an association with an unauthorized attacker, and improves data security of the node.

In another possible implementation, the processing unit 1102 is specifically configured to:
if a type of a shared key between a first node and the second node is a preconfigured type, determine that an identifier of the second node is in a first whitelist;
if a type of a shared key between a first node and the second node is a password generation type, determine that an identifier of the second node is in a first whitelist; or
obtain first acknowledgment indication information if an identifier of the second node is not in a first blacklist, a type of a shared key between a first node and the second node is a password generation type, and the identifier of the second node is not in a first whitelist, where the first acknowledgment indication information indicates that the identity of the second node is trusted.

In still another possible implementation, the processing unit 1102 is further configured to:
determine that a first association quantity is less than or equal to a preset first association threshold, where the first association quantity indicates a quantity of currently associated nodes.

It can be learned that the first association threshold is preset in the apparatus. An association request from the second node can be received only when a quantity of associated nodes is less than or equal to the preset first association threshold. The first threshold may limit a bearing capacity of the service that can be provided by the apparatus. When the first association threshold is exceeded, the apparatus may no longer receive or process the association request, to avoid affecting communication between the apparatus and another node associated with the apparatus, and ensure stable running of the service provided by the apparatus.

In still another possible implementation, the processing unit 1102 is further configured to:
if the integrity check on the first authentication response succeeds, perform verification on second identity authentication information based on the shared key that is shared with the second node; and
update the first authentication failure counter if the verification on the second identity authentication information fails, where the first authentication failure counter indicates the quantity of verification failures for the second node.

It can be seen that, after determining that the identity of the second node is trusted, if the integrity check succeeds, the apparatus performs the verification on the identity of the second node based on the shared key that is shared with the second node. If the verification fails, the quantity of verification failures is updated. The quantity of verification failures may be used to subsequently determine whether the identity of the second node is trusted, so that a node that fails to be verified a plurality of times may no longer be determined as trusted. For the node that is not determined as trusted, an association request of the node may no longer be processed (for example, sending an authentication request), to prevent the node from breaking down due to processing of a large number of requests and ensure normal running of a service.

In still another possible implementation, the communications unit 1101 is further configured to:
send a first association response to the second node if the verification on the second identity authentication information succeeds, where the first association response is used to indicate that the first node establishes an association with the second node.

It can be learned that after it is determined that the identity of the second node is trusted, if identity authentication succeeds, the first association response may be sent to the second node. The association response is used to indicate the apparatus to establish an association with the second node. Further, the first response message may be used to notify the second node that the association succeeds and communication can be performed.

In still another possible implementation, the processing unit 1102 is further configured to:
reset the first authentication failure counter if the verification on the second identity authentication information succeeds.

It can be learned that, after it is determined that the identity of the second node is trusted, if identity authentication succeeds, the quantity of verification failures for the second node needs to be reset, to avoid affecting subsequent determining of the identity of the second node, and ensure stable running of the service provided by the apparatus.

In still another possible implementation, the processing unit 1102 is further configured to:
determine that a value of the first authentication failure counter is greater than or equal to a first threshold, and add the identifier of the second node to the first blacklist.

It can be learned that if the quantity of verification failures for the second node exceeds the preset first threshold, it indicates that the second node fails to be verified a plurality of times, and the second node may be an attacker who frequently sends association requests. Therefore, the identifier of the second node is added to the blacklist. After the identifier of the second node is added to the blacklist, the identity of the second node is not determined as trusted, to prevent the apparatus from establishing an association with an unauthorized attacker, and improve data security of the node.

In still another possible implementation, a validity period of the first blacklist is predefined or preconfigured first duration.

It can be learned that the predefined or preconfigured first duration in the first blacklist may be considered as the validity period of the blacklist. For example, the first duration of the blacklist may be one week, and an identifier of a second node may be removed from the blacklist one week after being added to the blacklist.

In still another possible implementation, the processing unit 1102 is further configured to:
remove the identifier of the second node from the first blacklist if duration in which the identifier of the second node is added to the first blacklist exceeds the first duration, where the first duration is related to at least one of a quantity of times that the identifier of the second node is added to the first blacklist or a type of the second node.

The foregoing implementation describes factors related to the validity period of the first blacklist. The validity period of the first blacklist may be related to the quantity of times that the second node is added to the first blacklist. A larger quantity of times that a second node is added to the first blacklist indicates longer duration of the second node in the first blacklist. Further optionally, after the quantity of times that the second node is added to the first blacklist exceeds a threshold, the second node may be permanently added to the first blacklist.

In addition, the validity period of the first blacklist may be related to a device type of the second node. Specifically, the second node may obtain the device type of the second node in advance, and different blacklist validity periods are determined based on different device types. For example, the device type may include a high-risk device or a low-risk device. If the second node belongs to a microphone, a sounder, or the like, the second node may be considered as the low-risk device. If the second node belongs to a mobile phone, a computer, or the like, the second node may be considered as the high-risk device. A blacklist validity period of the high-risk device is longer than a blacklist validity period of the low-risk device. Furthermore, the first node may further predefine a blacklist validity period corresponding to the second node. Details are not described herein again. In still another possible implementation, if the identity of the second node is untrusted, the step of sending a first authentication request to the second node is not performed.

It can be learned that if the identity of the second node is untrusted, a subsequent identity authentication step is not performed, to avoid wasting resources of the apparatus and affecting normal association with another node.

It should be noted herein that division of the foregoing plurality of units is merely logical division based on functions, and is not used as a limitation on a specific structure of the apparatus 110. In specific implementation, some functional modules may be subdivided into more small functional modules, or some functional modules may be combined into one functional module. However, regardless of whether these functional modules are subdivided or combined, procedures performed by the apparatus 110 in an association control process are roughly the same. For example, the communications unit may alternatively be converted into a receiving unit and a sending unit. The receiving unit is configured to implement a message receiving function of the communications unit, and the sending unit is configured to implement a message sending function of the communications unit. Usually, each unit corresponds to program code (or program instructions) of the unit. When program code corresponding to the units is run on a processor, the units are enabled to perform corresponding procedures to implement corresponding functions.

It should be noted that for implementation of each unit, refer to corresponding descriptions in the embodiment shown in FIG. 6A, FIG. 6B, and FIG. 6C. The apparatus 110 may be the first node in the embodiment shown in FIG. 6A, FIG. 6B, and FIG. 6C.

FIG. 12 is a schematic diagram of a structure of an association control apparatus 120 according to an embodiment of this application. The apparatus 120 may be a node, or may be a component such as a chip or an integrated circuit in a node. The apparatus 120 may include a processing unit 1201 and a communications unit 1202. Descriptions of the units are as follows.

The processing unit 1201 is configured to determine that an identity of a first node is trusted, and send a first association request to the first node by using a communications unit 1202.

The communications unit 1202 is further configured to receive a first authentication request from the first node. The first authentication request includes first identity authentication information and first integrity check data.

The processing unit 1201 is further configured to perform message integrity check on the first authentication request based on the first integrity check data.

The communications unit 1202 is further configured to send a first authentication response to the first node if the message integrity check on the first authentication request succeeds, where the first authentication response includes second integrity check data.

In this embodiment of this application, after determining that the identity of a second node is trusted, the apparatus further needs to perform authentication (for example, verification by using identity authentication information) on the first node before communication is performed. To prevent an attacker from tampering with data in an authentication process, message integrity check needs to be first performed on the first authentication request. Association with the first node is allowed only when the message integrity check succeeds, so that the attacker can be prevented from tampering with message content. This prevents the node from establishing an association with an unauthorized attacker, and improves data security of the node.

In a possible implementation, the processing unit 1201 is specifically configured to:
determine that an identifier of the first node is in a second whitelist; or
determine that an identifier of the first node is not in a second blacklist; or
obtain second acknowledgment indication information, where the second acknowledgment indication information indicates that the identity of the first node is trusted; and an identifier of the first node is not in a second blacklist; or
obtain second acknowledgment indication information, where the second acknowledgment indication information indicates that the identity of the first node is trusted; and an identifier of the first node is neither in a second blacklist nor in a second whitelist.

In the foregoing method, an associated node may be controlled by using a blacklist or a whitelist, and the apparatus may be controlled not to send an association request to the untrusted first node. This prevents the apparatus from establishing an association with an unauthorized attacker, and improves data security of the apparatus.

In another possible implementation, the processing unit 1201 is specifically configured to:
if a type of a shared key between the first node and a second node is a preconfigured type, determining that an identifier of the first node is in a second whitelist;
if a type of a shared key between the first node and a second node is a password generation type, determining that an identifier of the first node is in a second whitelist; or
obtain second acknowledgment indication information if an identifier of the first node is not in a second blacklist, a type of a shared key between the first node and a second node is a password generation type, and the identifier of the first node is not in a second whitelist, where the second acknowledgment indication information indicates that the identity of the second node is trusted.

In still another possible implementation, the processing unit 1201 is further configured to:
determine that a second association quantity is less than or equal to a preset second association threshold, where the second association quantity indicates a quantity of currently associated nodes.

It can be learned that the second association threshold is preset in the apparatus. An association request may be sent to the first node only when a quantity of associated nodes is less than or equal to the preset second association threshold. The second threshold may limit a quantity of nodes that can be associated with the apparatus. When the second association threshold is exceeded, the apparatus cannot be associated with another node, to avoid affecting communication between the apparatus and another node associated with the apparatus, and ensure stable running of the service provided by the apparatus.

In still another possible implementation, the communications unit 1202 is further configured to:
receive a first association response from the first node, where the first association response is used to indicate that the first node establishes an association with the second node.

It can be learned that after it is determined that the identity of the first node is trusted, if identity authentication performed by the first node on the second node succeeds, the apparatus receives the first association response from the first node. The association response is used to indicate the apparatus to establish an association with the second node. Further, the first response message may notify the apparatus that the association succeeds and subsequent communication can be performed.

In still another possible implementation, the processing unit 1201 is further configured to:
reset a second authentication failure counter, where the second authentication failure counter indicates a quantity of verification failures for the first node.

It can be learned that, after it is determined that the identity of the first node is trusted, if identity authentication succeeds, the quantity of verification failures for the first node needs to be reset, to avoid affecting subsequent determining of the identity of the first node, and ensure stable running of the service provided by the apparatus.

In still another possible implementation, the processing unit 1201 is further configured to:
update a second authentication failure counter if the message integrity check on the first authentication response fails, where the second authentication failure counter indicates a quantity of verification failures for the first node.

Usually, if the message integrity check on the first authentication response fails, it indicates that the first authentication response message is no longer complete or has been modified by the attacker. Therefore, the quantity of verification failures for the first node is updated, and the quantity of verification failures may be used to subsequently determine whether the identity of the first node is trusted.

In still another possible implementation, the first authentication request message further includes first identity authentication information. The processing unit 1201 is further configured to: if the message integrity check on the first authentication response succeeds, perform verification on the first identity authentication information based on the shared key that is shared with the first node.

The communications unit 1202 is further configured to send the first authentication response to the first node if the verification on the first identity authentication information succeeds.

It can be seen that, after it is determined that the identity of the first node is trusted, if the integrity check succeeds, the verification on the identity of the first node is performed based on the shared key that is shared with the first node. Therefore, it is difficult for an attacker to bypass, by modifying an identity such as an identifier, association control performed by the apparatus on the attacker, to prevent the node from establishing an association with an unauthorized attacker, and improve data security of the node.

In still another possible implementation, the processing unit 1201 is further configured to:
update a second authentication failure counter if the verification on the first identity authentication information fails, where the second authentication failure counter indicates a quantity of verification failures for the first node.

It can be learned that, if the verification on the identity authentication information of the first node fails, the apparatus updates the quantity of identity verification failures for the first node, and the quantity of verification failures may be used to subsequently determine whether an identity of a node is trusted, so that a node that fails to be verified a plurality of times may no longer be determined as trusted. For the node that is not determined as trusted, an association request may no longer be sent to the node, to ensure normal running of a service provided by the node. In still another possible implementation, the processing unit 1201 is further configured to:
determine that a value of the second authentication failure counter is greater than or equal to a second threshold; and
add the identifier of the first node to the second blacklist.

It can be learned that if the quantity of verification failures for the first node exceeds the preset second threshold, it indicates that the first node fails to be verified a plurality of times, and the first node may be an attacker who frequently sends authentication requests. Therefore, the identifier of the first node is added to the blacklist. After the identifier of the first node is added to the blacklist, the identity of the first node is not determined as trusted, to prevent the apparatus from establishing an association with an unauthorized attacker, and improve data security of the node.

In still another possible implementation, a validity period of the second blacklist is predefined or preconfigured second duration.

It can be learned that the predefined or preconfigured second duration in the second blacklist may be considered as the validity period of the blacklist. For example, the second duration of the blacklist may be 10 days, and an identifier of a first node may be removed from the blacklist 10 days after being added to the blacklist.

In still another possible implementation, the processing unit 1201 is further configured to determine that a value of the second authentication failure counter is less than a second threshold.

The communications unit is further configured to send a second association request to the first node.

It can be learned that, if the verification on the identity authentication information of the first node fails, the apparatus updates the quantity of identity verification failures for the first node, and the quantity of verification failures may be used to subsequently determine whether an identity of a node is trusted. Therefore, it is difficult for an attacker to bypass, by modifying an identity such as an identifier, association control performed by the first node on the attacker, to prevent the apparatus from establishing an association with an unauthorized attacker, and improve data security of the node.

In still another possible implementation, the processing unit 1201 is further configured to:
determine that a value of the second authentication failure counter is less than a second threshold;
obtain third acknowledgment indication information; and
send a second association request to the first node.

It can be learned that before the second association request is re-sent, acknowledgment indication information needs to be obtained. The third acknowledgment indication information may be indication information obtained based on an acknowledgment operation entered by a user, and the acknowledgment operation may be acknowledgment of output prompt information. For example, the prompt information may be output to remind the user that the verification fails and the association request needs to be re-initiated. After a user acknowledgment operation is received and the third acknowledgment indication information is obtained, the second association request is sent to the first node. In this way, the user verifies an identity of a first node that needs to be re-associated with, so that association with an untrusted node can be avoided, and communication security is ensured.

In still another possible implementation, the processing unit 1201 is further configured to:
remove the identifier of the first node from the second blacklist if duration in which the identifier of the first node is added to the second blacklist exceeds the second duration, where the second duration is related to a quantity of times that the identifier of the first node is added to the second blacklist or a type of the first node.

The foregoing implementation describes factors related to the validity period of the second blacklist. The validity period of the second blacklist may be related to the quantity of times that the first node is added to the blacklist. A larger quantity of times that a first node is added to the second blacklist indicates longer duration of the first node in the second blacklist. Further optionally, after the quantity of times that the first node is added to the second blacklist exceeds a threshold, the first node may be permanently added to the second blacklist.

In addition, the validity period of the second blacklist may be related to a device type of the first node. Specifically, the first node may obtain the device type of the first node in advance, and different validity periods of the second blacklist are determined based on different device types. For example, the device type may include a high-risk device or a low-risk device. If the first node belongs to a smart cockpit domain controller CDC, a virtual reality device AR, or the like, the first node may be considered as the low-risk device. If the first node belongs to a server, a computer, or the like, the first node may be considered as the high-risk device. A blacklist validity period of the high-risk device is longer than a blacklist validity period of the low-risk device. Furthermore, the second node may further predefine a blacklist validity period corresponding to the first node. Details are not described herein again. In still another possible implementation, if the identity of the first node is untrusted, the step of sending the first association request to the first node is not performed.

It can be learned that if the identity of the first node is untrusted, the identity authentication request is no longer sent to the first node, to avoid wasting resources of the node.

It should be noted herein that division of the foregoing plurality of units is merely logical division based on functions, and is not used as a limitation on a specific structure of the apparatus 120. In specific implementation, some functional modules may be subdivided into more small functional modules, or some functional modules may be combined into one functional module. However, regardless of whether these functional modules are subdivided or combined, procedures performed by the apparatus 120 in an association control process are roughly the same. For example, the communications unit may alternatively be converted into a receiving unit and a sending unit. The receiving unit is configured to implement a message receiving function of the communications unit, and the sending unit is configured to implement a message sending function of the communications unit. Usually, each unit corresponds to program code (or program instructions) of the unit. When program code corresponding to the units is run on a processor, the units are enabled to perform corresponding procedures to implement corresponding functions.

It should be noted that for implementation of each unit, refer to corresponding descriptions in the embodiment shown in FIG. 6A, FIG. 6B, and FIG. 6C. The apparatus 120 may be the second node in the embodiment shown in FIG. 6A, FIG. 6B, and FIG. 6C.

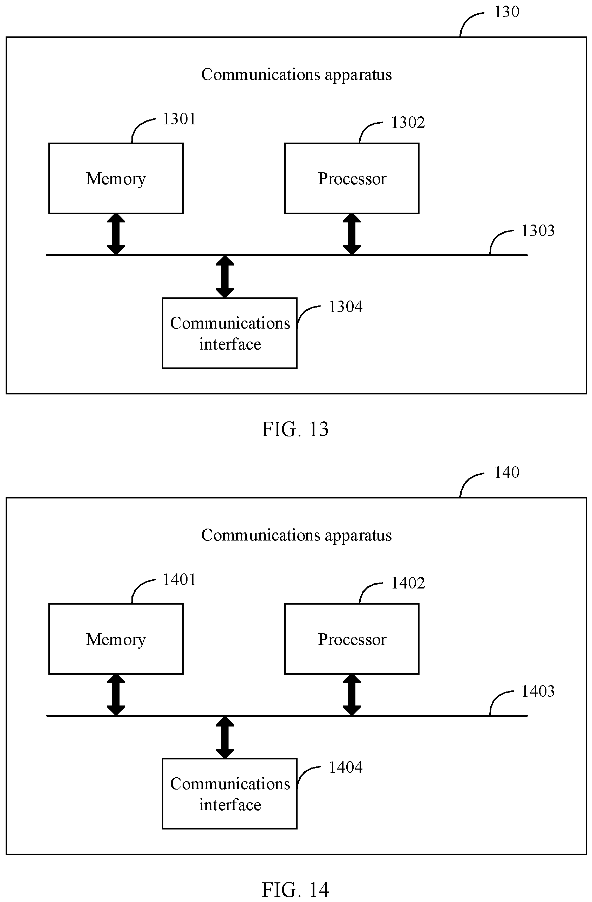

FIG. 13 is a schematic diagram of a structure of a communications apparatus 130 according to an embodiment of this application. The apparatus 130 may be a node, or may be a component such as a chip or an integrated circuit in a node. The communications apparatus 130 may include at least one memory 1301 and at least one processor 1302. Optionally, the apparatus may further include a bus 1303. Optionally, the apparatus may further include a communications interface 1304. The memory 1301, the processor 1302, and the communications interface 1304 are connected through the bus 1303.

The memory 1301 is configured to provide storage space, and the storage space may store data such as an operating system and a computer program. The memory 1301 may be one or a combination of a RAM, a ROM, an EPROM, a CD-ROM, and the like.

The processor 1302 is a module that performs an arithmetic operation and/or a logic operation, and may be specifically one or a combination of processing modules such as a CPU, a GPU, an MPU, an ASIC, an FPGA, and a CPLD.

The communications interface 1304 is configured to receive data sent from the outside and/or send data to the outside, and may be an interface of a wired link such as an Ethernet cable, or may be a wireless link (Wi-Fi, Bluetooth, or the like) interface. Optionally, the communications interface 1304 may further include a transmitter (for example, a radio frequency transmitter or an antenna), a receiver, or the like coupled to the interface.

The processor 1302 in the communications apparatus 130 is configured to read the computer program stored in the memory 1301, to perform the foregoing association control method, for example, the association control method described in FIG. 6A, FIG. 6B, and FIG. 6C. For specific implementation, refer to corresponding descriptions in the embodiment shown in FIG. 6A, FIG. 6B, and FIG. 6C. The communications apparatus 130 may be the first node in the embodiment shown in FIG. 6A, FIG. 6B, and FIG. 6C.

FIG. 14 is a schematic diagram of a structure of a communications apparatus 140 according to an embodiment of this application. The communications apparatus 140 may include at least one memory 1401 and at least one processor 1402. Optionally, the apparatus may further include a bus 1403. Optionally, the apparatus may further include a communications interface 1404. The memory 1401, the processor 1402, and the communications interface 1404 are connected through the bus 1403.

The memory 1401 is configured to provide storage space, and the storage space may store data such as an operating system and a computer program. The memory 1401 may be one or a combination of a RAM, a ROM, an EPROM, a CD-ROM, and the like.

The processor 1402 is a module that performs an arithmetic operation and/or a logic operation, and may be specifically one or a combination of processing modules such as a CPU, a GPU, an MPU, an ASIC, an FPGA, and a CPLD.

The communications interface 1404 is configured to receive data sent from the outside and/or send data to the outside, and may be an interface of a wired link such as an Ethernet cable, or may be a wireless link (Wi-Fi, Bluetooth, or the like) interface. Optionally, the communications interface 1304 may further include a transmitter (for example, a radio frequency transmitter or an antenna), a receiver, or the like coupled to the interface.

The processor 1402 in the communications apparatus 140 is configured to read the computer program stored in the memory 1401, to perform the foregoing association control method, for example, the association control method described in FIG. 6A, FIG. 6B, and FIG. 6C. For specific implementation, refer to corresponding descriptions in the embodiment shown in FIG. 6A, FIG. 6B, and FIG. 6C. The communications apparatus 140 may be the second node in the embodiment shown in FIG. 6A, FIG. 6B, and FIG. 6C.

An embodiment of this application further provides a computer-readable storage medium. The computer-readable storage medium stores a computer program. When the computer program is run on one or more processors, the method in any embodiment shown in FIG. 3, FIG. 5A, FIG. 5B, and FIG. 5C, or FIG. 6A, FIG. 6B, and FIG. 6C is performed.

An embodiment of this application further provides a chip system. The chip system includes at least one processor, a memory, and an interface circuit. The interface circuit is configured to provide an information input/output for the at least one processor, the at least one memory stores a computer program, and when the computer program is run on one or more processors, the method in any embodiment shown in FIG. 3, FIG. 5A, FIG. 5B, and FIG. 5C, or FIG. 6A, FIG. 6B, and FIG. 6C is performed.

An embodiment of this application further provides a smart cockpit product. The smart cockpit product includes a first node (for example, a vehicle cockpit domain controller CDC). The first node is the first node in any embodiment shown in FIG. 3, FIG. 5A, FIG. 5B, and FIG. 5C, or FIG. 6A, FIG. 6B, and FIG. 6C. Further, the smart cockpit product includes a second node (for example, at least one of modules such as a camera, a screen, a microphone, a speaker, a radar, an electronic key, and a passive entry passive start system controller). The second node is the second node in any embodiment shown in FIG. 3, FIG. 5A, FIG. 5B, and FIG. 5C, or FIG. 6A, FIG. 6B, and FIG. 6C.

An embodiment of this application further provides a vehicle. The vehicle includes a first node (for example, a vehicle cockpit domain controller CDC). Further, the vehicle includes a second node (for example, at least one of modules such as a camera, a screen, a microphone, a speaker, a radar, an electronic key, and a passive entry passive start system controller). The first node is the first node in any embodiment shown in FIG. 3, FIG. 5A, FIG. 5B, and FIG. 5C, or FIG. 6A, FIG. 6B, and FIG. 6C, and the second node is the second node in any embodiment shown in FIG. 3, FIG. 5A, FIG. 5B, and FIG. 5C, or FIG. 6A, FIG. 6B, and FIG. 6C.

An embodiment of this application further provides a computer program product. When the computer program product is run on one or more processors, the association control method in any embodiment shown in FIG. 3, FIG. 5A, FIG. 5B, and FIG. 5C, or FIG. 6A, FIG. 6B, and FIG. 6C may be performed. Alternatively, the vehicle may be replaced with an intelligent terminal such as a drone or a robot, or a transportation vehicle.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially implemented. The computer may be a general-purpose computer, a dedicated computer, a computer network, or other programmable apparatuses. The computer instructions may be stored in a computer-readable storage medium, or may be transmitted by using a computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Sequence adjustment, combination, or deletion may be performed on the steps in the method embodiments of this application based on an actual requirement.

Modules in the apparatus embodiments of this application may be combined, divided, or deleted based on an actual requirement.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application.

## Claims

1. An association control method, comprising:
receiving a first association request from a second node;
determining that an identity of the second node is trusted, and sending a first authentication request to the second node, wherein the first authentication request comprises first identity authentication information, and the first identity authentication information is generated based on a shared key between a first node and the second node;
receiving a first authentication response from the second node, wherein the first authentication response comprises second identity authentication information;
performing verification on the second identity authentication information based on the shared key; and
updating a first authentication failure counter if the verification on the second identity authentication information fails, wherein the first authentication failure counter indicates a quantity of verification failures for the second node.

2. The method according to claim 1, wherein the determining that an identity of the second node is trusted comprises:
determining that an identifier of the second node is in a first whitelist; or
determining that an identifier of the second node is not in a first blacklist; or
obtaining first acknowledgment indication information, wherein the first acknowledgment indication information indicates that the identity of the second node is trusted; and an identifier of the second node is not in a first blacklist; or
obtaining first acknowledgment indication information, wherein the first acknowledgment indication information indicates that the identity of the second node is trusted; and an identifier of the second node is neither in a first blacklist nor in a first whitelist.

3. The method according to claim 1 or 2, wherein the first authentication response further comprises second integrity check data, and the second integrity check data is used to perform message integrity check on the first authentication response; and the method further comprises:
determining that the message integrity check on the first authentication response succeeds.

4. The method according to any one of claims 1 to 3, wherein the method further comprises:
determining that a first association quantity is less than or equal to a preset first association threshold, wherein the first association quantity indicates a quantity of currently associated nodes.

5. The method according to any one of claims 1 to 4, wherein the method further comprises:
sending a first association response to the second node if the verification on the second identity authentication information succeeds, wherein the first association response is used to indicate that the first node establishes an association with the second node.

6. The method according to any one of claims 1 to 5, wherein the method further comprises:
resetting the first authentication failure counter if the verification on the second identity authentication information succeeds.

7. The method according to any one of claims 1 to 4, wherein after the updating a first authentication failure counter if the verification on the second identity authentication information based on the shared key fails, the method further comprises:
determining that a value of the first authentication failure counter is greater than or equal to a first threshold, and adding the identifier of the second node to the first blacklist.

8. The method according to claim 7, wherein a validity period of the first blacklist is predefined or preconfigured first duration.

9. An association method, comprising:
determining that an identity of a first node is trusted, and sending a first association request to the first node;
receiving a first authentication request from the first node, wherein the first authentication request comprises first identity authentication information;
performing verification on the first identity authentication information based on a shared key between a second node and the first node; and
sending a first authentication response to the first node if the verification on the first identity authentication information succeeds, wherein the first authentication response comprises second identity authentication information, and the second identity authentication information is generated based on the shared key.

10. The method according to claim 9, wherein the determining that an identity of a first node is trusted comprises:
determining that an identifier of the first node is in a second whitelist; or
determining that an identifier of the first node is not in a second blacklist; or
obtaining second acknowledgment indication information, wherein the second acknowledgment indication information indicates that the identity of the first node is trusted; and an identifier of the first node is not in a second blacklist; or
obtaining second acknowledgment indication information, wherein the second acknowledgment indication information indicates that the identity of the first node is trusted; and an identifier of the first node is neither in a second blacklist nor in a second whitelist.

11. The method according to claim 9 or 10, wherein the first authentication request further comprises first integrity check data, and the first integrity check data is used to perform message integrity check on the first authentication request; and the method further comprises:
determining that the message integrity check on the first authentication request succeeds.

12. The method according to any one of claims 9 to 11, wherein before the determining that an identity of a first node is trusted, and sending a first association request to the first node, the method further comprises:
determining that a second association quantity is less than or equal to a preset second association threshold, wherein the second association quantity indicates a quantity of currently associated nodes.

13. The method according to any one of claims 9 to 12, wherein the method further comprises:
receiving a first association response from the first node, wherein the first association response is used to indicate that the first node establishes an association with the second node.

14. The method according to any one of claims 9 to 13, wherein the method further comprises:
resetting a second authentication failure counter, wherein the second authentication failure counter indicates a quantity of verification failures for the first node.

15. The method according to any one of claims 9 to 11, wherein the method further comprises:
updating a second authentication failure counter if the verification on the first identity authentication information fails, wherein the second authentication failure counter indicates a quantity of verification failures for the first node.

16. The method according to claim 15, wherein after the updating a second authentication failure counter if the verification on the first identity authentication information fails, the method further comprises:
determining that a value of the second authentication failure counter is greater than or equal to a second threshold; and
adding the identifier of the first node to the second blacklist.

17. The method according to claim 16, wherein a validity period of the second blacklist is predefined or preconfigured second duration.

18. The method according to claim 15, wherein after the updating a second authentication failure counter if the verification on the first identity authentication information fails, the method further comprises:
determining that a value of the second authentication failure counter is less than a second threshold; and
sending a second association request to the first node.

19. An association control apparatus, comprising:
a communications unit, configured to receive a first association request from a second node; and
a processing unit, configured to determine that an identity of the second node is trusted, and send a first authentication request to the second node by using the communications unit, wherein the first authentication request comprises first identity authentication information, and the first identity authentication information is generated based on a shared key between a first node and the second node; wherein
the communications unit is further configured to receive a first authentication response from the second node, wherein the first authentication response comprises second identity authentication information;
the processing unit is further configured to perform verification on the second identity authentication information based on the shared key; and
the processing unit is further configured to update a first authentication failure counter if the verification on the second identity authentication information fails, wherein the first authentication failure counter indicates a quantity of verification failures for the second node.

20. The apparatus according to claim 19, wherein the processing unit is specifically configured to:
determine that an identifier of the second node is in a first whitelist; or
determine that an identifier of the second node is not in a first blacklist; or
obtain first acknowledgment indication information, wherein the first acknowledgment indication information indicates that the identity of the second node is trusted; and an identifier of the second node is not in a first blacklist; or
obtain first acknowledgment indication information, wherein the first acknowledgment indication information indicates that the identity of the second node is trusted; and an identifier of the second node is neither in a first blacklist nor in a first whitelist.

21. The apparatus according to claim 19 or 20, wherein the first authentication response further comprises second integrity check data, and the second integrity check data is used to perform message integrity check on the first authentication response; and
the processing unit is specifically configured to:
determine that the message integrity check on the first authentication response succeeds.

22. The apparatus according to any one of claims 19 to 21, wherein the processing unit is further configured to:
determine that a first association quantity is less than or equal to a preset first association threshold, wherein the first association quantity indicates a quantity of currently associated nodes.

23. The apparatus according to any one of claims 19 to 22, wherein the communications unit is further configured to:
send a first association response to the second node if the verification on the second identity authentication information succeeds, wherein the first association response is used to indicate that the first node establishes an association with the second node.

24. The apparatus according to any one of claims 19 to 23, wherein the processing unit is further configured to:
reset the first authentication failure counter if the verification on the second identity authentication information succeeds.

25. The apparatus according to any one of claims 19 to 22, wherein the processing unit is further configured to:
determine that a value of the first authentication failure counter is greater than or equal to a first threshold, and add the identifier of the second node to the first blacklist.

26. The method according to claim 25, wherein a validity period of the first blacklist is predefined or preconfigured first duration.

27. An association control apparatus, comprising:
a processing unit, configured to determine that an identity of a first node is trusted, and send a first association request to the first node by using a communications unit; and
the communications unit, further configured to receive a first authentication request from the first node, wherein the first authentication request comprises first identity authentication information; wherein
the processing unit is further configured to perform verification on the first identity authentication information based on a shared key between a second node and the first node; and
the communications unit is further configured to send a first authentication response to the first node if the verification on the first identity authentication information succeeds, wherein the first authentication response comprises second identity authentication information, and the second identity authentication information is generated based on the shared key.

28. The apparatus according to claim 27, wherein the processing unit is specifically configured to:
determine that an identifier of the first node is in a second whitelist; or
determine that an identifier of the first node is not in a second blacklist; or
obtain second acknowledgment indication information, wherein the second acknowledgment indication information indicates that the identity of the first node is trusted; and an identifier of the first node is not in a second blacklist; or
obtain second acknowledgment indication information, wherein the second acknowledgment indication information indicates that the identity of the first node is trusted; and an identifier of the first node is neither in a second blacklist nor in a second whitelist.

29. The apparatus according to claim 27 or 28, wherein the first authentication request further comprises first integrity check data, and the first integrity check data is used to perform message integrity check on the first authentication request; and
the processing unit is further configured to:
determine that the message integrity check on the first authentication request succeeds.

30. The apparatus according to any one of claims 27 to 29, wherein the processing unit is further configured to:
determine that a second association quantity is less than or equal to a preset second association threshold, wherein the second association quantity indicates a quantity of currently associated nodes.

31. The apparatus according to any one of claims 27 to 30, wherein the communications unit is further configured to:
receive a first association response from the first node, wherein the first association response is used to indicate that the first node establishes an association with the second node.

32. The apparatus according to any one of claims 27 to 31, wherein the processing unit is further configured to:
reset a second authentication failure counter, wherein the second authentication failure counter indicates a quantity of verification failures for the first node.

33. The apparatus according to any one of claims 27 to 29, wherein the processing unit is further configured to:
update a second authentication failure counter if the verification on the first identity authentication information fails, wherein the second authentication failure counter indicates a quantity of verification failures for the first node.

34. The apparatus according to claim 33, wherein the processing unit is further configured to:
determine that a value of the second authentication failure counter is greater than or equal to a second threshold; and
add the identifier of the first node to the second blacklist.

35. The apparatus according to claim 34, wherein a validity period of the second blacklist is predefined or preconfigured second duration.

36. The apparatus according to claim 33, wherein the processing unit is further configured to determine that a value of the second authentication failure counter is less than a second threshold; and
the communications unit is further configured to send a second association request to the first node.

37. An association control method, comprising:
receiving a first association request from a second node;
determining that an identity of the second node is trusted, and sending a first authentication request to the second node, wherein the first authentication request comprises first integrity check data;
receiving a first authentication response from the second node, wherein the first authentication response comprises second integrity check data;
performing message integrity check on the first authentication response based on the second integrity check data; and
updating a first authentication failure counter if the message integrity check on the first authentication response fails, wherein the first authentication failure counter indicates a quantity of verification failures for the second node.

38. An association method, comprising:
determining that an identity of a first node is trusted, and sending a first association request to the first node;
receiving a first authentication request from the first node, wherein the first authentication request comprises first integrity check data;
performing message integrity check on the first authentication request based on the first integrity check data; and
sending a first authentication response to the first node if the message integrity check on the first authentication request succeeds.

39. An association control apparatus, comprising:
a communications unit, configured to receive a first association request from a second node; and
a processing unit, configured to determine that an identity of the second node is trusted, and send a first authentication request to the second node by using the communications unit, wherein the first authentication request comprises first integrity check data; wherein
the communications unit is further configured to receive a first authentication response from the second node, wherein the first authentication response comprises second integrity check data;
the processing unit is further configured to perform message integrity check on the first authentication response based on the second integrity check data; and
the processing unit is further configured to update a first authentication failure counter if the message integrity check on the first authentication response fails, wherein the first authentication failure counter indicates a quantity of verification failures for the second node.

40. An association apparatus, comprising:
a processing unit, configured to determine that an identity of a first node is trusted, and send a first association request to the first node by using a communications unit; and
the communications unit, further configured to receive a first authentication request from the first node, wherein the first authentication request comprises first integrity check data; wherein
the processing unit is further configured to perform message integrity check on the first authentication request based on the first integrity check data; and
the communications unit is further configured to send a first authentication response to the first node if the message integrity check on the first authentication request succeeds.

41. A communications apparatus, wherein the apparatus comprises at least one processor and a communications interface, and the at least one processor is configured to invoke a computer program stored in at least one memory, so that the apparatus implements the method according to any one of claims 1 to 8 or the method according to any one of claims 9 to 18.

42. A communications apparatus, wherein the apparatus comprises at least one processor and a communications interface, and the at least one processor is configured to invoke a computer program stored in at least one memory, so that the apparatus implements the method according to claim 37 or 38.

43. A communications system, comprising:
a first node, wherein the first node comprises the apparatus according to any one of claims 19 to 26; and
a second node, wherein the second node comprises the apparatus according to any one of claims 27 to 36.

44. A computer-readable storage medium, wherein the computer-readable storage medium stores a computer program, and when the computer program is run on one or more processors, the method according to any one of claims 1 to 8 and 37, or the method according to any one of claims 9 to 18 and 38 is performed.
